(19) **Europäisches Patentamt / European Patent Office / Office européen des brevets**

(11) **EP 4 159 439 A1**

(12) # EUROPEAN PATENT APPLICATION
published in accordance with Art. 153(4) EPC

(43) Date of publication:
**05.04.2023 Bulletin 2023/14**

(21) Application number: **21816818.5**

(22) Date of filing: **28.05.2021**

(51) International Patent Classification (IPC):
**B32B 27/32** (2006.01)    **C08F 10/06** (2006.01)
**C08L 23/10** (2006.01)

(52) Cooperative Patent Classification (CPC):
**B32B 27/32; C08F 10/06; C08L 23/10**

(86) International application number:
**PCT/JP2021/020521**

(87) International publication number:
**WO 2021/246338 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2020   JP 2020096269
02.06.2020   JP 2020096271**

(71) Applicant: **Japan Polypropylene Corporation
Tokyo 100-8251 (JP)**

(72) Inventors:
• **UCHIDA, Tomoki**
  **Yokkaichi-shi, Mie 510-0848 (JP)**
• **NISHIBU, Takahisa**
  **Yokkaichi-shi, Mie 510-0848 (JP)**
• **ITO, Masaaki**
  **Yokkaichi-shi, Mie 510-0848 (JP)**
• **TAKIZAWA, Miori**
  **Yokkaichi-shi, Mie 510-0848 (JP)**

(74) Representative: **Hoffmann Eitle
Patent- und Rechtsanwälte PartmbB
Arabellastraße 30
81925 München (DE)**

(54) # POLYPROPYLENE-BASED RESIN COMPOSITION, LAMINATE, AND METHODS FOR PRODUCING THESE

(57)    Provided is A polypropylene-based resin composition comprising 2 mass % to 30 mass % of a polypropylene resin (X1) having specific properties, 5 mass % to 98 mass % of a polypropylene resin (X2) having specific properties, and 0 mass % to 80 mass % of a polypropylene-based resin (Y) having specific properties, wherein the total amount of the polypropylene resin (X1), the polypropylene resin (X2) and the polypropylene-based resin (Y) is 100 mass %.

**EP 4 159 439 A1**

**Description**

Technical Field

The present invention relates to a polypropylene-based resin composition, a laminate, and methods for producing them. More specifically, the present invention relates to a polypropylene-based resin composition such that the high-speed extrusion lamination processability is excellent since it exhibits small neck-in in high-temperature extrusion molding at 290°C or more, for example, and it has high ductility, and the visibility of contents or the like is excellent since it has excellent transparency. Also, the present invention relates to a laminate using the polypropylene-based resin composition.

Background Art

A laminate provided with water vapor barrier properties, waterproof properties, rust resistance and scratch resistance, which is obtained by laminating a polyolefin-based resin on a substrate (e.g., various kinds of resin films, sheets, metal foils, plates and paper sheets) by lamination processing, has been used as a food packaging material, an industrial material or a building material, regardless of the presence of absence of visibility of contents, such as transparency, deposition or printing. As the lamination processing, examples include, but are not limited to, dry lamination (attaching a polyolefin-based resin to a substrate via an anchor coat) and extrusion lamination (laminating a polyolefin-based resin on a substrate by melt extrusion). Due to easy processability and increasing demand for VOC-free resin in recent years, there is an increasing demand for the development of a polyolefin-based resin applicable to extrusion lamination.

A polypropylene-based resin has better transparency, rigidity, surface gloss and heat resistance than a polyethylene-based resin. On the other hand, a polypropylene-based resin has low melt tension since its molecular structure is linear and its weight average molecular weight cannot be as large as that of a polyethylene-based resin. In the case of extrusion lamination in which molding is carried out at relatively high temperature, a resin with high melt tension exhibits small neck-in (a difference between the width of an extrusion die and the width of an extruded film) and tends not to cause draw resonance (uneven thickness created in the drawing direction or an instability phenomenon due to edge expansion and contraction created in the drawing direction) even at a high molding rate. However, a polypropylene-based resin with low melt tension is difficult to use in extrusion lamination molding.

Blending a polypropylene with a low-density polyethylene or an amorphous ethylene/$\alpha$-olefin copolymer solves the neck-in problem. However, inferior transparency and heat resistance are obtained, and a problem such that the upper limit of the molding rate at which the draw resonance is not caused (hereinafter, it will be referred to as "high-speed moldability") is not sufficiently improved (see Patent Documents 1 and 2).

To improve high-speed moldability, the following methods are disclosed: a method of adding oil, polyethylene wax or the like to a thermoplastic resin composition obtained by adding a low-density polyethylene to a polypropylene (see Patent Documents 3 to 5) and a method of producing an extruded laminate film by use of a thermoplastic resin composition obtained by adding a low-density polyethylene to polypropylene produced by use of a metallocene catalyst (see Patent Document 6). High-speed moldability is improved by these methods. However, due to the use of the polyethylene, problems such as the sacrifice of transparency and heat resistance, which are advantages of polypropylenes, is not solved.

Techniques to impart melt tension were developed, focusing on the molecular structure itself of a polypropylene resin. For example, Patent Document 7 discloses a technique of increasing melt tension by introducing a long-chain branch in polypropylene by high energy ionization radiation. This method is not preferable in terms of cost, since a large facility is needed. Also, this method has problems such as yellowing and a decrease in melt tension over time.

Patent Document 8 discloses a method of introducing a long-chain branch in a polypropylene resin by use of an organic peroxide. This method has a problem in that contamination, odor and yellowing are caused by the decomposition product of the organic peroxide. In addition, this method has the following problem: if a modified amount is increased to obtain high melt tension, a large amount of gel is produced and results in very poor appearance.

In recent years, a technique to obtain a polypropylene resin including a long-chain branch structure and having very high melt tension was disclosed, in which the polypropylene resin is obtained by single-stage propylene polymerization in the presence of a catalyst containing specific multiple metallocene catalyst components (see Patent Documents 9 and 10).

However, the polypropylene resin having such high melt tension cannot be said to have sufficient high-speed moldability, since a draw resonance phenomenon is likely to occur.

To solve the problem, a technique to improve neck-in and high-speed moldability was disclosed, in which they are improved by adding 50 to 97 mass % of a polypropylene resin having an MFR of 1 to 50 g/10 min to a polypropylene resin having high melt tension (see Patent Document 11). This method can improve high-speed moldability compared to the case of extrusion lamination of the polypropylene resin having high melt tension. However, there is a still demand for further improvement.

Citation List

Patent Documents

Patent Document 1: Japanese Patent Application Laid-Open (JP-A) No. H8-259752
Patent Document 2: JP-A No. 2006-56914
Patent Document 3: Japanese Examined Patent Application Publication No. H5-80492
Patent Document 4: Japanese translation of PCT International Application No. 2003-528948
Patent Document 5: International Publication No. WO2009/069595
Patent Document 6: JP-A No. 2001-323119
Patent Document 7: JP-A No. S62-121704
Patent Document 8: JP-A No. H6-1577666
Patent Document 9: JP-A No. 2009-57542
Patent Document 10: JP-A No. 2009-275207
Patent Document 11: JP-A No. 2014-55252

Summary of Invention

Technical Problem

In light of the above circumstances, an object of the present invention is to provide a polypropylene-based resin composition which exhibits small neck-in in high-temperature extrusion molding at 290°C or more, for example, which has excellent high-speed extrusion lamination processability, and which has excellent transparency. Another object of the present invention is to provide a laminate using the polypropylene-based resin composition.

Solution to problem

As a result of elaborate discussion on the circumstances, the inventors of the present invention found the following facts and achieved the present invention: since a polypropylene-based resin composition containing a specific polypropylene-based resin keeps high melt tension, it exhibits small neck-in in high-temperature extrusion molding, has excellent high-speed extrusion lamination processability, and has excellent transparency.
The first embodiment of the present invention to solve the above-mentioned problems, relates to the following <1> to <24>.

<1> A polypropylene-based resin composition comprising a polypropylene resin (X1) having the following properties (X1-1) to (X1-6) and a polypropylene resin (X2) having the following properties (X2-1) to (X2-6):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(\mathrm{MT170^{\circ}C}) \geq -1.1 \times \log(\mathrm{MFR}) + 2.0 \quad (\mathrm{Formula\ 1}),$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X2-3) in an integral molecular weight distribution curve obtained by GPC, a percentage ($W_{1M}$) of a component having a molecular weight of 1,000,000 or more, is 0.5 mass % or more,

(X2-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more, wherein the MFR of X1 < the MFR of X2, and the $W_{1M}$ of X1 $\geq$ the $W_{1M}$ of X2.

<2> The polypropylene-based resin composition described in the above <1>, further comprising a polypropylene-based resin (Y) having the following properties (Y-1) and (Y-2):

(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(MT170°C) < -1.1 \times \log(MFR) + 2.0 \qquad (Formula\ A).$$

<3> The polypropylene-based resin composition described in the above <2>, wherein the polypropylene-based resin composition comprises 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

<4> The polypropylene-based resin composition described in any one of the above <1> to <3>, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,
(X1-3) in the integral molecular weight distribution curve obtained by GPC, the percentage ($W_{1M}$) of the component having a molecular weight of 1,000,000 or more, is 2.5 mass % or more,
(X2-1) the MFR (230°C, load 2.16 kgf) is more than 30 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 2.5 mass %.

<5> The polypropylene-based resin composition described in the above <1> or <2>, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,
(X1-3) in the integral molecular weight distribution curve obtained by GPC, the percentage ($W_{1M}$) of the component having a molecular weight of 1,000,000 or more, is 3.5 mass % or more,
(X2-1) the MFR (230°C, load 2.16 kgf) is more than 10 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 3.5 mass %.

<6> The polypropylene-based resin composition described in the above <1>, <2> or <5>, wherein the polypropylene-based resin composition comprises 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

<7> A method for producing a polypropylene-based resin composition, the method comprising:

a step of obtaining a polypropylene resin (X1) having the following properties (X1-1) to (X1-6),

a step of obtaining a polypropylene resin (X2) having the following properties (X2-1) to (X2-6), and
a step of mixing or melt-kneading the polypropylene resin (X1) and the polypropylene resin (X2):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,
(X2-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
wherein the MFR of X1 < the MFR of X2, and the $W_{1M}$ of X1 ≥ the $W_{1M}$ of X2.

<8> The method for producing the polypropylene-based resin composition described in the above <7>, the method further comprising a step of obtaining a polypropylene-based resin (Y) having the following properties (Y-1) and (Y-2):

(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(MT170°C) < -1.1 \times \log(MFR) + 2.0 \qquad (Formula\ A),$$

wherein the mixing or melt-kneading step is a step of mixing or melt-kneading the polypropylene resin (X1), the polypropylene resin (X2) and the polypropylene-based resin (Y).

<9> The method for producing the polypropylene-based resin composition described in the above <8>,
wherein the mixing or melt-kneading step is a step of mixing or melt-kneading 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.
<10> The method for producing the polypropylene-based resin composition described in any of the above <7> to <9>, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,
(X1-3) in the integral molecular weight distribution curve obtained by GPC, the percentage ($W_{1M}$) of the component having a molecular weight of 1,000,000 or more, is 2.5 mass % or more,
(X2-1) the MFR (230°C, load 2.16 kgf) is more than 30 g/10 min and 80 g/10 min or less, and

(X2-3) in the integral molecular weight distribution curve obtained by GPC, the percentage ($W_{1M}$) of the component having a molecular weight of 1,000,000 or more, is 0.5 mass % or more and less than 2.5 mass %.

<11> The method for producing the polypropylene-based resin composition described in the above <7> or <8>, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,
(X1-3) in the integral molecular weight distribution curve obtained by GPC, the percentage ($W_{1M}$) of the component having a molecular weight of 1,000,000 or more, is 3.5 mass % or more,
(X2-1) the MFR (230°C, load 2.16 kgf) is more than 10 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 3.5 mass %.

<12> The method for producing the polypropylene-based resin composition described in the above <7>, <8> or <11>, wherein the mixing or melt-kneading step is a step of mixing or melt-kneading 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

<13> A laminate comprising a substrate layer and a polypropylene-based resin composition layer, wherein the polypropylene-based resin composition layer comprises a polypropylene resin (X1) having the following properties (X1-1) to (X1-6) and a polypropylene resin (X2) having the following properties (X2-1) to (X2-6):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(\text{MT170}^{\circ}\text{C}) \geq -1.1 \times \log(\text{MFR}) + 2.0 \qquad \text{(Formula 1)},$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,
(X2-4) a melt tension (MT170°C) (unit: g) measured at 170°C satisfies the following requirement (Formula 1):

$$\log(\text{MT170}^{\circ}\text{C}) \geq -1.1 \times \log(\text{MFR}) + 2.0 \qquad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more, wherein the MFR of X1 < the MFR of X2, and the $W_{1M}$ of X1 $\geq$ the $W_{1M}$ of X2.

<14> The laminate according described in the above <13>, wherein the polypropylene-based resin composition layer further comprises a polypropylene-based resin (Y) having the following properties (Y-1) and (Y-2):

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

```
log(MT170°C) < -1.1 × log(MFR) + 2.0      (Formula A).
```

<15> The laminate described in the above <14>,
wherein the polypropylene-based resin composition layer comprises 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.
<16> The laminate described in any one of the above <13> to <15>,
wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,
(X1-3) in the integral molecular weight distribution curve obtained by GPC, the percentage ($W_{1M}$) of the component having a molecular weight of 1,000,000 or more, is 2.5 mass % or more,
(X2-1) the MFR (230°C, load 2.16 kgf) is more than 30 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 2.5 mass %.

<17> The laminate described in the above <13> or <14>,
wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,
(X1-3) in the integral molecular weight distribution curve obtained by GPC, the percentage ($W_{1M}$) of the component having a molecular weight of 1,000,000 or more, is 3.5 mass % or more,
(X2-1) the MFR (230°C, load 2.16 kgf) is more than 10 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 3.5 mass %.

<18> The laminate described in the above <13>, <14> or <17>,
wherein the polypropylene-based resin composition layer comprises 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.
<19> A method for producing a laminate comprising a substrate layer and a polypropylene-based resin composition layer,
the method comprising a step of forming the polypropylene-based resin composition layer by extrusion lamination of a mixture or melt-kneaded product of a polypropylene resin (X1) having the following properties (X1-1) to (X1-6) and a polypropylene resin (X2) having the following properties (X2-1) to (X2-6) on at least one surface of the substrate layer:

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

```
log(MT170°C) ≥ -1.1 × log(MFR) + 2.0       (Formula 1),
```

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,

(X2-1) an MFR (230°C, load 2.16 kgf) is more than 0.5 g/10 min and 80 g/10 min or less,

(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X2-3) in an integral molecular weight distribution curve obtained by GPC, a percentage ($W_{1M}$) of a component having a molecular weight of 1,000,000 or more, is 0.5 mass % or more,

(X2-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \qquad (\mathrm{Formula\ 1}),$$

(X2-5) a branching index g' ($Mz_{abs}$) obtained by GPC is 0.70 or more and 0.95 or less, and

(X2-6) a triad fraction (mm) of propylene unit triad sequences obtained by $^{13}$C-NMR, is 95% or more,

wherein the MFR of X1 < the MFR of X2, and the $W_{1M}$ of X1 $\geq$ the $W_{1M}$ of X2.

<20> The method for producing the laminate described in the above <19>,

wherein the step of forming the polypropylene-based resin composition layer is a step of forming the polypropylene-based resin composition layer by extrusion lamination of a mixture or melt-kneaded product of the polypropylene resin (X1), the polypropylene resin (X2) and a polypropylene-based resin (Y) having the following properties (Y-1) and (Y-2) on at least one surface of the substrate layer:

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(\mathrm{MT170°C}) < -1.1 \times \log(\mathrm{MFR}) + 2.0 \qquad (\mathrm{Formula\ A}).$$

<21> The method for producing the laminate described in the above <20>,

wherein the step of forming the polypropylene-based resin composition layer is a step of forming the polypropylene-based resin composition layer by extrusion lamination of the mixture or melt-kneaded product of 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

<22> The method for producing the laminate described in any one of the above <19> to <21>,

wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,

(X1-3) in the integral molecular weight distribution curve obtained by GPC, the percentage ($W_{1M}$) of the component having a molecular weight of 1,000,000 or more, is 2.5 mass % or more,

(X2-1) the MFR (230°C, load 2.16 kgf) is more than 30 g/10 min and 80 g/10 min or less, and

(X2-3) in the integral molecular weight distribution curve obtained by GPC, the percentage ($W_{1M}$) of the component having a molecular weight of 1,000,000 or more, is 0.5 mass % or more and less than 2.5 mass %.

<23> The method for producing the laminate described in the above <19> or <20>,

wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,

(X1-3) in the integral molecular weight distribution curve obtained by GPC, the percentage ($W_{1M}$) of the component having a molecular weight of 1,000,000 or more, is 3.5 mass % or more,

(X2-1) the MFR (230°C, load 2.16 kgf) is more than 10 g/10 min and 80 g/10 min or less, and

(X2-3) in the integral molecular weight distribution curve obtained by GPC, the percentage ($W_{1M}$) of the component having a molecular weight of 1,000,000 or more, is 0.5 mass % or more and less than 3.5 mass %.

<24> The method for producing the laminate described in the above <19>, <20> or <23>,

wherein the step of forming the polypropylene-based resin composition layer is a step of forming the polypropylene-based resin composition layer by extrusion lamination of the mixture or melt-kneaded product of 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

The second embodiment of the present invention to solve the above problems, relates to the following <25> to <28>.

<25> A polypropylene-based resin composition comprising 20 mass % to 80 mass % of a polypropylene resin (X) having the following properties (X-1) to (X-6) and 20 mass % to 80 mass % of a polypropylene-based resin (Y) having the following properties (Y-1) and (Y-2), wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,
(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X-3) in an integral molecular weight distribution curve obtained by GPC, a percentage ($W_{1M}$) of a component having a molecular weight of 1,000,000 or more, is 0.5 mass % or more and 4.0 mass % or less,
(X-4) a melt tension (MT170°C) (unit: g) measured at 170°C satisfies the following requirement (Formula 1):

$$\log(\text{MT170°C}) \geq -1.1 \times \log(\text{MFR}) + 2.0 \qquad \text{(Formula 1)},$$

(X-5) a branching index g' ($Mz_{abs}$) obtained by GPC is 0.70 or more and 0.95 or less,
(X-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\text{MT170°C}) < -1.1 \times \log(\text{MFR}) + 2.0 \qquad \text{(Formula A)}.$$

<26> A method for producing a polypropylene-based resin composition, the method comprising:

a step of obtaining a polypropylene resin (X) having the following properties (X-1) to (X-6),
a step of obtaining a polypropylene-based resin (Y) having the following properties (Y-1) and (Y-2), and
a step of mixing or melt-kneading 20 mass % to 80 mass % of the polypropylene resin (X) and 20 mass % to 80 mass % of the polypropylene-based resin (Y), wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,
(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X-3) in an integral molecular weight distribution curve obtained by GPC, a percentage ($W_{1M}$) of a component having a molecular weight of 1,000,000 or more, is 0.5 mass % or more and 4.0 mass % or less,
(X-4) a melt tension (MT170°C) (unit: g) measured at 170°C satisfies the following requirement (Formula 1):

$$\log(\text{MT170°C}) \geq -1.1 \times \log(\text{MFR}) + 2.0 \qquad \text{(Formula 1)},$$

(X-5) a branching index g' ($Mz_{abs}$) obtained by GPC is 0.70 or more and 0.95 or less,
(X-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\text{MT170}^\circ\text{C}) < -1.1 \times \log(\text{MFR}) + 2.0 \qquad (\text{Formula A}).$$

<27> A laminate comprising a substrate layer and a polypropylene-based resin composition layer, wherein the polypropylene-based resin composition layer comprises 20 mass % to 80 mass % of a polypropylene resin (X) having the following properties (X-1) to (X-6) and 20 mass % to 80 mass % of a polypropylene-based resin (Y) having the following properties (Y-1) and (Y-2), and wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,
(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X-3) in an integral molecular weight distribution curve obtained by GPC, a percentage ($W_{1M}$) of a component having a molecular weight of 1,000,000 or more, is 0.5 mass % or more and 4.0 mass % or less,
(X-4) a melt tension (MT170°C) (unit: g) measured at 170°C satisfies the following requirement (Formula 1):

$$\log(\text{MT170}^\circ\text{C}) \geq -1.1 \times \log(\text{MFR}) + 2.0 \qquad (\text{Formula 1}),$$

(X-5) a branching index g' ($Mz_{abs}$) obtained by GPC is 0.70 or more and 0.95 or less,
(X-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\text{MT170}^\circ\text{C}) < -1.1 \times \log(\text{MFR}) + 2.0 \qquad (\text{Formula A}).$$

<28> A method for producing a laminate comprising a substrate layer and a polypropylene-based resin composition layer,
the method comprising a step of forming the polypropylene-based resin composition layer by extrusion lamination of a mixture or melt-kneaded product of 20 mass % to 80 mass % of a polypropylene resin (X) having the following properties (X-1) to (X-6) and 20 mass % to 80 mass % of a polypropylene-based resin (Y) having the following properties (Y-1) and (Y-2) on at least one surface of the substrate layer, wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,
(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X-3) in an integral molecular weight distribution curve obtained by GPC, a percentage ($W_{1M}$) of a component having a molecular weight of 1,000,000 or more, is 0.5 mass % or more and 4.0 mass % or less,
(X-4) a melt tension (MT170°C) (unit: g) measured at 170°C satisfies the following requirement (Formula 1):

$$\log(\text{MT170}^\circ\text{C}) \geq -1.1 \times \log(\text{MFR}) + 2.0 \qquad (\text{Formula 1}),$$

(X-5) a branching index g' ($Mz_{abs}$) obtained by GPC is 0.70 or more and 0.95 or less,
(X-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\text{MT170}^\circ\text{C}) < -1.1 \times \log(\text{MFR}) + 2.0 \qquad (\text{Formula A}).$$

Advantageous Effects of Invention

The polypropylene-based resin composition of the present invention exhibits small neck-in in high-temperature extrusion molding at 290°C or more, for example, and it has excellent high-speed extrusion lamination processability. The laminate obtained by using the polypropylene-based resin composition has excellent transparency.

Description of Embodiments

Hereinafter, the embodiments of the present disclosure are explained in detail. In the present Description, "to" which shows a numerical range is used to describe a range in which the numerical values described before and after "to" indicate the lower limit value and the upper limit value. The descriptions of components described below are examples of the embodiments of the present invention, and the present invention is not at all limited to the contents thereof.

I. First embodiment

I-1. Polypropylene-based resin composition

The polypropylene-based resin composition of the present invention is a polypropylene-based resin composition comprising a polypropylene resin (X1) having the following properties (X1-1) to (X1-6) and a polypropylene resin (X2) having the following properties (X2-1) to (X2-6):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \qquad \text{(Formula 1)},$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,
(X2-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \qquad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
wherein the MFR of X1 < the MFR of X2, and the $W_{1M}$ of X1 $\geq$ the $W_{1M}$ of X2.

The difference between the MFR of X2 and the MFR of X1 may be appropriately adjusted. Since it is easy to achieve the effects of the present invention, the difference may be 9.5 g/10 min or more, may be 12 g/10 min or more, may be 20 g/10 min or more, or may be 29.5 g/10 min or more. On the other hand, it may be 60 g/10 min or less.

The polypropylene-based resin composition of the present invention may further comprise a polypropylene-based resin (Y) having the following properties (Y-1) and (Y-2):

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(\text{MT170°C}) < -1.1 \times \log(\text{MFR}) + 2.0 \quad (\text{Formula A}).$$

Since the polypropylene resins (X1) and (X2) having the above properties are long-chain branched polypropylene resins having high stereoregularity and containing a specific amount of high-molecular-weight component, and since they satisfy the Formula 1, they have sufficient melt tension. Of polypropylene resins having such sufficient melt tension, the polypropylene resin (X1) in which the amount of the high-molecular-weight component is relatively large and the flowability is low, and the polypropylene resin (X2) in which the amount of the high-molecular-weight component is relatively small and the flowability is high, are mixed in specific ranges. Accordingly, the polypropylene-based resin composition of the present invention can impart flowability, while keeping high melt tension. As a result, the polypropylene-based resin composition easily exhibits small neck-in in high-temperature extrusion molding, excellent high-speed extrusion lamination processability, and excellent transparency. The polypropylene resin (X2) in which the amount of the high-molecular-weight component is relatively small and the flowability is high, can be a flowability imparting component.

The flowability imparting component is not needed to be a long-chain branched polypropylene resin that contains a specific amount of high-molecular-weight component. Excellent high-speed moldability can be easily obtained by further combining the polypropylene-based resin (Y) as the flowability imparting component with the polypropylene resins (X1) and (X2), and mixing them together.

The polypropylene-based resin composition of the first embodiment of the present invention exhibits small neck-in in high-temperature extrusion molding at 290°C or more, for example, and it has excellent high-speed extrusion lamination processability at a molding rate that is 200 m/min or more, for example. The laminate obtained by using the polypropylene-based resin composition has excellent transparency.

I-1-1. Polypropylene resin (X1)

The polypropylene resin (X1) has the properties (X1-1) to (X1-6).

I-1-1-1. Property (X1-1)

The property (X1-1) is such that the MFR (230°C, load 2.16 kgf) is more than 0.5 g/10 min and 80 g/10 min or less. It is noted that the MFR of the polypropylene resin (X1) is smaller than the MFR of the polypropylene resin (X2).

A preferred embodiment of the property (X1-1) may be such that the MFR (230°C, load 2.16 kgf) is more than 0.5 g/10 min and 30 g/10 min or less. A more preferred embodiment of the property (X1-1) may be such that the MFR (230°C, load 2.16 kgf) is more than 0.5 g/10 min and 10 g/10 min or less.

The MFR is an index of melt fluidity. This value decreases as the molecular weight of a polymer increases. On the other hand, this value increases as the molecular weight decreases.

The MFR of X1 is more than 0.5 g/10 min, from the point of view that excellent melt fluidity is obtained and load on an extruder is easily suppressed in extrusion molding. The MFR of X1 is preferably 1 g/10 min or more, more preferably 2 g/10 min or more, and still more preferably 3 g/10 min or more. The MFR of X1 may be more than 8 g/10 min.

On the other hand, the MFR of X1 may be 30 g/10 min or less, from the point of view that excellent melt tension and excellent moldability (e.g., extrusion lamination moldability) are obtained. The MFR of X1 is preferably 25 g/10 min or less, more preferably 20 g/10 min or less, still more preferably 10 g/10 min or less, even more preferably 9.5 g/10 min or less, and particularly preferably 9 g/10 min or less.

In the present invention, the melt flow rate (MFR) is a value measured in accordance with "JIS K7210: Plastics - Determination of the melt mass-flow rate (MFR) and the melt volume-flow rate (MVR) of thermoplastics" and in the following test condition: 230°C and a load of 2.16 kgf.

The melt flow rate (MFR) can be easily adjusted by changing the polymerization temperature or pressure, or by a general method such as adding a chain transfer agent (e.g., hydrogen) during polymerization.

I-1-1-2. Property (X1-2)

The property (X1-2) is such that the ratio (Mw/Mn) between the weight average molecular weight (Mw) and the number average molecular weight (Mn), both of which are obtained by GPC, is 2.0 or more and 5.0 or less, and the ratio (Mz/Mw) between the Z average molecular weight (Mw) and the weight average molecular weight (Mw), both of which are obtained by GPC, is 2.0 or more and 5.0 or less.

The Mw/Mn is an index of the extent of molecular weight distribution. It means that as the Mw/Mn increases, the molecular weight distribution widens. When the Mw/Mn is too small, there is a possibility that the amount of the low-molecular-weight component decreases, and the melt fluidity deteriorates. Accordingly, the Mw/Mn is 2.0 or more, and it is preferably 2.1 or more, and more preferably 2.2 or more. On the other hand, when the Mw/Mn is too large, there is a possibility that the amount of the high-molecular-weight component relatively increases, and the melt fluidity deteriorates. Accordingly, the Mw/Mn is 5.0 or less, and it is preferably 4.9 or less. The Mw/Mn may be 4.6 or less, or it may be 4.2 or less.

As with the Mw/Mn, the Mz/Mw is an index of the extent of molecular weight distribution, and it is an index of the extent of the high-molecular-weight side compared to the Mw/Mn. It means that as the Mz/Mw increases, the molecular weight distribution extends to the high-molecular-weight side. When the Mz/Mw is too small, there is a possibility that the amount of the high-molecular-weight component decreases, and the melt tension decreases. Accordingly, the Mz/Mw is 2.0 or more, and it is preferably 2.1 or more, and more preferably 2.2 or more. On the other hand, when the Mz/Mw is too large, there is a possibility that the amount of the high-molecular-weight component relatively increases, and the melt fluidity deteriorates. Accordingly, the Mz/Mw is 5.0 or less, and it is preferably 4.0 or less, and more preferably 3.6 or less. The Mz/Mw may be 3.5 or less.

The average molecular weights and molecular weight distributions (Mz, Mw, Mn, Mw/Mn and Mz/Mw) of the polypropylene resin (X1) measured by GPC, can be easily adjusted by changing the propylene polymerization temperature or pressure condition, or they can be easily adjusted by a most general method such as adding a chain transfer agent (e.g., hydrogen) during propylene polymerization. The average molecular weights and molecular weight distributions can be adjusted by changing the type of a metallocene complex used and by changing the amounts and ratio of the complexes when two or more kinds of complexes are used.

From the viewpoint of balance between melt fluidity and melt tension, the Mw of the polypropylene resin (X1) of the present invention is preferably 200000 or more and 500000 or less. From the viewpoint of melt tension, the Mw is more preferably 230000 or more, and still more preferably 250000 or more. From the viewpoint of melt fluidity, the Mw is more preferably 450000 or less, and still more preferably 40 or less.

I-1-1-3. Property (X1-3)

The property (X1-3) is such that in the integral molecular weight distribution curve obtained by GPC, the percentage ($W_{1M}$) of the component having a molecular weight of 1,000,000 or more, is 0.5 mass % or more. It is noted that the $W_{1M}$ of the polypropylene resin (X1) is equal to or more than the $W_{1M}$ of the polypropylene resin (X2). A preferred embodiment of the property (X1-3) may be such that in the integral molecular weight distribution curve obtained by GPC, the percentage ($W_{1M}$) of the component having a molecular weight of 1,000,000 or more, is 2.5 mass % or more. A more preferred embodiment of the property (X1-3) may be such that the percentage ($W_{1M}$) of the component having a molecular weight of 1,000,000 or more, is 3.5 mass % or more.

As described above, there is a possibility that as the amount of the high-molecular-weight component decreases, the melt tension decreases. Accordingly, the $W_{1M}$ of X1 is 0.5 mass % or more, and it may be 2.5 mass % or more. The $W_{1M}$ of X1 is preferably 3.0 mass % or more, more preferably 3.5 mass % or more, and particularly preferably 4.0 mass % or more. The upper limit of the $W_{1M}$ of X1 is not particularly limited. From the viewpoint of melt fluidity, it may be 10.0 mass % or less.

In the present invention, the $W_{1M}$ is defined as a value obtained as follows. In the integral molecular weight distribution curve obtained by GPC (the whole amount is normalized to 1), an integral value until the molecular weight (M) reaches 1,000,000 ($\log(M) = 6.0$) is subtracted from 1. The thus-obtained value is multiplied by 100, and the resulting value is defined as $W_{1M}$.

The $W_{1M}$ can be easily adjusted as follows. For example, in the method in which a catalyst containing several metallocene complexes are used, a metallocene complex that can produce a high-molecular-weight polymer, is selected as one of the metallocene complexes used, and then the amount and ratio of the selected metallocene complex with respect to other metallocene complexes that produce the low-molecular-weight side, the amount of hydrogen added during polymerization, and polymerization temperature are controlled, thereby easily adjusting the $W_{1M}$.

The above-defined Mz, Mw, Mn, Mw/Mn, Mz/Mw and $W_{1M}$ values are obtained by gel permeation chromatography (GPC). The methods and devices used to measure them are as follows.

Device: GPC (ALC/GPC, 150C) manufactured by Waters
Detector: IR detector MIRAN 1A manufactured by FOXBORO (Measurement wavelength: 3.42 um)
Column: AD806M/S (three sets) manufactured by Showa Denko K. K.
Mobile phase solvent: o-Dichlorobenzene (ODCB)
Measurement temperature: 140°C
Flow rate: 1.0 mL/min
Injected amount: 0.2 mL

Measurement sample preparation is carried out as follows: a solution (1 mg/mL) is prepared by use of a sample and ODCB (containing 0.5 mg/mL of dibutylhydroxytoluene (BHT)). The sample is dissolved at 140°C for one hour, thereby preparing the measurement sample.

A retention capacity obtained by GPC is converted into a molecular weight by use of a calibration curve prepared preliminarily with standard polystyrenes. The standard polystyrenes used are the following products manufactured by Tosoh Corporation: F380, F288, F128, F80, F40, F20, F10, F4, F1, A5000, A2500 and A1000.

A calibration curve is created by injecting 0.2 mL of a solution in which the standard polystyrenes are dissolved in ODCB (containing 0.5 mg/mL of BHT) so that they are 0.5 mg/mL each. The calibration curve uses a cubic equation obtained by approximation by the least-squares method.

A viscosity equation used for the conversion into the molecular weight, i.e., $[\eta] = K \times M^{\alpha}$, uses the following numerical values.

$$PS: K = 1.38 \times 10^{-4}, \alpha = 0.7$$

$$PP: K = 1.03 \times 10^{-4}, \alpha = 0.78$$

I-1-1-4. Property (X1-4)

The property (X1-4) is such that the melt tension (MT170°C) (unit: g) measured at 170°C satisfies the following requirement (Formula 1):

$$\log(MT170°C) \geq -1.1 \times \log(MFR) + 2.0 \quad (Formula\ 1).$$

In the above formula, MT170°C means a melt tension obtained by measurement in the following condition, using CAPILOGRAPH 1B (manufactured by Toyo Seiki Seisaku-sho, Ltd.), and the unit is gram (g).

Capillary: Diameter 2.0 mm, Length 40 mm
Cylinder diameter: 9.55 mm
Cylinder extrusion speed: 20 mm/min
Drawing speed: 4.0 m/min
Temperature: 170°C

In "Examples" described later, MT230°C means a melt tension obtained by measurement in the above condition, except for the temperature (temperature: 230°C). However, when the MT of the sample is very high, the resin may break at a drawing speed of 4.0 m/min. In this case, the drawing speed is decreased, and the tension at the maximum speed at which the resin can be drawn, is defined as the MT. The measurement condition and unit of the MFR are as described above.

This definition is an index to indicate that the polypropylene resin (X1) has sufficient melt tension. Since the MT generally correlates with the MFR, the MT is represented by the relation with the MFR.

Once the Formula 1 is satisfied, the polypropylene resin (X1) can obtain the effect of reducing neck-in. In addition, an uneven film thickness phenomenon and an instability phenomenon due to edge expansion and contraction, each of which is referred to as a "resonance phenomenon", are suppressed since stress uniformly propagates through a melted film. It is more preferable that the following Formula 2 is satisfied, and it is still more preferable that the following Formula 3 is satisfied.

$$\log(MT170°C) \geq -1.1 \times \log(MFR) + 2.3 \quad (Formula\ 2)$$

$$\log(MT170°C) \geq -1.1 \times \log(MFR) + 2.5 \quad (Formula\ 3)$$

It is not needed to determine the upper limit of the MT. When the MT is more than 50 g, however, the drawing speed becomes markedly slow, and the measurement by the above method becomes difficult. In this case, it is thought that the ductility of the resin is also reduced. Accordingly, the upper limit of the MT is preferably 45 g or less, more preferably 40 g or less, still more preferably 35 g or less, and even more preferably 30 g or less.

To satisfy the requirement (Formula 1), for example, the melt tension may be increased by increasing the amount of the long-chain branch of the polypropylene resin (X1). It is possible by introducing a large amount of long-chain branch by controlling the selection of preferred metallocene catalysts described below, the combination thereof, the amounts and ratio thereof, and the condition of preliminary polymerization.

I-1-1-5. Property (X1-5)

The property (X1-5) is such that the branching index g' ($Mz_{abs}$) obtained by GPC is 0.70 or more and 0.95 or less.

As a direct index to indicate that the polypropylene resin (X1) has a branch, the branching index g' can be used. The branching index g' is given by the ratio of the intrinsic viscosity [η]br of the polymer having a long-chain branched structure to the intrinsic viscosity [η]lin of a linear polymer having the same molecular weight as the above polymer, that is, [η]br/[η]lin. When the long-chain branched structure exists, the branching index g' is a value less than 1. That is, it means that the polypropylene having a branching index less than 1 (g'<1) is the "long-chain branched polypropylene".

The definition is described in, for example, "Developments in Polymer Characterization-4" (J. V. Dawkins ed. Applied Science Publishers, 1983), and the branching index is an index heretofore known to those skilled in the art.

The branching index g' can be obtained as the function of an absolute molecular weight $M_{abs}$ by use of a GPC equipped with a light scatterometer and a viscometer as described below.

For the polypropylene resin (X1) used in the present invention, the branching index g'($Mz_{abs}$) at the Z average molecular weight $Mz_{abs}$ of the absolute molecular weight Mabs obtained by light scattering, is preferably 0.72 or more, more preferably 0.75 or more, and still more preferably 0.80 or more. On the other hand, it is preferably 0.90 or less, more preferably 0.89 or less, and still more preferably 0.88 or less.

The polypropylene resin (X1) is preferably a branched polymer having a comb-like chain structure, from the following point of view: the degree of decrease in melt tension is small when mixed and kneaded at a high temperature of 290°C or more or when repeatedly mixed and kneaded, and a decrease in extrusion lamination moldability (increased neck-in or a resonance phenomenon during low-speed drawing) is less likely to occur.

The detailed method for calculating the branching index g' is as follows.

As a GPC device equipped with a refractive index detector (RI) and a viscometer, ALLIANCE GPCV2000 (manufactured by Waters Corporation) is used. As a light scattering detector, multi-angle laser light scattering detector (MALLS) DAWN-E (manufactured by Wyatt Technology) is used. The detectors are connected in the order of the MALLS, the RI and the viscometer. As a mobile phase solvent, 1,2,4-trichlorobenzene is used, to which antioxidant IRGANOX 1076 (manufactured by BASF Japan) is added at a concentration of 0.5 mg/mL.

The flow rate is set to 1 mL/min. Two GMHHR-H(S) HT columns (manufactured by Tosoh Corporation) are connected and used. The temperature of the columns, that of a sample injector and that of the detectors are 140°C. The concentration of the sample is set to 1 mg/mL, and the injection volume (the volume of a sample loop) is 0.2175 mL.

To obtain the absolute molecular weight(Mabs) and root-mean-square radius of gyration (Rg) obtained from the MALLS and the intrinsic viscosity ([η]) obtained from the viscometer, calculation is carried out by reference to the following references, using ASTRA version 4.73.04 (data processing software included in the MALLS).

References:

1. "Developments in Polymer Characterization-4" (J. V. Dawkins ed. Applied Science Publishers, 1983. Chapter 1.)
2. Polymer, 45, 6495-6505 (2004)
3. Macromolecules, 33, 2424-2436 (2000)
4. Macromolecules, 33, 6945-6952 (2000)

[Calculation of branching index (g')]

The branching index (g') is calculated as the ratio ([η]br/[η]lin) of the intrinsic viscosity ([η]br) obtained by measuring the sample by the viscometer to the intrinsic viscosity ([η]lin) separately obtained by measuring the linear polymer.

When the long-chain branched structure is introduced in the polymer molecule, the radius of gyration decreases compared to the linear polymer molecule having the same molecular weight. As the radius of gyration decreases, the intrinsic viscosity also decreases. Accordingly, as the long-chain branched structure is introduced, the ratio ([η]br/[η]lin) of the intrinsic viscosity ([η]br) of the branched polymer to the intrinsic viscosity ([η]lin) of the linear polymer having the same molecular weight, becomes small.

Accordingly, when the branching index (g' = [η]br/[η]lin) is a value less than 1, it means that the polymer molecule has the long-chain branched structure.

As the linear polymer used to obtain the intrinsic viscosity [η]lin, a commercially-available homopolypropylene (NOVATEC-PP (registered trademark) manufactured by Japan Polypropylene Corporation, grade FY6) is used. The fact that the log of the linear polymer [η]lin has a linear relationship with the log of the molecular weight, is known as the Mark-Houwink-Sakurada equation. Accordingly, the [η]lin value can be obtained by appropriate extrapolation into the low-molecular-weight side or the high-molecular-weight side.

The branching index g' can be adjusted to 0.70 or more and 0.95 or less by introducing a large amount of long-chain branch. For example, it can be adjusted by controlling the selection of preferred metallocene catalysts, the combination thereof, the amounts and ratio thereof, and the condition of preliminary polymerization.

I-1-1-6. Property (X1-6)

The property (X1-6) is such that the triad fraction (mm) of the propylene unit triad sequences obtained by $^{13}$C-NMR, is 95% or more (hereinafter, the triad fraction may be referred to as "mm fraction").

The polypropylene resin (X1) used in the present invention preferably has high stereoregularity. The degree of the stereoregularity can be evaluated by $^{13}$C-NMR. The polypropylene resin (X1) preferably has such stereoregularity, that the mm fraction of the propylene unit triad sequences obtained by $^{13}$C-NMR, is 95% or more.

The mm fraction is the percentage of the propylene unit triad sequences in which the direction of a methyl branch in each propylene unit is the same as that in arbitrary propylene unit triad sequences composed of head-to-tail bonds in the polymer chain. Accordingly, the upper limit is 100%. The mm fraction is a value indicating that the steric structure of the methyl group in the polypropylene molecular chain is isotactically controlled, and it means that the steric structure is highly controlled when the mm fraction is high. When the mm fraction is less than the value, there is a tendency that the elastic modulus of the product decreases, and the effect of imparting surface scratch resistance to the polypropylene-based resin composition layer of the laminate may deteriorate.

Accordingly, the mm fraction is 95% or more, preferably 96% or more, and more preferably 97% or more.

The details of the method for measuring the mm fraction of the propylene unit triad sequences are as follows.

First, 375 mg of a sample is completely dissolved in 2.5 ml of deuterated 1,1,2,2-tetrachloroethane in an NMR sample tube (10 φ). Then, measurement is carried out at 125°C by a complete proton decoupling method. The chemical shift of the three peaks of the deuterated 1,1,2,2-tetrachloroethane is such that the central peak of the three peaks is set to 74.2 ppm. The chemical shifts of other carbon peaks are based on this.

- Flip angle: 90°
- Pulse interval: 10 seconds
- Resonant frequency: 100 MHz or more
- Accumulation times: 10,000 or more
- Observation range: from -20 ppm to 179 ppm ● Number of data points: 32768 points

The mm fraction of the propylene unit triad sequences is obtained by substituting the integrated intensity of a 13C signal measured by $^{13}$C-NMR into the following formula:

$$mm \ (\%) \ = \ Imm \ \times \ 100 \ / \ (Imm \ + \ 3 \ \times \ Imrrm)$$

where Imm and Imrrm are the following amounts: $Imm = I_{23.6-21.1}$ and $Imrrm = I_{19.8-19.7}$.

The $^{13}$C-NMR measurement method for obtaining the mm fraction of the propylene unit triad sequences can be carried out by the same method as the above-mentioned measurement.

Spectrum assignment can be carried out with reference to the following:

"Polymer Journal", volume 16, p. 717 (1984), Asakura Shoten Publishing Co., Ltd.
"Macromolecules", volume 8, p. 687 (1975), and
"Polymer", volume 30, p. 1350 (1989).

The mm fraction can be adjusted to 95% or more by a polymerization catalyst that can provide a high-crystalline polymer. It is possible by polymerization using preferred metallocene catalysts described later.

I-1-1-7. Method for producing the polypropylene resin (X1)

The method for producing the polypropylene resin (X1) is not particularly limited, as long as the polypropylene resin (X1) satisfies the above-described properties (X1-1) to (X1-6). From the viewpoint of satisfying the above-described conditions such as the high stereoregularity, the relatively wide molecular weight distribution, the range of the branching index g' ($Mz_{abs}$) and the high melt tension, a preferred production method is a method that uses a macromer copolymerization method using a combination of metallocene catalysts. As the method, examples include, but are not limited to, the method disclosed in JP-A No. 2009-57542. This is a method for producing polypropylene having a long-chain branched structure, by use of a catalyst obtained by combining a catalyst component of specific structure, which has a macromer forming ability, and a catalyst component of specific structure, which has a macromer copolymerizing ability. According to this, a polypropylene resin having a long-chain branched structure and target properties can be produced by an industrially effective method such as bulk polymerization and gas phase polymerization, especially by single stage polymerization in a practical pressure temperature condition, using hydrogen as a molecular weight modifier.

The polypropylene resin (X1) of the present invention may be a propylene homopolymer obtained by homopolymerization of a propylene monomer, or it may be a propylene/$\alpha$-olefin copolymer obtained by copolymerization of a propylene monomer and a C2 to C20 $\alpha$-olefin comonomer other than propylene, such as ethylene and/or 1-butene.

The form of the polypropylene resin (X1) is not particularly limited. It may be a powder form or a particulate form (formed by a granulated powder).

As needed, the polypropylene resin (X1) of the present invention may be mixed with additional components described later by a HENSCHEL MIXER, a V blender, a ribbon blender, a tumbler blender or the like. As needed, the mixed polypropylene resin (X1) may be kneaded and granulated by a mixing and kneading device such as a single screw extruder, a multi-screw extruder, a kneader and a banbury mixer.

I-1-2. Polypropylene resin (X2)

The polypropylene resin (X2) has the properties (X2-1) to (X2-6) .

I-1-2-1. Property (X2-1)

The property (X2-1) is such that the MFR (230°C, load 2.16 kgf) is more than 0.5 g/10 min and 80 g/10 min or less. It is noted that the MFR of the polypropylene resin (X1) is smaller than the MFR of the polypropylene resin (X2). A preferred embodiment of the property (X2-1) may be such that the MFR (230°C, load 2.16 kgf) is more than 10 g/10 min and 80 g/10 min or less. A more preferred embodiment of the property (X2-1) may be such that the MFR (230°C, load 2.16 kgf) is more than 30 g/10 min and 80 g/10 min or less.

The MFR is an index of melt fluidity. This value decreases as the molecular weight of a polymer increases. On the other hand, this value increases as the molecular weight decreases.

The MFR of X2 is more than 0.5 g/10 min, from the point of view that excellent melt fluidity is obtained and load on an extruder is easily suppressed in extrusion molding. The MFR of X2 is preferably more than 10 g/10 min, more preferably more than 15 g/10 min, still more preferably more than 30 g/10 min, and particularly preferably more than 40 g/10 min.

On the other hand, the MFR of X2 is 80 g/10 min or less, from the point of view that excellent melt tension and excellent moldability (e.g., extrusion lamination moldability) are obtained. The MFR of X2 is preferably 70 g/10 min or less, and more preferably 65 g/10 min or less.

In the present invention, the melt flow rate (MFR) is measured by the same method as the measurement method used in "I-1-1. Polypropylene resin (X1)". The melt flow rate (MFR) can be easily adjusted by changing the polymerization temperature or pressure, or by a general method such as adding a chain transfer agent (e.g., hydrogen) during polymerization.

I-1-2-2. Property (X2-2)

The property (X2-2) is such that the ratio (Mw/Mn) between the weight average molecular weight (Mw) and the number average molecular weight (Mn), both of which are obtained by GPC, is 2.0 or more and 5.0 or less, and the ratio (Mz/Mw) between the Z average molecular weight (Mw) and the weight average molecular weight (Mw), both of which are obtained by GPC, is 2.0 or more and 5.0 or less.

The Mw/Mn is an index of the extent of molecular weight distribution. It means that as the Mw/Mn increases, the molecular weight distribution widens. When the Mw/Mn is too small, the amount of the low-molecular-weight component decreases, and the melt fluidity deteriorates. Accordingly, the Mw/Mn is 2.0 or more, and it is preferably 2.1 or more, and more preferably 2.2 or more. On the other hand, when the Mw/Mn is too large, the amount of the high-molecular-weight component relatively increases, and the melt fluidity deteriorates. Accordingly, the Mw/Mn is 5.0 or less, and it is preferably 4.6 or less, and more preferably 4.2 or less.

As with the Mw/Mn, the Mz/Mw is an index of the extent of molecular weight distribution, and it is an index of the extent of the high-molecular-weight side compared to the Mw/Mn. It means that as the Mz/Mw increases, the molecular weight distribution extends to the high-molecular-weight side. When the Mz/Mw is too small, the amount of the high-molecular-weight component decreases, and the melt tension decreases. Accordingly, the Mz/Mw is 2.0 or more, and it is preferably 2.1 or more, and more preferably 2.2 or more. On the other hand, when the Mz/Mw is too large, the amount of the high-molecular-weight component relatively increases, and the melt fluidity deteriorates. Accordingly, the Mz/Mw is 5.0 or less, and it is preferably 4.3 or less, and more preferably 4.0 or less. The Mz/Mw may be 3.5 or less.

The average molecular weights and molecular weight distributions (Mz, Mw, Mn, Mw/Mn and Mz/Mw) of the polypropylene resin (X2) measured by GPC, can be easily adjusted by changing the propylene polymerization temperature or pressure condition, or they can be easily adjusted by a most general method such as adding a chain transfer agent (e.g., hydrogen) during propylene polymerization. The average molecular weights and molecular weight distributions can be adjusted by changing the type of a metallocene complex used and by changing the amounts and ratio of the complexes when two or more kinds of complexes are used.

From the viewpoint of balance between melt fluidity and melt tension, the Mw of the polypropylene resin (X2) of the present invention is preferably 150,000 or more and 200,000 or less. From the viewpoint of melt tension, the Mw is more preferably 160,000 or more. From the viewpoint of melt fluidity, the Mw is more preferably 190,000 or less.

I-1-2-3. Property (X2-3)

The property (X2-3) is such that in the integral molecular weight distribution curve obtained by GPC, the percentage ($W_{1M}$) of the component having a molecular weight of 1,000,000 or more, is 0.5 mass % or more. It is noted that the $W_{1M}$ of the polypropylene resin (X1) is equal to or more than the $W_{1M}$ of the polypropylene resin (X2). A preferred embodiment of the property (X2-3) may be such that in the integral molecular weight distribution curve obtained by GPC, the percentage ($W_{1M}$) of the component having a molecular weight of 1,000,000 or more, is 0.5 mass % or more and less than 3.5 mass %. A more preferred embodiment of the property (X2-3) may be such that the percentage ($W_{1M}$) of the component having a molecular weight of 1,000,000 or more, is 0.5 mass % or more and less than 2.5 mass %.

As described above, there is a possibility that as the amount of the high-molecular-weight component decreases, the melt tension decreases. Accordingly, the $W_{1M}$ of X2 is 0.5 mass % or more, and it is preferably 1.0 mass % or more, and more preferably 1.5 mass % or more. On the other hand, when the $W_{1M}$ increases, the melt fluidity may decrease. Accordingly, the $W_{1M}$ of X2 is preferably less than 3.5 mass %, more preferably 3.0 mass % or less, still more preferably less than 2.5 mass %, and particularly preferably 2.0 mass % or less.

In the present invention, the $W_{1M}$ is defined as a value obtained as follows. In the integral molecular weight distribution curve obtained by GPC (the whole amount is normalized to 1), an integral value until the molecular weight (M) reaches 1,000,000 (log(M) = 6.0) is subtracted from 1. The thus-obtained value is multiplied by 100, and the resulting value is defined as $W_{1M}$.

The $W_{1M}$ can be easily adjusted as follows. For example, in the method in which a catalyst containing several metallocene complexes are used, a metallocene complex that can produce a high-molecular-weight polymer, is selected as one of the metallocene complexes used, and then the amount and ratio of the selected metallocene complex with respect to other metallocene complexes that produce the low-molecular-weight side, the amount of hydrogen added during polymerization, and polymerization temperature are controlled, thereby easily adjusting the $W_{1M}$.

The above-defined Mz, Mw, Mn, Mw/Mn, Mz/Mw and $W_{1M}$ values are obtained by gel permeation chromatography (GPC). The methods and devices used to measure them are the same as those used in "I-1-1. Polypropylene resin (X1)".

I-1-2-4. Property (X2-4)

The property (X2-4) is such that the melt tension (MT170°C) (unit: g) measured at 170°C satisfies the following requirement (Formula 1):

$$\log(\text{MT170°C}) \geq -1.1 \times \log(\text{MFR}) + 2.0 \quad \text{(Formula 1)}.$$

In the above formula, MT170°C and MT230°C mean melt tensions obtained by measurement in the same manner as the measurement method used in "I-1-1. Polypropylene resin (X1)", and the measurement condition and unit are as described above.

This definition is an index to indicate that the polypropylene resin (X2) has sufficient melt tension. Since the MT generally correlates with the MFR, the MT is represented by the relation with the MFR.

Once the Formula 1 is satisfied, the polypropylene resin (X2) can obtain the effect of reducing neck-in. In addition, an uneven film thickness phenomenon and an instability phenomenon due to edge expansion and contraction, each of which is referred to as a "resonance phenomenon", are suppressed since stress uniformly propagates through a melted film. It is more preferable that the following Formula 2 is satisfied, and it is still more preferable that the following Formula 3 is satisfied.

$$\log(\text{MT170°C}) \geq -1.1 \times \log(\text{MFR}) + 2.3 \qquad \text{(Formula 2)}$$

$$\log(\text{MT170°C}) \geq -1.1 \times \log(\text{MFR}) + 2.5 \qquad \text{(Formula 3)}$$

It is not needed to determine the upper limit of the MT. When the MT is more than 50 g, however, the drawing speed becomes markedly slow, and the measurement by the above method becomes difficult. In this case, it is thought that the ductility of the resin is also reduced. Accordingly, the upper limit of the MT is preferably 45 g or less, more preferably 40 g or less, still more preferably 35 g or less, and even more preferably 30 g or less.

To satisfy the requirement (Formula 1), for example, the melt tension may be increased by increasing the amount of the long-chain branch of the polypropylene resin (X2). It is possible by introducing a large amount of long-chain branch by controlling the selection of preferred metallocene catalysts described below, the combination thereof, the amounts and ratio thereof, and the condition of preliminary polymerization.

I-1-2-5. Property (X2-5)

The property (X2-5) is such that the branching index g' ($\text{Mz}_{abs}$) obtained by GPC is 0.70 or more and 0.95 or less.

As a direct index to indicate that the polypropylene resin (X2) has a branch, the branching index g' can be used, as with the case of the polypropylene resin (X1). The method for calculating the branching index g' is the same as the case of the polypropylene resin (X1).

The branching index g' can be adjusted to 0.70 or more and 0.95 or less by introducing a large amount of long-chain branch. For example, it can be adjusted by controlling the selection of preferred metallocene catalysts, the combination thereof, the amounts and ratio thereof, and the condition of preliminary polymerization.

For the polypropylene resin (X2) used in the present invention, the branching index g'($\text{Mz}_{abs}$) at the Z average molecular weight $\text{Mz}_{abs}$ of the absolute molecular weight Mabs obtained by light scattering, is preferably 0.72 or more, more preferably 0.75 or more, and still more preferably 0.80 or more. On the other hand, it is preferably 0.90 or less, more preferably 0.88 or less, and still more preferably 0.85 or less.

I-1-2-6. Property (X2-6)

The mm fraction of the propylene unit triad sequences obtained by $^{13}$C-NMR, is 95% or more.

The polypropylene resin (X2) used in the present invention preferably has high stereoregularity. The degree of the stereoregularity can be evaluated by $^{13}$C-NMR. The polypropylene resin (X2) preferably has such stereoregularity, that the mm fraction of the propylene unit triad sequences obtained by $^{13}$C-NMR, is 95% or more. The effects of the stereoregularity) are the same as those of the polypropylene resin (X1).

I-1-2-7. Method for producing the polypropylene resin (X2)

The method for producing the polypropylene resin (X2) is not particularly limited, as long as the polypropylene resin (X2) satisfies the above-described properties (X2-1) to (X2-6). From the viewpoint of satisfying the above-described conditions such as the high stereoregularity, the relatively wide molecular weight distribution, the range of the branching index g' ($\text{Mz}_{abs}$) and the high melt tension, a preferred production method is a method that uses a macromer copolymerization method using a combination of metallocene catalysts. As the method, examples include, but are not limited to, the method disclosed in JP-A No. 2009-57542. This is a method for producing polypropylene having a long-chain branched structure, by use of a catalyst obtained by combining a catalyst component of specific structure, which has a macromer forming ability, and a catalyst component of specific structure, which has a macromer copolymerizing ability. According to this, a polypropylene resin having a long-chain branched structure and target properties can be produced by an industrially effective method such as bulk polymerization and gas phase polymerization, especially by single stage polymerization in a practical pressure temperature condition, using hydrogen as a molecular weight modifier.

The polypropylene resin (X2) of the present invention may be a propylene homopolymer obtained by homopolymerization of a propylene monomer, or it may be a propylene/α-olefin copolymer obtained by copolymerization of a propylene monomer and a C2 to C20 α-olefin comonomer other than propylene, such as ethylene and/or 1-butene.

The form of the polypropylene resin (X2) is not particularly limited. It may be a powder form or a particulate form (formed by a granulated powder).

As needed, the polypropylene resin (X2) of the present invention may be mixed with additional components described later by a HENSCHEL MIXER, a V blender, a ribbon blender, a tumbler blender or the like. As needed, the mixed polypropylene resin (X2) may be kneaded and granulated by a mixing and kneading device such as a single screw extruder, a multi-screw extruder, a kneader and a banbury mixer.

I-1-3. Polypropylene-based resin (Y)

The polypropylene-based resin (Y) has the properties (Y-1) and (Y-2).

I-1-3-1. Property (Y-1)

The property (Y-1) is such that the MFR (230°C, load 2.16 kgf) is 10 g/10 min or more and 50 g/10 min or less.
The MFR of the polypropylene-based resin (Y) is 10 g/10 min or more, and it is preferably 15 g/10 min or more, from the viewpoint of imparting excellent flowability to the polypropylene-based resin composition and suppressing the resonance phenomenon during extrusion lamination molding. On the other hand, the MFR of the polypropylene-based resin (Y) is 50 g/10 min or less, and it is preferably 45 g/10 min or less, from the viewpoint of imparting excellent melt tension and obtaining excellent product production efficiency.
The MFR of the polypropylene-based resin (Y) is easily adjusted by changing the propylene polymerization temperature or pressure condition, or it is easily adjusted by adding a chain transfer agent (e.g., hydrogen) during polymerization.
The polypropylene-based resin (Y) may be a polypropylene-based resin such that the MFR is adjusted by organic peroxide degradation after polymerizing the polypropylene-based resin.
As the organic peroxide used at that time, examples include, but are not limited to, benzoyl peroxide, di-t-butyl peroxide, dicumyl peroxide, t-butyl cumyl peroxide, 1,1-bis-(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, 2,5-dimethyl-2,5-di(t-butylperoxy)hexane, 2,5-dimethyl-2,5-di(benzoylperoxy)hexane, 2,5-dimethyl-2,5-di(t-butylperoxy)-3-hexyne, 1,3-bis(t-butylperoxy isopropyl)benzene, $\alpha,\alpha'$-bis(t-butylperoxy isopropyl)benzene, t-butyl-hydroperoxide, cumene hydroperoxide, lauroyl peroxide, di-t-butyl-diperoxy phthalate, t-butylperoxymaleic acid, t-butylperoxy isopropyl carbonate, and isopropyl percarbonate.
They can be used solely or in combination of two or more kinds. Among them, 2,5-dimethyl-2,5-di(t-butylperoxy)hexane, 2,5-dimethyl-2,5-di(t-butylperoxy)-3-hexyne, 1,3-bis(t-butylperoxy isopropyl)benzene, and $\alpha,\alpha'$-bis(t-butylperoxy isopropyl)benzene are particularly preferred.
To adjust the MFR, the degradation may be carried out as follows: the organic peroxide is preferably used in an amount of 0.005 to 0.1 parts by mass per 100 parts by mass of the resin or resin composition, and they are mixed and kneaded while heating them at a temperature equal to or more than the melting temperature of the resin, such as 180°C to 300°C. This degradation can be carried out by any method, and it is preferably carried out in an extruder. To uniformly disperse the organic peroxide in the polypropylene-based resin, they may be sufficiently mixed in advance by use of a mixer such as HENSCHEL MIXER and a ribbon blender. To increase the dispersibility of the organic peroxide, a mixture of the organic peroxide with an appropriate medium can be used. The polypropylene-based resin (Y) can be used in the present invention by satisfying the physical property requirements of the present invention after adjusting the MFR by the organic peroxide degradation.

I-1-3-2. Property (Y-2)

The property (Y-2) is such that the melt tension (MT170°C) (unit: g) measured at 170°C satisfies the following requirement (Formula A):

$$\log(\mathrm{MT170°C}) < -1.1 \times \log(\mathrm{MFR}) + 2.0 \qquad (\text{Formula A}).$$

In the above formula, MT170°C means a melt tension obtained by measurement in the same manner as the measurement method used in "I-1-1. Polypropylene resin (X1)", and the measurement condition and unit are as described above.
This definition is an index to indicate the melt tension of the polypropylene-based resin (Y). Since the MT generally correlates with the MFR, the MT is represented by the relation with the MFR.
By satisfying the Formula A, the polypropylene-based resin (Y) can impart flowability when mixed with the polypropylene resins (X1) and (X2). Accordingly, a molding failure phenomenon such as film rapture during molding, can be reduced.

I-1-3-3. Method for producing the polypropylene-based resin (Y)

The method for producing the polypropylene-based resin (Y) is not particularly limited. The polypropylene-based resin (Y) may be produced by use of a Ziegler-Natta catalyst, or it may be produced by use of a metallocene-based catalyst.

The Ziegler-Natta catalyst is a catalyst system as outlined in, for example, Section 2.3.1 (pages 20 to 57) in "Polypropylene Handbook" (edited by Edward P. Moore Jr., translated under the supervision of Tetsuo Yasuda and Mitsuru Sakuma, Kogyo Chosakai Publishing Co., Ltd. (1998)). For example, it refers to a titanium trichloride-based catalyst comprising titanium trichloride and a halogenated organoaluminum, a magnesium-supported catalyst comprising an organoaluminum, an organosilicon compound and a solid catalyst component containing magnesium chloride, titanium halide and an electron-donating compound, and a catalyst obtained by combining an organoaluminum compound component with an organosilicon-treated solid catalyst component formed by bringing a solid catalyst component in contact with an organoaluminum and an organosilicon compound.

As the metallocene catalyst, any known catalyst comprising (i) a transition metal compound of the Group 4 in the periodic table, which contains a ligand having a cyclopentadienyl skeleton (a so-called metallocene compound), (ii) a co-catalyst that can be activated to a stable ionic state by reaction with a metallocene compound and, as needed, (iii) an organoaluminum compound, can be used. The metallocene compound is preferably a crosslinked metallocene compound capable of stereoregular polymerization of propylene, and it is more preferably a crosslinked metallocene compound capable of isoregular polymerization of propylene.

As the (i)metallocene compound described above, for example, those disclosed in the following are preferably used: JP-A Nos. S60-35007, S61-130314, S63-295607, H1-275609, H2-41303, H2-131488, H2-76887, H3-163088, H4-300887, H4-211694, H5-43616, H5-209013, H6-239914, Japanese translation of PCT International Application No. H7-504934 and JP-A No. H8-85708.

As the metallocene compound, examples include, but are not limited to, the following zirconium compounds:

methylene bis(2-methylindenyl)zirconium dichloride,
ethylene bis(2-methylindenyl)zirconium dichloride,
ethylene 1,2-(4-phenylindenyl) (2-methyl-4-phenyl-4H-azulenyl)zirconium dichloride,
isopropylidene(cyclopentadienyl) (fluorenyl)zirconium dichloride,
isopropylidene(4-methylcyclopentadienyl) (3-t-butylindenyl)zirconium dichloride,
dimethylsilylene(2-methyl-4-t-butylcyclopentadienyl)(3'-t-butyl-5'-methylcyclopentadienyl)zirconium dichloride,
dimethylsilylene bis(indenyl)zirconium dichloride,
dimethylsilylene bis(4,5,6,7-tetrahydroindenyl)zirconium dichloride,
dimethylsilylene bis[1-(2-methyl-4-phenylindenyl)]zirconium dichloride,
dimethylsilylene bis[1-(2-ethyl-4-phenylindenyl)]zirconium dichloride,
dimethylsilylene bis[4-(1-phenyl-3-methylindenyl)]zirconium dichloride,
dimethylsilylene(fluorenyl)t-butylamide zirconium dichloride,
methylphenylsilylene bis[1-(2-methyl-4-(1-naphthyl)-indenyl)]zirconium dichloride,
dimethylsilylene bis[1-(2-methyl-4,5-benzoindenyl)]zirconium dichloride,
dimethylsilylene bis[1-(2-methyl-4-phenyl-4H-azulenyl)]zirconium dichloride,
dimethylsilylene bis[1-(2-ethyl-4-(4-chlorophenyl)-4H-azulenyl)]zirconium dichloride,
dimethylsilylene bis[1-(2-ethyl-4-naphthyl-4H-azulenyl)]zirconium dichloride,
diphenylsilylene bis[1-(2-methyl-4-(4-chlorophenyl)-4H-azulenyl)]zirconium dichloride,
dimethylsilylene bis[1-(2-ethyl-4-(3-fluorobiphenylyl)-4H-azulenyl)]zirconium dichloride,
dimethylgermylene bis[1-(2-ethyl-4-(4-chlorophenyl)-4H-azulenyl)]zirconium dichloride, and
dimethylgermylene bis[1-(2-ethyl-4-phenylindenyl)]zirconium dichloride.

Also, compounds obtained by substituting the zirconium in the above compounds by titanium or hafnium, can be used. Also, a mixture of a zirconium compound, a hafnium compound and so on is preferably used. The chloride in the above compounds can be substituted by another halogen compound, a hydrocarbon group such as methyl, isobutyl and benzyl, an amide group such as dimethylamide and diethylamide, an alkoxide group such as a methoxy group and a phenoxy group, a hydride group, or the like.

Among them, the metallocene compound in which the indenyl or azulenyl group is crosslinked by silicon or a germyl group, is particularly preferred.

The metallocene compound may be used by supporting it on an inorganic or organic compound carrier. As the carrier, an inorganic or organic porous compound is preferred. As the carrier, examples include, but are not limited to, an inorganic compound such as ion-exchange layered silicate, zeolite, $SiO_2$, $Al_2O_3$, silica-alumina, MgO, $ZrO_2$, $TiO_2$, $B_2O_3$, CaO, ZnO, BaO and $ThO_2$, an organic compound such as porous polyolefin, a styrenedivinylbenzene copolymer, an olefin-acrylic acid copolymer, and mixtures thereof.

As (ii) the co-catalyst that can be activated to a stable ionic state by reaction with the metallocene compound, for example, the following are preferred: an organoaluminum oxy compound (such as an aluminoxane compound), ion-exchange layered silicate, Lewis acid, a boron-containing compound, an ionic compound, and a fluorine-containing organic compound.

As the (iii) organoaluminum compound, for example, the following are preferred: trialkylaluminum such as triethylaluminum, triisopropylaluminum and triisobutylaluminum, dialkylaluminum halide, alkylaluminum sesquihalide, alkylaluminum dihalide, alkylaluminum hydride, and organoaluminum alkoxide.

Among them, the polypropylene homopolymer is preferably a polypropylene homopolymer produced by use of the Ziegler-Natta catalyst. As the propylene random copolymer, a propylene random copolymer produced by use of the metallocene-based catalyst, is preferably used.

The method for producing the polypropylene-based resin (Y) is not particularly limited. The polypropylene-based resin (Y) can be produced by any conventional polymerization method such as a slurry polymerization method, a bulk polymerization method and a gas phase polymerization method. Also, a polypropylene or propylene-based random copolymer can be produced by a multistage polymerization method, within the scope of the invention.

The polypropylene-based resin (Y) may be a propylene homopolymer obtained by homopolymerization of a propylene monomer, or it may be a propylene/ethylene copolymer obtained by copolymerization of a propylene monomer and an ethylene comonomer. The polypropylene-based resin (Y) preferably contains 0 mass % to 6.0 mass % of ethylene as a comonomer. The polypropylene-based resin (Y) more preferably contains 0 mass % to 5.0 mass % of ethylene, and still more preferably 0 mass % to 4.0 mass % of ethylene. When the ethylene content is more than 6.0 mass %, a decrease in crystallinity may occur, and a decrease in heat resistance may occur.

The form of the polypropylene-based resin (Y) is not particularly limited. It may be a powder form or a particulate form (formed by a granulated powder).

As needed, the polypropylene-based resin (Y) of the present invention may be mixed with additional components described later by a HENSCHEL MIXER, a V blender, a ribbon blender, a tumbler blender or the like. As needed, they may be mixed and kneaded by a mixing and kneading device such as a single screw extruder, a multi-screw extruder, a kneader and a banbury mixer.

I-1-4. Polypropylene-based resin composition

I-1-4-1. Percentages of the polypropylene resin (X1), the polypropylene resin (X2) and the polypropylene-based resin (Y)

In the polypropylene-based resin composition of the present invention, the percentages of the polypropylene resin (X1), the polypropylene resin (X2) and the polypropylene-based resin (Y) are as follows, on the basis that the total of the polypropylene resin (X1), the polypropylene resin (X2) and the polypropylene-based resin (Y) is 100 mass %. Preferably, the polypropylene resin (X1) is from 2 mass % to 30 mass %; the polypropylene resin (X2) is from 5 mass % to 98 mass %; and the polypropylene-based resin (Y) is from 0 mass % to 80 mass %. More preferably, the polypropylene resin (X1) is from 2 mass % to 30 mass %; the polypropylene resin (X2) is from 5 mass % to 80 mass %; and the polypropylene-based resin (Y) is from 10 mass % to 80 mass %. Still more preferably, the polypropylene resin (X1) is from 5 mass % to 30 mass %; the polypropylene resin (X2) is from 5 mass % to 50 mass %; and the polypropylene-based resin (Y) is from 20 mass % to 80 mass %. Even more preferably, the polypropylene resin (X1) is from 5 mass % to 25 mass %; the polypropylene resin (X2) is from 15 mass % to 45 mass %; and the polypropylene-based resin (Y) is from 30 mass % to 70 mass %. Particularly preferably, the polypropylene resin (X1) is from 5 mass % to 20 mass %; the polypropylene resin (X2) is from 20 mass % to 40 mass %; and the polypropylene-based resin (Y) is from 40 mass % to 65 mass %.

On the basis that the total of the polypropylene resin (X1), the polypropylene resin (X2) and the polypropylene-based resin (Y) is 100 mass %, the polypropylene resin (X1) may be 2 mass % or more, may be 2.5 mass % or more, or may be 5 mass % or more. On the other hand, the polypropylene resin (X1) may be 30 mass % or less, may be 25 mass % or less, or may be 20 mass % or less.

On the basis that that total of the polypropylene resin (X1), the polypropylene resin (X2) and the polypropylene-based resin (Y) is 100 mass %, the polypropylene resin (X2) may be 5 mass % or more, may be 15 mass % or more, or may be 20 mass % or more. On the other hand, the polypropylene resin (X2) may be 98 mass % or less, may be 80 mass % or less, may be 50 mass % or less, may be 45 mass % or less, or may be 40 mass % or less.

On the basis that the total of the polypropylene resin (X1), the polypropylene resin (X2) and the polypropylene-based resin (Y) is 100 mass %, the polypropylene-based resin (Y) may be 0 mass % or more, may be 10 mass %, may be 20 mass % or more, may be 30 mass % or more, or may be 40 mass % or more. On the other hand, the polypropylene-based resin (Y) may be 80 mass % or less, may be 70 mass % or less, or may be 65 mass % or less.

By setting the percentages of the resins in the above ranges, the resin composition which has the following properties and which can provide a molded product having excellent transparency, can be obtained: the high-speed extrusion lamination processability is excellent since it exhibits small neck-in in high-temperature extrusion molding at 290°C or more, for example, and it has high ductility.

The preferred embodiment 1-1 of the polypropylene-based resin composition of the present invention, is a polypropylene-based resin composition comprising 2 mass % to 30 mass % of the polypropylene resin (X1) having the following properties (X1-1) to (X1-6), 5 mass % to 98 mass % of the polypropylene resin (X2) having the following properties (X2-1) to (X2-6), and 0 mass % to 80 mass % of the polypropylene-based resin (Y) having the following properties (Y-1) and (Y-2), wherein the total amount of the polypropylene resin (X1), the polypropylene resin (X2) and the polypropylene-based resin (Y) is 100 mass %. The preferred ranges of the percentages and the properties may be the same as described above.

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 3.5 mass % or more,
(X1-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \quad \text{(Formula 1)},$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 10 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more and less than 3.5 mass %,
(X2-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \quad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\mathrm{MT170°C}) < -1.1 \times \log(\mathrm{MFR}) + 2.0 \quad \text{(Formula A)}.$$

The preferred embodiment 1-2 of the polypropylene-based resin composition of the present invention, is a polypropylene-based resin composition comprising 5 mass % to 30 mass % of the polypropylene resin (X1) having the following properties (X1-1) to (X1-6), 5 mass % to 50 mass % of the polypropylene resin (X2) having the following properties (X2-1) to (X2-6), and 20 mass % to 80 mass % of the polypropylene-based resin (Y) having the following properties (Y-1) and (Y-2), wherein the total amount of the polypropylene resin (X1), the polypropylene resin (X2) and the polypropylene-based resin (Y) is 100 mass %. The preferred ranges of the percentages and the properties may be the same as described above.

(X1-1) an MFR (230°C, load 2.16 kgf) is more than 0.5 g/10 min and 30 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X1-3) in an integral molecular weight distribution curve obtained by GPC, a percentage ($W_{1M}$) of a component having a molecular weight of 1,000,000 or more, is 2.5 mass % or more,
(X1-4) a melt tension (MT170°C) (unit: g) measured at 170°C satisfies the following requirement (Formula 1):

$$\log(MT170°C) \geq -1.1 \times \log(MFR) + 2.0 \quad \text{(Formula 1)},$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 30 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more and less than 2.5 mass %,
(X2-4) a melt tension (MT170°C) (unit: g) measured at 170°C satisfies the following requirement (Formula 1):

$$\log(MT170°C) \geq -1.1 \times \log(MFR) + 2.0 \quad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\text{(Formula A)}$$
$$\log(MT170°C) < -1.1 \times \log(MFR) + 2.0.$$

I-1-4-2. Other components

As needed, the following components can be added to the polypropylene-based resin composition of the present invention, which are components other than the above-described polypropylene resin (X1), polypropylene resin (X2) and polypropylene-based resin (Y).

I-1-4-2-1. Additives

Additives applicable to polypropylene-based resins, such as an antioxidant, can be appropriately added to the polypropylene-based resin composition of the present invention, as long as the effects of the present invention are not impaired.
More specifically, the following additives may be added: a phenol-based stabilizer as typified by 2,6-di-t-butyl-p-cresol (BHT), tetrakis[methylene-3-(3,5-di-t-butyl-4-hydroxyphenyl)propionate]methane (manufactured by BASF Japan Ltd., product name: IRGANOX 1010) and n-octadecyl-3-(4'-hydroxy-3,5'-di-t-butylphenyl)propionate (manufactured by BASF Japan Ltd., product name: IRGANOX 1076); a phosphite-based stabilizer as typified by bis(2,4-di-t-butylphenyl)pentaerythritol diphosphite and tris(2,4-di-t-butylphenyl)phosphite; a lubricant as typified by higher fatty acid amide and higher fatty acid ester; an antistatic agent such as glycerol ester of fatty acid having 8 to 22 carbon atoms, sorbitan acid ester thereof, and polyethylene glycol ester thereof; and an anti-blocking agent as typified by silica, calcium carbonate and talc.
To impart weather resistance, an ultraviolet absorber and a light stabilizer can be added to the polypropylene-based resin composition of the present invention.
The ultraviolet absorber is a compound having an absorption band in the ultraviolet range. For example, triazole-based, benzophenone-based, salicylate-based, cyanoacrylate-based, nickel chelate-based and inorganic fine particle-based ultraviolet absorbers are known. Among them, a triazole-based ultraviolet absorber is most widely used.
The following examples are typical compounds of the ultraviolet absorber:

a triazole-based compound such as 2-(2'-hydroxy-5'-methylphenyl)benzotriazole (product names: SUMISORB 200, TINUVIN P), 2-(2'-hydroxy-5'-t-octylphenyl)benzotriazole (product names: SUMISORB 340, TINUVIN 399), 2-(2'-hydroxy-3',5'-di-t-butylphenyl)benzotriazole (product names: SUMISORB 320, TINUVIN 320), 2-(2'-hydroxy-3',5'-di-t-amylphenyl)benzotriazole (product names: SUMISORB 350, TINUVIN 328), and 2-(2'-hydroxy-3'-t-butyl-5'-methylphenyl)-5-chlorobenzotriazole (product names: SUMISORB 300, TINUVIN 326);
a benzophenone-based compound such as 2-hydroxy-4-methoxybenzophenone (product name: SUMISORB 110) and 2-hydroxy-4-n-octoxybenzophenone (product name: SUMISORB 130);
a salicylate-based compound such as 4-t-butylphenyl salicylate (product name: SEESORB 202);
a cyanoacrylate-based compound such as ethyl(3,3-diphenyl)cyanoacrylate (product name: SEESORB 501);
a nickel chelate-based compound such as nickel dibutyldithiocarbamate (product name: ANTIGEN NBC); and
an inorganic fine particle-based compound such as $TiO_2$, $ZnO_2$ and $CeO_2$.

As the light stabilizer, a hindered amine-based compound is generally used, which is referred to as "HALS". HALS has a 2,2,6,6-tetramethylpiperidine skeleton. It cannot absorb ultraviolet light; however, it suppresses light deterioration by its various kinds of functions. It is said that the main functions thereof are the following three functions: scavenging of radicals, decomposition of hydroxyperoxide compounds, and scavenging of heavy metals that can accelerate the decomposition of hydroxyperoxide.

For example, typical compounds as the HALS are as follows:

a sebacate-type compound such as bis(2,2,6,6-tetramethyl-4-piperidyl)sebacate (product names: ADK STAB LA-77, SANOL LS-770) and bis(1,2,2,6,6-pentamethyl-4-piperidyl)sebacate (product name: SANOL LS-765);
a butanetetracarboxylate-type compound such as tetrakis(2,2,6,6-tetramethyl-4-piperidyl)-1,2,3,4-butanetetracarboxylate (product name: ADK STAB LA-57), tetrakis(1,2,2,6,6-pentamethyl-4-piperidyl)-1,2,3,4-butanetetracarboxylate (product name: ADK STAB LA-52), a condensate of 1,2,3,4-butanetetracarboxylic acid, 2,2,6,6-tetramethyl-4-piperidinol and tridecylalcohol (product name: ADK STAB LA-67) and a condensate of 1,2,3,4-butanetetracarboxylic acid, 1,2,2,6,6-pentamethyl-4-piperidinol and tridecylalcohol (product name: ADK STAB LA-62);
a succinic acid polyester-type compound such as a condensation polymer of succinic acid and 1-(2-hydroxyethyl)-4-hydroxy-2,2,6,6-tetramethylpiperidine; and
a triazine-type compound such as N,N'-bis(3-aminopropyl)ethylenediamine 2,4-bis{N-butyl-N-(1,2,2,6,6-pentamethyl-4-piperidyl)amino}-6-chloro-1,3,5-triazine condensate (product name: CHIMASORB 199), poly{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino} (product name: CHIMASORB 944) and poly(6-morpholino-s-triazine-2,4-diyl){(2,2,6,6-tetramethyl-4-piperidyl)imino}hexamethylene{(2,2,6,6-tetramethyl-4-piperidyl)imino} (product name: CHIMASORB 3346).

I-1-4-2-2. Other polymers

A modifier can be appropriately added to the polypropylene-based resin composition of the present invention, such as an elastomer and a polyethylene-based resin, both of which are applicable to polypropylene-based resins.

As the elastomer, examples include, but are not limited to, an ethylene/$\alpha$-olefin copolymer, a binary random copolymer resin of a propylene and an $\alpha$-olefin containing 4 to 12 carbon atoms, and a ternary random copolymer resin of a propylene, an ethylene and an $\alpha$-olefin containing 4 to 12 carbon atoms.

In addition, a styrene-based elastomer can be added. The styrene-based elastomer can be appropriately selected from commercially-available, styrene-based elastomers. As the commercially-available, styrene-based elastomers, examples include, but are not limited to, a hydrogenation product of a styrene-butadiene block copolymer, such as KRATON G (product name, manufactured by Kraton Polymers Japan Ltd.) and TUFTEC (product name, manufactured by Asahi Kasei Corporation); a hydrogenation product of a styrene-isoprene block copolymer, such as SEPTON (product name, manufactured by Kuraray Co., Ltd.); a hydrogenation product of a styrene-vinyl-polyisoprene block copolymer, such as HYBRAR (product name, manufactured by Kuraray Co., Ltd.); and a hydrogenation product of a styrene-butadiene random copolymer, such as DYNARON (product name, manufactured by JSR Corporation). The styrene-based elastomer may be appropriately selected from these products.

As the polyethylene-based resin, examples include, but are not limited to, an ethylene/$\alpha$-olefin copolymer such as a low-density polyethylene and a linear low-density polyethylene. The density of the polyethylene-based resin is preferably in a range of from 0.860 $g/cm^3$ to 0.910 $g/cm^3$, more preferably from 0.870 $g/cm^3$ to 0.905 $g/cm^3$, and still more preferably from 0.875 $g/cm^3$ to 0.895 $g/cm^3$. When the density is outside the ranges, a decrease in transparency may occur.

The density is a value measured at 23°C in accordance with JIS K7112.

The $\alpha$-olefin used in the ethylene/$\alpha$-olefin copolymer is preferably an $\alpha$-olefin containing 3 to 18 carbon atoms. As the $\alpha$-olefin, examples include, but are not limited to, propylene, 1-butene, 1-pentene, 1-hexene, 1-octene, 1-heptene, 4-methylpentene-1, 4-methyl-hexene-1 and 4,4-dimethylpentene-1. They may be used solely or in combination of two or more kinds.

As the ethylene/α-olefin copolymer, examples include, but are not limited to, an ethylene-based elastomer and an ethylenepropylene-based rubber. The ethylene/α-olefin copolymer is particularly preferably an ethylene/α-olefin copolymer referred to as a "metallocene-based polyethylene", which is produced by use of a metallocene-based catalyst that is less likely to cause a decrease in transparency.

In the case of adding the polyethylene-based resin and the like, the amount is preferably from 5 parts by mass to 35 parts by mass, more preferably from 6 parts by mass to 30 parts by mass, and still more preferably from 7 parts by mass to 25 parts by mass, with respect to the total amount (100 parts by mass) of the resins (X1), (X2) and (Y).

The polypropylene-based resin composition of the present invention contains the resins (X1), (X2) and (Y) in the total of 100 parts by mass. As needed, the polypropylene-based resin composition further contains other components that do not impair the effects of the present invention. As the method for mixing them, examples include, but are not limited to, the following two kinds of methods: mixing them by a HENSCHEL MIXER, a V blender, a ribbon blender, a tumbler blender or the like, and melt-kneading them by a mixing and kneading device such as a single screw extruder, a multi-screw extruder, a kneader and a banbury mixer, as needed. The method for mixing them is not particularly limited, as long as the effects of the present invention are not impaired.

I-1-4-3. Applications of the polypropylene-based resin composition

The polypropylene-based resin composition of the present invention can be used to produce various kinds of molded products, by appropriately molding the resin composition into a desired form, using a means such as pressure molding, film molding, vacuum molding, extrusion molding, extrusion lamination molding, foam molding, blow molding and injection molding.

The polypropylene-based resin composition of the present invention is preferably used as a resin composition for extrusion lamination.

The polypropylene-based resin composition of the present invention is preferably used to produce a laminate, by melt-extrusion lamination processing (extrusion lamination) of the resin composition on a surface of a substrate.

The extrusion lamination processing is a molding method in which a melted resin film is extruded from a T-die, and the extruded resin film is continuously applied on and attached to a surface of a substrate produced in advance, thereby coating the surface with the resin film and attaching the resin film to the surface at the same time. In general, lamination processing is carried out on one surface of the substrate. As needed, it can be carried out on both surfaces of the substrate.

I-2. Method for producing the polypropylene-based resin composition

The polypropylene-based resin composition production method of the present invention is a method for producing a polypropylene-based resin composition, the method comprising:

a step of obtaining a polypropylene resin (X1) having the above-mentioned properties (X1-1) to (X1-6),
a step of obtaining a polypropylene resin (X2) having the above-mentioned properties (X2-1) to (X2-6), and
a step of mixing or melt-kneading the polypropylene resin (X1) and the polypropylene resin (X2).

A preferred embodiment of the polypropylene-based resin composition of the present invention may be such that the method further comprises a step of obtaining a polypropylene-based resin (Y) having the above-mentioned properties (Y-1) and (Y-2), and the mixing or melt-kneading step is a step of mixing or melt-kneading the polypropylene resin (X1), the polypropylene resin (X2) and the polypropylene-based resin (Y).

A more preferred embodiment of the mixing or melt-kneading step may be a step of mixing or melt-kneading 2 mass % to 30 mass % of the polypropylene resin (X1), 5 mass % to 98 mass % of the polypropylene resin (X2) and 0 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-1 of the polypropylene-based resin composition.

A still more preferred embodiment of the mixing or melt-kneading step may be a step of mixing or melt-kneading 5 mass % to 30 mass % of the polypropylene resin (X1), 5 mass % to 50 mass % of the polypropylene resin (X2) and 20 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-2 of the polypropylene-based resin composition.

The method for obtaining the polypropylene resin (X1) is not particularly limited, and the polypropylene resin (X1) can be produced by the method described above in "Method for producing the polypropylene resin (X1)".

The method for obtaining the polypropylene resin (X2) is not particularly limited, and the polypropylene resin (X2) can be produced by the method described above in "Method for producing the polypropylene resin (X2)".

The method for obtaining the polypropylene-based resin (Y) is not particularly limited, and the polypropylene-based resin (Y) can be produced by the method described above in "Method for producing the polypropylene-based resin (Y)".

The method for mixing the polypropylene resin (X1), the polypropylene resin (X2) and, as needed, the polypropylene-based resin (Y) is not particularly limited. As the method for mixing them, examples include, but are not limited to, mixing them by a HENSCHEL MIXER, a V blender, a ribbon blender, a tumbler blender or the like.

The method for melt-kneading the polypropylene resin (X1), the polypropylene resin (X2) and, as needed, the polypropylene-based resin (Y) is not particularly limited. As the method for melt-kneading them, examples include, but are not limited to, melt-kneading them by a mixing and kneading device such as a single screw extruder, a multi-screw extruder, a kneader and a banbury mixer.

The percentages of the polypropylene resin (X1), the polypropylene resin (X2) and the polypropylene-based resin (Y) may be the same as the percentages described above in "Percentages of the polypropylene resin (X1), the polypropylene resin (X2) and the polypropylene-based resin (Y)".

The applications of the polypropylene-based resin composition produced as described above, may be the same as the applications described above in "Applications of the polypropylene-based resin composition".

I-3. Laminate

The laminate of the present invention is a laminate comprising a substrate layer and a polypropylene-based resin composition layer,

wherein the polypropylene-based resin composition layer comprises a polypropylene resin (X1) having the above-mentioned properties (X1-1) to (X1-6) and a polypropylene resin (X2) having the above-mentioned properties (X2-1) to (X2-6).

In the laminate of the present invention, a preferred embodiment of the polypropylene-based resin composition layer may be such that the polypropylene-based resin composition layer further comprises a polypropylene-based resin (Y) having the above-mentioned properties (Y-1) and (Y-2).

A more preferred embodiment of the polypropylene-based resin composition layer may be such that the polypropylene-based resin composition layer comprises 2 mass % to 30 mass % of the polypropylene resin (X1), 5 mass % to 98 mass % of the polypropylene resin (X2) and 0 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-1 of the polypropylene-based resin composition.

A still more preferred embodiment of the polypropylene-based resin composition layer may be such that the polypropylene-based resin composition layer comprises 5 mass % to 30 mass % of the polypropylene resin (X1), 5 mass % to 50 mass % of the polypropylene resin (X2) and 20 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-2 of the polypropylene-based resin composition.

The percentages of the polypropylene resin (X1), the polypropylene resin (X2) and the polypropylene-based resin (Y) may be the same as the percentages described above in "Percentages of the polypropylene resin (X1), the polypropylene resin (X2) and the polypropylene-based resin (Y)".

As the substrate used as the substrate layer, examples include, but are not limited to, a film or sheet made of a thermoplastic resin such as polyester resin (e.g., polyethylene terephthalate, polybutylene terephthalate), a saponified ethylene/vinyl acetate copolymer, polyvinyl chloride, polyvinylidene chloride, polyethylene, polypropylene, poly 4-methyl-1-pentene, polycarbonate resin, and polyamide resin (e.g., polyamide 6, polyamide 66, polyamide 6/66, polyamide 12), a paper, and a metal foil such as an aluminum foil and an iron foil.

The thermoplastic resin film or sheet may be a uniaxially or biaxially oriented resin film or sheet. A biaxially oriented polypropylene film is particularly preferred. Also, a laminate of a biaxially oriented polypropylene film and a paper is preferred.

In general, the thickness of the substrate layer is from about 5 $\mu$m to about 100 um.

As the method for laminating the substrate layer and the polypropylene-based resin composition layer, examples include, but are not limited to, an extrusion lamination method, a coextrusion film method, a dry lamination method, a wet lamination method, a hot-melt lamination method and a thermal lamination method.

The form of the substrate is not limited to a film or sheet form, and it may be a woven or non-woven fabric form. The substrate may have a single-layered or multi-layered structure. The method for producing the multi-layered substrate is not particularly limited. As the method, examples include, but are not limited to, a coextrusion film method, a dry lamination method, a wet lamination method, a hot-melt lamination method, an extrusion lamination method and a thermal lamination method.

Various kinds of film processing treatments may be carried out on the substrate in advance, such as anchor coating, metal evaporation, corona discharge treatment and printing.

The laminate of the present invention can be suitably used in applications such as packaging of various kinds of foods, beverages, medicines, medical supplies, cosmetic products, clothes, stationery, building materials, batteries, paper products and other industrial materials.

I-4. Method for producing the laminate

The laminate production method of the present invention is a method for producing a laminate comprising a substrate layer and a polypropylene-based resin composition layer, the method comprising a step of forming the polypropylene-based resin composition layer by extrusion lamination of a mixture or melt-kneaded product of a polypropylene resin (X1) having the above-mentioned properties (X1-1) to (X1-6) and a polypropylene resin (X2) having the above-mentioned properties (X2-1) to (X2-6) on at least one surface of the substrate layer.

A preferred embodiment of the step of forming the polypropylene-based resin composition layer may be a step of forming the polypropylene-based resin composition layer by extrusion lamination of a mixture or melt-kneaded product of the polypropylene resin (X1), the polypropylene resin (X2) and a polypropylene-based resin (Y) having the above-mentioned properties (Y-1) and (Y-2) on at least one surface of the substrate layer.

A more preferred embodiment of the step of forming the polypropylene-based resin composition layer may be a step of forming the polypropylene-based resin composition layer by extrusion lamination of the mixture or melt-kneaded product of 2 mass % to 30 mass % of the polypropylene resin (X1), 5 mass % to 98 mass % of the polypropylene resin (X2) and 0 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-1 of the polypropylene-based resin composition.

A still more preferred embodiment of the step of forming the polypropylene-based resin composition layer may be a step of forming the polypropylene-based resin composition layer by extrusion lamination of the mixture or melt-kneaded product of 5 mass % to 30 mass % of the polypropylene resin (X1), 5 mass % to 50 mass % of the polypropylene resin (X2) and 20 mass % to 80 mass % of the polypropylene-based resin (Y), wherein the total amount of the polypropylene resin (X1), the polypropylene resin (X2) and the polypropylene-based resin (Y) is 100 mass %. In this case, the polypropylene resins (X1) and (X2) may be the same as the polypropylene resins (X1) and (X2) described in the preferred embodiment 1-2 of the polypropylene-based resin composition.

As the substrate layer, examples include, but are not limited to, the substrate layer described above in "I-3. Laminate".

As the method for mixing the polypropylene resin (X1), the polypropylene resin (X2) and the polypropylene-based resin (Y) and the method for melt-kneading them, examples include, but are not limited to, the methods described above in "1-2. Method for producing the polypropylene-based resin composition".

The percentages of the polypropylene resin (X1), the polypropylene resin (X2) and the polypropylene-based resin (Y) may be the same as the percentages described above in "Percentages of the polypropylene resin (X1), the polypropylene resin (X2) and the polypropylene-based resin (Y)".

In the case of extrusion lamination of the polypropylene-based resin composition of the present invention, which contains the polypropylene resin (X1), the polypropylene resin (X2) and the polypropylene-based resin (Y), on the substrate layer, the melt extrusion temperature of the resin composition is generally from 180°C to 320°C, and preferably from 200°C to 310°C. When the melt extrusion temperature is more than 320°C, a decrease in moldability may occur.

The extrusion lamination molding rate directly has a direct influence on productivity. Accordingly, it is preferably 200 m/min or more, and more preferably 210 m/min or more.

To introduce a polar group, ozonation treatment may be carried out on the surface of the melted film of the polypropylene-based resin composition of the present invention. The ozonation treatment amount is preferably from 0.01 g/m$^2$ to 1 g/m$^2$, with respect to the surface area of the melted film.

In general, extrusion lamination is carried out on one surface of the substrate layer. As needed, extrusion lamination can be carried out on both surfaces of the substrate.

The thickness of the polypropylene-based resin composition layer thus formed, is generally from 1 um to 250 $\mu$m, preferably from 3 um to 200 $\mu$m, and particularly preferably from 5 $\mu$m to 150 um.

In addition, various kinds of film processing treatments such as metal evaporation, corona discharge treatment and printing can be carried out on the laminate obtained by extrusion lamination processing.

II. Second embodiment

II-1. Polypropylene-based resin composition

The polypropylene-based resin composition of the present invention is a polypropylene-based resin composition comprising 20 mass % to 80 mass % of a polypropylene resin (X) having the following properties (X-1) to (X-6) and 20 mass % to 80 mass % of a polypropylene-based resin (Y) having the following properties (Y-1) and (Y-2), wherein the total amount of the polypropylene resin (X) and the polypropylene-based resin (Y) is 100 mass %:

(X-1) an MFR (230°C, load 2.16 kgf) is more than 10 g/10 min and 70 g/10 min or less,
(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X-3) in an integral molecular weight distribution curve obtained by GPC, a percentage ($W_{1M}$) of a component having a molecular weight of 1,000,000 or more, is 0.5 mass % or more and 4.0 mass % or less,
(X-4) a melt tension (MT170°C) (unit: g) measured at 170°C satisfies the following requirement (Formula 1):

$$\log(\text{MT170}°\text{C}) \geq -1.1 \times \log(\text{MFR}) + 2.0 \qquad (\text{Formula 1}),$$

(X-5) a branching index g' ($Mz_{abs}$) obtained by GPC is 0.70 or more and 0.95 or less,
(X-6) a triad fraction (mm) of propylene unit triad sequences obtained by $^{13}$C-NMR, is 95% or more,
(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(\text{MT170}°\text{C}) < -1.1 \times \log(\text{MFR}) + 2.0 \qquad (\text{Formula A}).$$

The polypropylene-based resin composition of the second embodiment of the present invention exhibits small neck-in in high-temperature extrusion molding at 290°C or more, for example, and it has excellent high-speed extrusion lamination processability at a molding rate of 150 m/min or more, for example. The laminate obtained by using the polypropylene-based resin composition has excellent transparency.

II-1-1. Polypropylene resin (X)

The polypropylene resin (X) has the properties (X-1) to (X-6).

II-1-1-1. Property (X-1)

The property (X-1) is such that the MFR (230°C, load 2.16 kgf) is more than 10 g/10 min and 70 g/10 min or less.
The MFR is an index of melt fluidity. This value decreases as the molecular weight of a polymer increases. On the other hand, this value increases as the molecular weight decreases.
The MFR is more than 10 g/10 min, preferably 15 g/10 min or more, and more preferably 16 g/10 min or more, from the point of view that excellent melt fluidity is obtained and load on an extruder is easily suppressed in extrusion molding. The MFR may be 20 g/10 min or more, or it may be more than 30 g/10 min.
On the other hand, the MFR is 70 g/10 min or less, preferably 60 g/10 min or less, and more preferably 50 g/10 min or less, from the point of view that excellent melt tension and excellent moldability (e.g., extrusion lamination moldability) are obtained.
In the present invention, the melt flow rate (MFR) is a value measured in accordance with "JIS K7210: Plastics - Determination of the melt mass-flow rate (MFR) and the melt volume-flow rate (MVR) of thermoplastics" and in the following test condition: 230°C and a load of 2.16 kgf.
The melt flow rate (MFR) can be easily adjusted by changing the polymerization temperature or pressure, or by a general method such as adding a chain transfer agent (e.g., hydrogen) during polymerization.

II-1-1-2. Property (X-2)

The property (X-2) is such that the ratio (Mw/Mn) between the weight average molecular weight (Mw) and the number average molecular weight (Mn), both of which are obtained by GPC, is 2.0 or more and 5.0 or less, and the ratio (Mz/Mw) between the Z average molecular weight (Mz) and the weight average molecular weight (Mw), both of which are obtained by GPC, is 2.0 or more and 5.0 or less.

The Mw/Mn is an index of the extent of molecular weight distribution. It means that as the Mw/Mn increases, the molecular weight distribution widens. When the Mw/Mn is too small, there is a possibility that the amount of the low-molecular-weight component decreases, and the melt fluidity deteriorates. Accordingly, the Mw/Mn is 2.0 or more, and it is preferably 2.1 or more, and more preferably 2.2 or more. On the other hand, when the Mw/Mn is too large, there is a possibility that the amount of the high-molecular-weight component relatively increases, and the melt fluidity deteriorates. Accordingly, the Mw/Mn is 5.0 or less, and it is preferably 4.6 or less, and more preferably 4.2 or less.

As with the Mw/Mn, the Mz/Mw is an index of the extent of molecular weight distribution, and it is an index of the extent of the high-molecular-weight side compared to the Mw/Mn. It means that as the Mz/Mw increases, the molecular weight distribution extends to the high-molecular-weight side. When the Mz/Mw is too small, there is a possibility that the amount of the high-molecular-weight component decreases, and the melt tension decreases. Accordingly, the Mz/Mw is 2.0 or more, and it is preferably 2.1 or more, and more preferably 2.2 or more. On the other hand, when the Mz/Mw is too large, there is a possibility that the amount of the high-molecular-weight component relatively increases, and the melt fluidity deteriorates. Accordingly, the Mz/Mw is 5.0 or less, and it is preferably 4.5 or less, and more preferably 4.3 or less. The Mz/Mw may be 4.0 or less.

The average molecular weights and molecular weight distributions (Mz, Mw, Mn, Mw/Mn and Mz/Mw) of the polypropylene resin (X) measured by GPC, can be easily adjusted by changing the propylene polymerization temperature or pressure condition, or they can be easily adjusted by a most general method such as adding a chain transfer agent (e.g., hydrogen) during propylene polymerization. The average molecular weights and molecular weight distributions can be adjusted by changing the type of a metallocene complex used and by changing the amounts and ratio of the complexes when two or more kinds of complexes are used.

From the viewpoint of balance between melt fluidity and melt tension, the Mw of the polypropylene resin (X) of the present invention is preferably 160000 or more and 280000 or less. From the viewpoint of melt tension, the Mw is more preferably 170000 or more, and still more preferably 180000 or more. From the viewpoint of melt fluidity, the Mw is more preferably 260000 or less, and still more preferably 240000.

II-1-1-3. Property (X-3)

The Property (X-3) is such that in the integral molecular weight distribution curve obtained by GPC, the percentage ($W_{1M}$) of a component having a molecular weight of 1,000,000 or more, is 0.5 mass % or more and 4.0 mass % or less.

As described above, there is a possibility that as the amount of the high-molecular-weight component decreases, the melt tension decreases. Accordingly, the $W_{1M}$ is 0.5 mass % or more, and it is preferably 1.0 mass % or more, and more preferably 1.5 mass % or more.

On the other hand, when the $W_{1M}$ increases, the melt fluidity may decrease. In addition, there is a problem in that many fisheyes are formed and affect the appearance of the molded product. Accordingly, the $W_{1M}$ is less than 4.0 mass %, preferably 3.5 mass % or less, and more preferably 3.2 mass % or less. The $W_{1M}$ may be 3.0 mass % or less.

In the present invention, the $W_{1M}$ is defined as a value obtained as follows. In the integral molecular weight distribution curve obtained by GPC (the whole amount is normalized to 1), an integral value until the molecular weight (M) reaches 1,000,000 (log(M) = 6.0) is subtracted from 1. The thus-obtained value is multiplied by 100, and the resulting value is defined as $W_{1M}$.

The $W_{1M}$ can be easily adjusted as follows. For example, in the method in which a catalyst containing several metallocene complexes are used, a metallocene complex that can produce a high-molecular-weight polymer, is selected as one of the metallocene complexes used, and then the amount and ratio of the selected metallocene complex with respect to other metallocene complexes that produce the low-molecular-weight side, the amount of hydrogen added during polymerization, and polymerization temperature are controlled, thereby easily adjusting the $W_{1M}$.

The above-defined Mz, Mw, Mn, Mw/Mn, Mz/Mw and $W_{1M}$ values are obtained by gel permeation chromatography (GPC). The methods and devices used to measure them are as follows.

Device: GPC (ALC/GPC, 150C) manufactured by Waters
Detector: IR detector MIRAN 1A manufactured by FOXBORO (Measurement wavelength: 3.42 um)
Column: AD806M/S (three sets) manufactured by Showa Denko K. K.
Mobile phase solvent: o-Dichlorobenzene (ODCB)
Measurement temperature: 140°C
Flow rate: 1.0 mL/min
Injected amount: 0.2 mL

Measurement sample preparation is carried out as follows: a solution (1 mg/mL) is prepared by use of a sample and ODCB (containing 0.5 mg/mL of dibutylhydroxytoluene (BHT)). The sample is dissolved at 140°C for one hour, thereby preparing the measurement sample.

A retention capacity obtained by GPC is converted into a molecular weight by use of a calibration curve prepared preliminarily with standard polystyrenes. The standard polystyrenes used are the following products manufactured by Tosoh Corporation: F380, F288, F128, F80, F40, F20, F10, F4, F1, A5000, A2500 and A1000.

A calibration curve is created by injecting 0.2 mL of a solution in which the standard polystyrenes are dissolved in ODCB (containing 0.5 mg/mL of BHT) so that they are 0.5 mg/mL each. The calibration curve uses a cubic equation obtained by approximation by the least-squares method.

A viscosity equation used for the conversion into the molecular weight, $[\eta] = K \times M^{\alpha}$, uses the following numerical values.

$$PS: K = 1.38 \times 10^{-4}, \ \alpha = 0.7$$

$$PP: K = 1.03 \times 10^{-4}, \ \alpha = 0.78$$

II-1-1-4. Property (X-4)

The property (X-4) is such that the melt tension (MT170°C) (unit: g) measured at 170°C satisfies the following requirement (Formula 1):

$$\log(MT170°C) \geq -1.1 \times \log(MFR) + 2.0 \quad (\text{Formula 1}).$$

In the above formula, MT170°C means a melt tension obtained by measurement in the following condition, using CAPILOGRAPH 1B (manufactured by Toyo Seiki Seisaku-sho, Ltd.), and the unit is gram (g).

Capillary: Diameter 2.0 mm, Length 40 mm
Cylinder diameter: 9.55 mm
Cylinder extrusion speed: 20 mm/min
Drawing speed: 4.0 m/min
Temperature: 170°C

In "Examples" described later, MT230°C means a melt tension obtained by measurement in the above condition, except for the temperature (temperature: 230°C). However, when the MT of the sample is very high, the resin may break at a drawing speed of 4.0 m/min. In this case, the drawing speed is decreased, and the tension at the maximum speed at which the resin can be drawn, is defined as the MT. The measurement condition and unit of the MFR are as described above.

This definition is an index to indicate that the polypropylene resin (X) has sufficient melt tension. Since the MT generally correlates with the MFR, the MT is represented by the relation with the MFR.

Once the Formula 1 is satisfied, the polypropylene resin (X) can obtain the effect of reducing neck-in. In addition, an uneven film thickness phenomenon and an instability phenomenon due to edge expansion and contraction, each of which is referred to as a "resonance phenomenon", are suppressed since stress uniformly propagates through a melted film. It is more preferable that the following Formula 2 is satisfied, and it is still more preferable that the following Formula 3 is satisfied.

$$\log(MT170°C) \geq -1.1 \times \log(MFR) + 2.3 \quad (\text{Formula 2})$$

$$\log(MT170°C) \geq -1.1 \times \log(MFR) + 2.5 \quad (\text{Formula 3})$$

It is not needed to determine the upper limit of the MT. When the MT is more than 50 g, however, the drawing speed becomes markedly slow, and the measurement by the above method becomes difficult. In this case, it is thought that the ductility of the resin is also reduced. Accordingly, the upper limit of the MT is preferably 45 g or less, more preferably 40 g or less, still more preferably 35 g or less, and even more preferably 30 g or less.

To satisfy the requirement (Formula 1), for example, the melt tension may be increased by increasing the amount of the long-chain branch of the polypropylene resin (X). It is possible by introducing a large amount of long-chain branch by controlling the selection of preferred metallocene catalysts described below, the combination thereof, the amounts and ratio thereof, and the condition of preliminary polymerization.

II-1-1-5. Property (X-5)

The property (X-5) is such that the branching index g' ($Mz_{abs}$) obtained by GPC is 0.70 or more and 0.95 or less.

As a direct index to indicate that the polypropylene resin (X) has a branch, the branching index g' can be used. The branching index g' is given by the ratio of the intrinsic viscosity [η]br of the polymer having a long-chain branched structure to the intrinsic viscosity [η]lin of a linear polymer having the same molecular weight as the above polymer, that is, [η]br/[η]lin. When the long-chain branched structure exists, the branching index g' is a value less than 1. That is, it means that the polypropylene having a branching index less than 1 (g'<1) is the "long-chain branched polypropylene".

The definition is described in, for example, "Developments in Polymer Characterization-4" (J. V. Dawkins ed. Applied Science Publishers, 1983), and the branching index is an index heretofore known to those skilled in the art.

The branching index g' can be obtained as the function of an absolute molecular weight Mabs by use of a GPC equipped with a light scatterometer and a viscometer as described below.

For the polypropylene resin (X) used in the present invention, the branching index g'($Mz_{abs}$) at the Z average molecular weight $Mz_{abs}$ of the absolute molecular weight Mabs obtained by light scattering, is preferably 0.72 or more, more preferably 0.73 or more, and still more preferably 0.75 or more, and even more preferably 0.80 or more. On the other hand, it is preferably 0.90 or less, more preferably 0.88 or less, and still more preferably 0.85 or less.

The polypropylene resin (X) is preferably a branched polymer having a comb-like chain structure, from the following point of view: the degree of decrease in melt tension is small when mixed and kneaded at a high temperature of 290°C or more or when repeatedly mixed and kneaded, and a decrease in extrusion lamination moldability (increased neck-in or a resonance phenomenon during low-speed drawing) is less likely to occur.

The detailed method for calculating the branching index g' is as follows.

As a GPC device equipped with a refractive index detector (RI) and a viscometer, ALLIANCE GPCV2000 (manufactured by Waters Corporation) is used. As a light scattering detector, multi-angle laser light scattering detector (MALLS) DAWN-E (manufactured by Wyatt Technology) is used. The detectors are connected in the order of the MALLS, the RI and the viscometer. As a mobile phase solvent, 1,2,4-trichlorobenzene is used, to which antioxidant IRGANOX 1076 (manufactured by BASF Japan) is added at a concentration of 0.5 mg/mL.

The flow rate is set to 1 mL/min. Two GMHHR-H(S) HT columns (manufactured by Tosoh Corporation) are connected and used. The temperature of the columns, that of a sample injector and that of the detectors are 140°C. The concentration of the sample is set to 1 mg/mL, and the injection volume (the volume of a sample loop) is 0.2175 mL.

To obtain the absolute molecular weight(Mabs) and root-mean-square radius of gyration(Rg) obtained from the MALLS and the intrinsic viscosity ([η]) obtained from the viscometer, calculation is carried out by reference to the following references, using ASTRA version 4.73.04 (data processing software included in the MALLS).

References:

1. "Developments in Polymer Characterization-4" (J. V. Dawkins ed. Applied Science Publishers, 1983. Chapter 1.)
2. Polymer, 45, 6495-6505 (2004)
3. Macromolecules, 33, 2424-2436 (2000)
4. Macromolecules, 33, 6945-6952 (2000)

[Calculation of branching index (g')]

The branching index (g') is calculated as the ratio ([η]br/[η]lin) of the intrinsic viscosity ([n]br) obtained by measuring the sample by the viscometer to the intrinsic viscosity ([η]lin) separately obtained by measuring the linear polymer.

When the long-chain branched structure is introduced in the polymer molecule, the radius of gyration decreases compared to the linear polymer molecule having the same molecular weight. As the radius of gyration decreases, the intrinsic viscosity also decreases. Accordingly, as the long-chain branched structure is introduced, the ratio ([η]br/[η]lin) of the intrinsic viscosity ([η]br) of the branched polymer to the intrinsic viscosity ([η]lin) of the linear polymer having the same molecular weight, becomes small.

Accordingly, when the branching index (g' = [η]br/[η]lin) is a value less than 1, it means that the polymer molecule has the long-chain branched structure.

As the linear polymer used to obtain the intrinsic viscosity [η]lin, a commercially-available homopolypropylene (NOVATEC-PP (registered trademark) manufactured by Japan Polypropylene Corporation, grade FY6) is used. The fact that the log of the linear polymer [η]lin has a linear relationship with the log of the molecular weight, is known as the Mark-Houwink-Sakurada equation. Accordingly, the [η]lin value can be obtained by appropriate extrapolation into the low-molecular-weight side or the high-molecular-weight side.

The branching index g' can be adjusted to 0.70 or more and 0.95 or less by introducing a large amount of long-chain branch. For example, it can be adjusted by controlling the selection of preferred metallocene catalysts, the combination thereof, the amounts and ratio thereof, and the condition of preliminary polymerization.

II-1-1-6. Property (X-6)

The property (X-6) is such that the triad fraction (mm) of the propylene unit triad sequences obtained by $^{13}$C-NMR, is 95% or more (hereinafter, the triad fraction may be referred to as "mm fraction").

The polypropylene resin (X) of the present invention preferably has high stereoregularity. The degree of the stereoregularity can be evaluated by $^{13}$C-NMR. The polypropylene resin (X) preferably has such stereoregularity, that the mm fraction of the propylene unit triad sequences obtained by $^{13}$C-NMR, is 95% or more.

The mm fraction is the percentage of the propylene unit triad sequences in which the direction of a methyl branch in each propylene unit is the same as that in arbitrary propylene unit triad sequences composed of head-to-tail bonds in the polymer chain. Accordingly, the upper limit is 100%. The mm fraction is a value indicating that the steric structure of the methyl group in the polypropylene molecular chain is isotactically controlled, and it means that the steric structure is highly controlled when the mm fraction is high. When the mm fraction is less than the value, there is a tendency that the elastic modulus of the product decreases, and the effect of imparting surface scratch resistance to the polypropylene-based resin composition layer of the laminate may deteriorate.

Accordingly, the mm fraction is 95% or more, preferably 96% or more, and more preferably 97% or more.

The details of the method for measuring the mm fraction of the propylene unit triad sequences are as follows. First, 375 mg of a sample is completely dissolved in 2.5 ml of deuterated 1,1,2,2-tetrachloroethane in an NMR sample tube (10 φ). Then, measurement is carried out at 125°C by a complete proton decoupling method. The chemical shift of the three peaks of the deuterated 1,1,2,2-tetrachloroethane is such that the central peak of the three peaks is set to 74.2 ppm. The chemical shifts of other carbon peaks are based on this.

- Flip angle: 90°
- Pulse interval: 10 seconds
- Resonant frequency: 100 MHz or more
- Accumulation times: 10,000 or more
- Observation range: from -20 ppm to 179 ppm
- Number of data points: 32768 points

The mm fraction of the propylene unit triad sequences is obtained by substituting the integrated intensity of a 13C signal measured by $^{13}$C-NMR into the following formula:

$$\mathrm{mm}\ (\%)\ =\ \mathrm{Imm}\ \times\ 100\ /\ (\mathrm{Imm}\ +\ 3\ \times\ \mathrm{Imrrm})$$

where Imm and Imrrm are the following amounts: $\mathrm{Imm} = I_{23.6-21.1}$ and $\mathrm{Imrrm} = I_{19.8-19.7}$.

The $^{13}$C-NMR measurement method for obtaining the mm fraction of the propylene unit triad sequences can be carried out by the same method as the above-mentioned measurement.

Spectrum assignment can be carried out with reference to the following:

"Polymer Journal", volume 16, p. 717 (1984), Asakura Shoten Publishing Co., Ltd.
"Macromolecules", volume 8, p. 687 (1975), and
"Polymer", volume 30, p. 1350 (1989).

The mm fraction can be adjusted to 95% or more by a polymerization catalyst that can provide a high-crystalline polymer. It is possible by polymerization using preferred metallocene catalysts described later.

II-1-1-7. Method for producing the polypropylene resin (X)

The method for producing the polypropylene resin (X) is not particularly limited, as long as the polypropylene resin (X) satisfies the above-described properties (X-1) to (X-6). From the viewpoint of satisfying the above-described conditions such as the high stereoregularity, the relatively wide molecular weight distribution, the range of the branching index g'(Mz$_{abs}$) and the high melt tension, a preferred production method is a method that uses a macromer copolymerization method using a combination of metallocene catalysts. As the method, examples include, but are not limited to, the method disclosed in JP-A No. 2009-57542. This is a method for producing polypropylene having a long-chain branched structure, by use of a catalyst obtained by combining a catalyst component of specific structure, which has a macromer forming ability, and a catalyst component of specific structure, which has a macromer copolymerizing ability. According to this, a polypropylene resin having a long-chain branched structure and target properties can be produced by an industrially effective method such as bulk polymerization and gas phase polymerization, especially by single stage polymerization in a practical pressure temperature condition, using hydrogen as a molecular weight modifier.

The polypropylene resin (X) of the present invention may be a propylene homopolymer obtained by homopolymerization of a propylene monomer, or it may be a propylene/α-olefin copolymer obtained by copolymerization of a propylene monomer and a C2 to C20 α-olefin comonomer other than propylene, such as ethylene and/or 1-butene.

The form of the polypropylene resin (X) is not particularly limited. It may be a powder form or a particulate form (formed by a granulated powder).

As needed, the polypropylene resin (X) of the present invention may be mixed with additional components described later by a HENSCHEL MIXER, a V blender, a ribbon blender, a tumbler blender or the like. As needed, the mixed polypropylene resin (X) may be kneaded and granulated by a mixing and kneading device such as a single screw extruder, a multi-screw extruder, a kneader and a banbury mixer.

II-1-2. Polypropylene-based resin (Y)

The polypropylene-based resin (Y) has the properties (Y-1) and (Y-2).

II-1-2-1. Property (Y-1)

The property (Y-1) is such that the MFR (230°C, load 2.16 kgf) is 10 g/10 min or more and 50 g/10 min or less.

The MFR of the polypropylene-based resin (Y) is 10 g/10 min or more, and it is preferably 20 g/10 min or more, from the viewpoint of imparting excellent flowability to the polypropylene-based resin composition and suppressing the resonance phenomenon during extrusion lamination molding. On the other hand, the MFR of the polypropylene-based resin (Y) is 50 g/10 min or less, and it is preferably 45 g/10 min or less, from the viewpoint of imparting excellent melt tension and obtaining excellent product production efficiency.

The MFR of the polypropylene-based resin (Y) is easily adjusted by changing the propylene polymerization temperature or pressure condition, or it is easily adjusted by adding a chain transfer agent (e.g., hydrogen) during polymerization.

The polypropylene-based resin (Y) may be a polypropylene-based resin such that the MFR is adjusted by organic peroxide degradation after polymerizing the polypropylene-based resin.

As the organic peroxide used at that time, examples include, but are not limited to, benzoyl peroxide, di-t-butyl peroxide, dicumyl peroxide, t-butyl cumyl peroxide, 1,1-bis-(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, 2,5-dimethyl-2,5-di(t-butylperoxy)hexane, 2,5-dimethyl-2,5-di(benzoylperoxy)hexane, 2,5-dimethyl-2,5-di(t-butylperoxy)-3-hexyne, 1,3-bis(t-butylperoxy isopropyl)benzene, α,α'-bis(t-butylperoxy isopropyl)benzene, t-butyl-hydroperoxide, cumene hydroperoxide, lauroyl peroxide, di-t-butyl-diperoxy phthalate, t-butylperoxymaleic acid, t-butylperoxy isopropyl carbonate, and isopropyl percarbonate.

They can be used solely or in combination of two or more kinds. Among them, 2,5-dimethyl-2,5-di(t-butylperoxy)hexane, 2,5-dimethyl-2,5-di(t-butylperoxy)-3-hexyne, 1,3-bis(t-butylperoxy isopropyl)benzene, and α,α'-bis(t-butylperoxy isopropyl)benzene are particularly preferred.

To adjust the MFR, the degradation may be carried out as follows: the organic peroxide is preferably used in an amount of 0.005 to 0.1 parts by mass per 100 parts by mass of the resin or resin composition, and they are mixed and kneaded while heating them at a temperature equal to or more than the melting temperature of the resin, such as 180°C to 300°C. This degradation can be carried out by any method, and it is preferably carried out in an extruder. To uniformly disperse the organic peroxide in the polypropylene-based resin, they may be sufficiently mixed in advance by use of a mixer such as HENSCHEL MIXER and a ribbon blender. To increase the dispersibility of the organic peroxide, a mixture of the organic peroxide with an appropriate medium can be used. The polypropylene-based resin (Y) can be used in the present invention by satisfying the physical property requirements of the present invention after adjusting the MFR by the organic peroxide degradation.

II-1-2-2. Property (Y-2)

The property (Y-2) is such that the melt tension (MT170°C) (unit: g) measured at 170°C satisfies the following requirement (Formula A):

$$\log(MT170°C) < -1.1 × \log(MFR) + 2.0 \qquad (Formula\ A).$$

In the above formula, MT170°C means a melt tension obtained by measurement in the same manner as the measurement method used in "II-1-1. Polypropylene resin (X)", and the measurement condition and unit are as described above.

This definition is an index to indicate the melt tension of the polypropylene-based resin (Y). Since the MT generally correlates with the MFR, the MT is represented by the relation with the MFR.

By satisfying the Formula A, the polypropylene-based resin (Y) can impart flowability when mixed with the polypropylene resin (X). Accordingly, a molding failure phenomenon such as film rapture during molding, is suppressed.

II-1-2-3. Method for producing the polypropylene-based resin (Y)

The method for producing the polypropylene-based resin (Y) is not particularly limited. The polypropylene-based resin (Y) may be produced by use of a Ziegler-Natta catalyst, or it may be produced by use of a metallocene-based catalyst.

The Ziegler-Natta catalyst is a catalyst system as outlined in, for example, Section 2.3.1 (pages 20 to 57) in "Polypropylene Handbook" (edited by Edward P. Moore Jr., translated under the supervision of Tetsuo Yasuda and Mitsuru Sakuma, Kogyo Chosakai Publishing Co., Ltd. (1998)). For example, it refers to a titanium trichloride-based catalyst comprising titanium trichloride and a halogenated organoaluminum, a magnesium-supported catalyst comprising an organoaluminum, an organosilicon compound and a solid catalyst component containing magnesium chloride, titanium halide and an electron-donating compound, and a catalyst obtained by combining an organoaluminum compound component with an organosilicon-treated solid catalyst component formed by bringing a solid catalyst component in contact with an organoaluminum and an organosilicon compound.

As the metallocene catalyst, any known catalyst comprising (i) a transition metal compound of the Group 4 in the periodic table, which contains a ligand having a cyclopentadienyl skeleton (a so-called metallocene compound), (ii) a co-catalyst that can be activated to a stable ionic state by reaction with a metallocene compound and, as needed, (iii) an organoaluminum compound, can be used. The metallocene compound is preferably a crosslinked metallocene compound capable of stereoregular polymerization of propylene, and it is more preferably a crosslinked metallocene compound capable of isoregular polymerization of propylene.

As the (i)metallocene compound described above, for example, those disclosed in the following are preferably used: JP-A Nos. S60-35007, S61-130314, S63-295607, H1-275609, H2-41303, H2-131488, H2-76887, H3-163088, H4-300887, H4-211694, H5-43616, H5-209013, H6-239914, Japanese translation of PCT International Application No. H7-504934 and JP-A No. H8-85708.

As the metallocene compound, examples include, but are not limited to, the following zirconium compounds:

methylene bis(2-methylindenyl)zirconium dichloride,
ethylene bis(2-methylindenyl)zirconium dichloride,
ethylene 1,2-(4-phenylindenyl)(2-methyl-4-phenyl-4H-azulenyl)zirconium dichloride,
isopropylidene(cyclopentadienyl) (fluorenyl)zirconium dichloride,
isopropylidene(4-methylcyclopentadienyl) (3-t-butylindenyl)zirconium dichloride,
dimethylsilylene(2-methyl-4-t-butylcyclopentadienyl)(3'-t-butyl-5'-methylcyclopentadienyl)zirconium dichloride,
dimethylsilylene bis(indenyl)zirconium dichloride,
dimethylsilylene bis(4,5,6,7-tetrahydroindenyl)zirconium dichloride,
dimethylsilylene bis[1-(2-methyl-4-phenylindenyl)]zirconium dichloride,
dimethylsilylene bis[1-(2-ethyl-4-phenylindenyl)]zirconium dichloride,
dimethylsilylene bis[4-(1-phenyl-3-methylindenyl)]zirconium dichloride,
dimethylsilylene(fluorenyl)t-butylamide zirconium dichloride,
methylphenylsilylene bis[1-(2-methyl-4-(1-naphthyl)-indenyl)]zirconium dichloride,
dimethylsilylene bis[1-(2-methyl-4,5-benzoindenyl)]zirconium dichloride,
dimethylsilylene bis[1-(2-methyl-4-phenyl-4H-azulenyl)]zirconium dichloride,
dimethylsilylene bis[1-(2-ethyl-4-(4-chlorophenyl)-4H-azulenyl)]zirconium dichloride,
dimethylsilylene bis[1-(2-ethyl-4-naphthyl-4H-azulenyl)]zirconium dichloride,
diphenylsilylene bis[1-(2-methyl-4-(4-chlorophenyl)-4H-azulenyl)]zirconium dichloride,
dimethylsilylene bis[1-(2-ethyl-4-(3-fluorobiphenylyl)-4H-azulenyl)]zirconium dichloride,
dimethylgermylene bis[1-(2-ethyl-4-(4-chlorophenyl)-4H-azulenyl)]zirconium dichloride, and

dimethylgermylene bis[1-(2-ethyl-4-phenylindenyl)]zirconium dichloride.

Also, compounds obtained by substituting the zirconium in the above compounds by titanium or hafnium, can be used. Also, a mixture of a zirconium compound, a hafnium compound and so on is preferably used. The chloride in the above compounds can be substituted by another halogen compound, a hydrocarbon group such as methyl, isobutyl and benzyl, an amide group such as dimethylamide and diethylamide, an alkoxide group such as a methoxy group and a phenoxy group, a hydride group, or the like.

Among them, the metallocene compound in which the indenyl or azulenyl group is crosslinked by silicon or a germyl group, is particularly preferred.

The metallocene compound may be used by supporting it on an inorganic or organic compound carrier. As the carrier, an inorganic or organic porous compound is preferred. As the carrier, examples include, but are not limited to, an inorganic compound such as ion-exchange layered silicate, zeolite, $SiO_2$, $Al_2O_3$, silica-alumina, MgO, $ZrO_2$, $TiO_2$, $B_2O_3$, CaO, ZnO, BaO and $ThO_2$, an organic compound such as porous polyolefin, a styrenedivinylbenzene copolymer, an olefin-acrylic acid copolymer, and mixtures thereof.

As (ii) the co-catalyst that can be activated to a stable ionic state by reaction with the metallocene compound, for example, the following are preferred: an organoaluminum oxy compound (such as an aluminoxane compound), ion-exchange layered silicate, Lewis acid, a boron-containing compound, an ionic compound, and a fluorine-containing organic compound.

As the (iii) organoaluminum compound, for example, the following are preferred: trialkylaluminum such as triethylaluminum, triisopropylaluminum and triisobutylaluminum, dialkylaluminum halide, alkylaluminum sesquihalide, alkylaluminum dihalide, alkylaluminum hydride, and organoaluminum alkoxide.

Among them, the polypropylene homopolymer is preferably a polypropylene homopolymer produced by use of the Ziegler-Natta catalyst. As the propylene random copolymer, a propylene random copolymer produced by use of the metallocene-based catalyst, is preferably used.

The method for producing the polypropylene-based resin (Y) is not particularly limited. The polypropylene-based resin (Y) can be produced by any conventional polymerization method such as a slurry polymerization method, a bulk polymerization method and a gas phase polymerization method. Also, a polypropylene or propylene-based random copolymer can be produced by a multistage polymerization method, within the scope of the invention.

As needed, the polypropylene-based resin (Y) of the present invention may be mixed with additional components described later by a HENSCHEL MIXER, a V blender, a ribbon blender, a tumbler blender or the like. As needed, they may be mixed and kneaded by a mixing and kneading device such as a single screw extruder, a multi-screw extruder, a kneader and a banbury mixer.

The polypropylene-based resin (Y) may be a propylene homopolymer obtained by homopolymerization of a propylene monomer, or it may be a propylene/ethylene copolymer obtained by copolymerization of a propylene monomer and an ethylene comonomer. The polypropylene-based resin (Y) preferably contains 0 mass % to 6.0 mass % of ethylene as a comonomer. The polypropylene-based resin (Y) more preferably contains 0 mass % to 5.0 mass % of ethylene, and still more preferably 0 mass % to 4.0 mass % of ethylene. When the ethylene content is more than 6.0 mass %, a decrease in crystallinity may occur, and a decrease in heat resistance may occur.

The form of the polypropylene-based resin (Y) is not particularly limited. It may be a powder form or a particulate form (formed by a granulated powder).

II-1-3. Polypropylene-based resin composition

II-1-3-1. Percentages of the polypropylene resin (X) and the polypropylene-based resin (Y)

In the polypropylene-based resin composition of the present invention, the percentages of the polypropylene resin (X) and the polypropylene-based resin (Y) are as follows, on the basis that the total of the polypropylene resin (X) and the polypropylene-based resin (Y) is 100 mass %. The polypropylene resin (X) is from 20 mass % to 80 mass %, and the polypropylene-based resin (Y) is from 20 mass % to 80 mass %. Preferably, the polypropylene resin (X) is from 25 mass % to 75 mass %, and the polypropylene-based resin (Y) is from 25 mass % to 75 mass %. More preferably, the polypropylene resin (X) is from 30 mass % to 70 mass %, and the polypropylene-based resin (Y) is from 30 mass % to 70 mass %. Still more preferably, the polypropylene resin (X) is from 30 mass % to 60 mass %, and the polypropylene-based resin (Y) is from 40 mass % to 70 mass %.

By setting the percentages of the resins in the above ranges, the resin composition which has the following properties and which can provide a molded product having excellent transparency, is obtained: the high-speed extrusion lamination processability is excellent since it exhibits small neck-in in high-temperature extrusion molding at 290°C or more, for example, and it has high ductility.

II-1-3-2. Other components

As needed, the following components can be added to the polypropylene-based resin composition of the present invention, which are components other than the above-described polypropylene resin (X) and polypropylene-based resin (Y).

II-1-3-2-1. Additives

Additives applicable to polypropylene-based resins, such as an antioxidant, can be appropriately added to the polypropylene-based resin composition of the present invention, as long as the effects of the present invention are not impaired.

More specifically, the following additives may be added: a phenol-based stabilizer as typified by 2,6-di-t-butyl-p-cresol (BHT), tetrakis[methylene-3-(3,5-di-t-butyl-4-hydroxyphenyl)propionate]methane (manufactured by BASF Japan Ltd., product name: IRGANOX 1010) and n-octadecyl-3-(4'-hydroxy-3,5'-di-t-butylphenyl)propionate (manufactured by BASF Japan Ltd., product name: IRGANOX 1076); a phosphite-based stabilizer as typified by bis(2,4-di-t-butylphenyl)pentaerythritol diphosphite and tris(2,4-di-t-butylphenyl)phosphite; a lubricant as typified by higher fatty acid amide and higher fatty acid ester; an antistatic agent such as glycerol ester of fatty acid having 8 to 22 carbon atoms, sorbitan acid ester thereof, and polyethylene glycol ester thereof; and an anti-blocking agent as typified by silica, calcium carbonate and talc.

To impart weather resistance, an ultraviolet absorber and a light stabilizer can be added to the polypropylene-based resin composition of the present invention.

The ultraviolet absorber is a compound having an absorption band in the ultraviolet range. For example, triazole-based, benzophenone-based, salicylate-based, cyanoacrylate-based, nickel chelate-based and inorganic fine particle-based ultraviolet absorbers are known. Among them, a triazole-based ultraviolet absorber is most widely used.

The following examples are typical compounds of the ultraviolet absorber:

a triazole-based compound such as 2-(2'-hydroxy-5'-methylphenyl)benzotriazole (product names: SUMISORB 200, TINUVIN P), 2-(2'-hydroxy-5'-t-octylphenyl)benzotriazole (product names: SUMISORB 340, TINUVIN 399), 2-(2'-hydroxy-3',5'-di-t-butylphenyl)benzotriazole (product names: SUMISORB 320, TINUVIN 320), 2-(2'-hydroxy-3',5'-di-t-amylphenyl)benzotriazole (product names: SUMISORB 350, TINUVIN 328), and 2-(2'-hydroxy-3'-t-butyl-5'-methylphenyl)-5-chlorobenzotriazole (product names: SUMISORB 300, TINUVIN 326);
a benzophenone-based compound such as 2-hydroxy-4-methoxybenzophenone (product name: SUMISORB 110) and 2-hydroxy-4-n-octoxybenzophenone (product name: SUMISORB 130);
a salicylate-based compound such as 4-t-butylphenyl salicylate (product name: SEESORB 202);
a cyanoacrylate-based compound such as ethyl(3,3-diphenyl)cyanoacrylate (product name: SEESORB 501);
a nickel chelate-based compound such as nickel dibutyldithiocarbamate (product name: ANTIGEN NBC); and
an inorganic fine particle-based compound such as $TiO_2$, $ZnO_2$ and $CeO_2$.

As the light stabilizer, a hindered amine-based compound is generally used, which is referred to as "HALS". HALS has a 2,2,6,6-tetramethylpiperidine skeleton. It cannot absorb ultraviolet light; however, it suppresses light deterioration by its various kinds of functions. It is said that the main functions thereof are the following three functions: scavenging of radicals, decomposition of hydroxyperoxide compounds, and scavenging of heavy metals that can accelerate the decomposition of hydroxyperoxide.

For example, typical compounds as the HALS are as follows:

a sebacate-type compound such as bis(2,2,6,6-tetramethyl-4-piperidyl)sebacate (product names: ADK STAB LA-77, SANOL LS-770) and bis(1,2,2,6,6-pentamethyl-4-piperidyl)sebacate (product name: SANOL LS-765);
a butanetetracarboxylate-type compound such as tetrakis(2,2,6,6-tetramethyl-4-piperidyl)-1,2,3,4-butanetetracarboxylate (product name: ADK STAB LA-57), tetrakis(1,2,2,6,6-pentamethyl-4-piperidyl)-1,2,3,4-butanetetracarboxylate (product name: ADK STAB LA-52), a condensate of 1,2,3,4-butanetetracarboxylic acid, 2,2,6,6-tetramethyl-4-piperidinol and tridecylalcohol (product name: ADK STAB LA-67) and a condensate of 1,2,3,4-butanetetracarboxylic acid, 1,2,2,6,6-pentamethyl-4-piperidinol and tridecylalcohol (product name: ADK STAB LA-62);
a succinic acid polyester-type compound such as a condensation polymer of succinic acid and 1-(2-hydroxyethyl)-4-hydroxy-2,2,6,6-tetramethylpiperidine; and
a triazine-type compound such as N,N'-bis(3-aminopropyl)ethylenediamine 2,4-bis{N-butyl-N-(1,2,2,6,6-pentamethyl-4-piperidyl)amino}-6-chloro-1,3,5-triazine condensate (product name: CHIMASORB 199), poly{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino} (product name: CHIMASORB 944) and poly(6-morpholino-s-triazine-2,4-diyl) {(2,2,6,6-tetramethyl-4-piperidyl)imino}hexamethylene{(2,2,6,6-tetramethyl-4-piperidyl)imino} (product name: CHIMASORB 3346).

II-1-3-2-2. Other polymers

A modifier can be appropriately added to the polypropylene-based resin composition of the present invention, such as an elastomer and a polyethylene-based resin, both of which are applicable to polypropylene-based resins.

As the elastomer, examples include, but are not limited to, an ethylene/$\alpha$-olefin copolymer, a binary random copolymer resin of a propylene and an $\alpha$-olefin containing 4 to 12 carbon atoms, and a ternary random copolymer resin of a propylene, an ethylene and an $\alpha$-olefin containing 4 to 12 carbon atoms.

In addition, a styrene-based elastomer can be added. The styrene-based elastomer can be appropriately selected from commercially-available, styrene-based elastomers. As the commercially-available, styrene-based elastomers, examples include, but are not limited to, a hydrogenation product of a styrene-butadiene block copolymer, such as KRATON G (product name, manufactured by Kraton Polymers Japan Ltd.) and TUFTEC (product name, manufactured by Asahi Kasei Corporation); a hydrogenation product of a styrene-isoprene block copolymer, such as SEPTON (product name, manufactured by Kuraray Co., Ltd.); a hydrogenation product of a styrene-vinyl-polyisoprene block copolymer, such as HYBRAR (product name, manufactured by Kuraray Co., Ltd.); and a hydrogenation product of a styrene-butadiene random copolymer, such as DYNARON (product name, manufactured by JSR Corporation). The styrene-based elastomer may be appropriately selected from these products.

As the polyethylene-based resin, examples include, but are not limited to, an ethylene/$\alpha$-olefin copolymer such as a low-density polyethylene and a linear low-density polyethylene. The density of the polyethylene-based resin is preferably in a range of from 0.860 $g/cm^3$ to 0.910 $g/cm^3$, more preferably from 0.870 $g/cm^3$ to 0.905 $g/cm^3$, and still more preferably from 0.875 $g/cm^3$ to 0.895 $g/cm^3$. When the density is outside the ranges, a decrease in transparency may occur.

The density is a value measured at 23°C in accordance with JIS K7112.

The $\alpha$-olefin used in the ethylene/$\alpha$-olefin copolymer is preferably an $\alpha$-olefin containing 3 to 18 carbon atoms. As the $\alpha$-olefin, examples include, but are not limited to, propylene, 1-butene, 1-pentene, 1-hexene, 1-octene, 1-heptene, 4-methylpentene-1, 4-methyl-hexene-1 and 4,4-dimethylpentene-1. They may be used solely or in combination of two or more kinds.

As the ethylene/$\alpha$-olefin copolymer, examples include, but are not limited to, an ethylene-based elastomer and an ethylenepropylene-based rubber. The ethylene/$\alpha$-olefin copolymer is particularly preferably an ethylene/$\alpha$-olefin copolymer referred to as a "metallocene-based polyethylene", which is produced by use of a metallocene-based catalyst that is less likely to cause a decrease in transparency.

In the case of adding the polyethylene-based resin and the like, the amount is preferably from 5 parts by mass to 35 parts by mass, more preferably from 6 parts by mass to 30 parts by mass, and still more preferably from 7 parts by mass to 25 parts by mass, with respect to the total amount (100 parts by mass) of the resins (X) and (Y).

The polypropylene-based resin composition of the present invention contains the resins (X) and (Y) in the total of 100 parts by mass. As needed, the polypropylene-based resin composition further contains other components that do not impair the effects of the present invention. As the method for mixing them, examples include, but are not limited to, the following two kinds of methods: mixing them by a HENSCHEL MIXER, a V blender, a ribbon blender, a tumbler blender or the like, and melt-kneading them by a mixing and kneading device such as a single screw extruder, a multi-screw extruder, a kneader and a banbury mixer, as needed. The method for mixing them is not particularly limited, as long as the effects of the present invention are not impaired.

II-1-3-3. Applications of the polypropylene-based resin composition

The polypropylene-based resin composition of the present invention can be used to produce various kinds of molded products, by appropriately molding the resin composition into a desired form, using a means such as pressure molding, film molding, vacuum molding, extrusion molding, extrusion lamination molding, foam molding, blow molding and injection molding.

The polypropylene-based resin composition of the present invention is preferably used as a resin composition for extrusion lamination.

The polypropylene-based resin composition of the present invention is preferably used to produce a laminate, by melt-extrusion lamination processing (extrusion lamination) of the resin composition on a surface of a substrate.

The extrusion lamination processing is a molding method in which a melted resin film is extruded from a T-die, and the extruded resin film is continuously applied on and attached to a surface of a substrate produced in advance, thereby coating the surface with the resin film and attaching the resin film to the surface at the same time. In general, lamination processing is carried out on one surface of the substrate. As needed, it can be carried out on both surfaces of the substrate.

II-2. Method for producing the polypropylene-based resin composition

The polypropylene-based resin composition production method of the present invention is a method for producing a polypropylene-based resin composition, the method comprising:

a step of obtaining a polypropylene resin (X) having the above-mentioned properties (X-1) to (X-6),
a step of obtaining a polypropylene-based resin (Y) having the above-mentioned properties (Y-1) and (Y-2), and
a step of mixing or melt-kneading 20 mass % to 80 mass % of the polypropylene resin (X) and 20 mass % to 80 mass % of the polypropylene-based resin (Y), wherein the total amount of the polypropylene resin (X) and the polypropylene-based resin (Y) is 100 mass %.

The method for obtaining the polypropylene resin (X) is not particularly limited, and the polypropylene resin (X) can be produced by the method described above in "Method for producing the polypropylene resin (X)".
The method for obtaining the polypropylene-based resin (Y) is not particularly limited, and the polypropylene-based resin (Y) can be produced by the method described above in "Method for producing the polypropylene-based resin (Y)".
The method for mixing the polypropylene resin (X) and the polypropylene-based resin (Y) is not particularly limited. As the method for mixing them, examples include, but are not limited to, mixing them by a HENSCHEL MIXER, a V blender, a ribbon blender, a tumbler blender or the like.
The method for melt-kneading the polypropylene resin (X) and the polypropylene-based resin (Y) is not particularly limited. As the method for melt-kneading them, examples include, but are not limited to, melt-kneading them by a mixing and kneading device such as a single screw extruder, a multi-screw extruder, a kneader and a banbury mixer.
The percentages of the polypropylene resin (X) and the polypropylene-based resin (Y) may be the same as the percentages described above in "Percentages of the polypropylene resin (X) and the polypropylene-based resin (Y)".
The applications of the polypropylene-based resin composition produced as described above, may be the same as the applications described above in "Applications of the polypropylene-based resin composition".

II-3. Laminate

The laminate of the present invention is a laminate comprising a substrate layer and a polypropylene-based resin composition layer, wherein the polypropylene-based resin composition layer comprises 20 mass % to 80 mass % of a polypropylene resin (X) having the above-mentioned properties (X-1) to (X-6) and 20 mass % to 80 mass % of a polypropylene-based resin (Y) having the above-mentioned properties (Y-1) and (Y-2), and wherein the total amount of the polypropylene resin (X) and the polypropylene-based resin (Y) is 100 mass %.
The percentages of the polypropylene resin (X) and the polypropylene-based resin (Y) may be the same as the percentages described above in "Percentages of the polypropylene resin (X) and the polypropylene-based resin (Y)".
As the substrate used as the substrate layer, examples include, but are not limited to, a film or sheet made of a thermoplastic resin such as polyester resin (e.g., polyethylene terephthalate, polybutylene terephthalate), a saponified ethylene/vinyl acetate copolymer, polyvinyl chloride, polyvinylidene chloride, polyethylene, polypropylene, poly 4-methyl-1-pentene, polycarbonate resin, and polyamide resin (e.g., polyamide 6, polyamide 66, polyamide 6/66, polyamide 12), a paper, and a metal foil such as an aluminum foil and an iron foil.
The thermoplastic resin film or sheet may be a uniaxially or biaxially oriented resin film or sheet. A biaxially oriented polypropylene film is particularly preferred. Also, a laminate of a biaxially oriented polypropylene film and a paper is preferred.
In general, the thickness of the substrate layer is from about 5 $\mu$m to about 100 um.
As the method for laminating the substrate layer and the polypropylene-based resin composition layer, examples include, but are not limited to, an extrusion lamination method, a coextrusion film method, a dry lamination method, a wet lamination method, a hot-melt lamination method and a thermal lamination method.
The form of the substrate is not limited to a film or sheet form, and it may be a woven or non-woven fabric form. The substrate may have a single-layered or multi-layered structure. The method for producing the multi-layered substrate is not particularly limited. As the method, examples include, but are not limited to, a coextrusion film method, a dry lamination method, a wet lamination method, a hot-melt lamination method, an extrusion lamination method and a thermal lamination method.
Various kinds of film processing treatments may be carried out on the substrate in advance, such as anchor coating, metal evaporation, corona discharge treatment and printing.
The laminate of the present invention can be suitably used in applications such as packaging of various kinds of foods, beverages, medicines, medical supplies, cosmetic products, clothes, stationery, building materials, batteries, paper products and other industrial materials.

II-4. Method for producing the laminate

The laminate production method of the present invention is a method for producing a laminate comprising a substrate layer and a polypropylene-based resin composition layer, the method comprising a step of forming the polypropylene-based resin composition layer by extrusion lamination of a mixture or melt-kneaded product of 20 mass % to 80 mass % of a polypropylene resin (X) having the above-mentioned properties (X-1) to (X-6) and 20 mass % to 80 mass % of a polypropylene-based resin (Y) having the above-mentioned properties (Y-1) and (Y-2) on at least one surface of the substrate layer, wherein the total amount of the polypropylene resin (X) and the polypropylene-based resin (Y) is 100 mass %.

As the substrate layer, examples include, but are not limited to, the substrate layer described above in "II-3. Laminate".

As the method for mixing the polypropylene resin (X) and the polypropylene-based resin (Y) and the method for melt-kneading them, examples include, but are not limited to, the methods described above in "II-2. Method for producing the polypropylene-based resin composition".

The percentages of the polypropylene resin (X) and the polypropylene-based resin (Y) may be the same as the percentages described above in "Percentages of the polypropylene resin (X) and the polypropylene-based resin (Y)".

In the case of extrusion lamination of the polypropylene-based resin composition of the present invention, which contains the polypropylene resin (X) and the polypropylene-based resin (Y), on the substrate layer, the melt extrusion temperature of the resin composition is generally from 180°C to 320°C, and preferably from 200°C to 310°C. When the melt extrusion temperature is more than 320°C, a decrease in moldability may occur.

The extrusion lamination molding rate directly has a direct influence on productivity. Accordingly, it is preferably 140 m/min or more, and more preferably 150 m/min or more.

To introduce a polar group, ozonation treatment may be carried out on the surface of the melted film of the polypropylene-based resin composition. The ozonation treatment amount is preferably from 0.01 $g/m^2$ to 1 $g/m^2$, with respect to the surface area of the melted film.

In general, extrusion lamination is carried out on one surface of the substrate layer. As needed, extrusion lamination can be carried out on both surfaces of the substrate.

The thickness of the polypropylene-based resin composition layer thus formed, is generally from 1 um to 250 um, preferably from 3 um to 200 $\mu$m, and particularly preferably from 5 $\mu$m to 150 um.

In addition, various kinds of film processing treatments such as metal evaporation, corona discharge treatment and printing can be carried out on the laminate obtained by extrusion lamination processing.

Examples

Hereinafter, the present invention will be described in more detail, with reference to examples and comparative examples. The present invention is not limited to these examples.

Evaluation methods and resins used in the examples and comparative examples are as follows.

<I. First embodiment>

I-1. Evaluation method

(1) Melt flow rate (MFR)

The melt flow rate was measured in accordance with ISO 1133:1997 Conditions M. The unit is g/10 min.

(2) Molecular weight distributions (Mw/Mn and Mz/Mn)

In accordance with the above-described method, the molecular weight distributions were obtained by GPC.

(3) Melt tension (MT)

In accordance with the above-described method, the melt tension was measured in the following condition, using CAPILOGRAPH 1B (manufactured by Toyo Seiki Seisaku-sho, Ltd.):

Capillary: Diameter 2.0 mm, Length 40 mm
Cylinder diameter: 9.55 mm
Cylinder extrusion speed: 20 mm/min
Drawing speed: 4.0 m/min
Temperatures: 170°C, 230°C.

When the MT of the sample is very high, the resin may break at a drawing speed of 4.0 m/min. In this case, the drawing speed is decreased, and the tension at the maximum speed at which the resin can be drawn, is defined as the MT. The unit is gram (g).

(4) Branching index (g' ($Mz_{abs}$))

In accordance with the above-described method, the branching index was measured by a GPC equipped with a refractive index detector (RI), a viscometer and a light scattering detector (MALLS) as detectors.

(5) Mm fraction

In accordance with the above-described method, the mm fraction was obtained. The unit was %.

(6) Ethylene content

The ethylene content is a value obtained by analyzing a $^{13}C$-NMR spectrum in accordance with the method described in paragraphs [0120] to [0125] in JP-A No. 2013-199642, using GSX-400 (manufactured by JEOL Ltd.) or an equivalent device (carbon nucleus resonance frequency 100 MHz or more). The unit is mass %.

(7) Melting point

Using a differential scanning calorimeter (DSC), the temperature of a sample was increased to 200°C; the sample temperature was kept for 5 minutes; the sample temperature was decreased to 40°C at a temperature decrease rate of 10°C/min; and the endothermic peak top temperature of the sample when measured again at a temperature increase rate of 10°C/min, was defined as the melting point. The unit is °C.

I-2. Extrusion lamination moldability

(1) Ductility

An extrusion lamination device was set as follows: the temperature of a resin extruded from a T-die that was attached to an extruder having a diameter of 90 mm, was 290°C. Using the extrusion lamination device, the polypropylene-based resin composition was extruded, with adjusting the extruded resin composition amount so that the thickness of a coating was 20 um in the following condition:

Air gap: 100 mm
Cooling roller surface temperature: 25°C
Die width: 560 mm
Die lip opening degree: 0.7 mm
Drawing processing rate: 80 m/min.

Extrusion lamination processing was carried out on a kraft paper (width 505 mm, basis weight 50 g/m$^2$), with increasing the drawing speed from 80 m/min. The maximum processing speed (unit: m/min) at which draw resonance did not occur, was defined as the ductility.

The polypropylene-based resin composition with a ductility of 200 m/min or more, was evaluated to have excellent extrusion lamination moldability.

(2) Neck-in

Using the above-described extrusion lamination device and at a processing speed of 80 m/min, a laminate in which the thickness of the extrusion lamination coating was 20 μm, was produced on a kraft paper having a basis weight of 50 g/m$^2$. The difference (unit: mm) between the width of the die and the width of the resin composition layer included in the obtained laminate, was defined as the neck-in. As the neck-in decreases, the effective product width increases, and the extrusion lamination processability gets better.

I-3. Film property

(1) Production of film for property evaluation

Using the above-described extrusion lamination device and at a processing speed of 40 m/min, a laminate in which the thickness of the extrusion lamination coating was 40 $\mu$m, was produced on a biaxially oriented PET film having a thickness of 12 um.
The biaxially oriented PET film was removed from the obtained laminate, thereby obtaining the film for property evaluation.

(2) Haze

The haze of the film for property evaluation obtained in the above (1) was measured in accordance with JIS K7105. As the haze value (unit: %) decreases, the transparency gets better.

I-4. Materials used

(1) Polypropylene resin (X1)

A polymer (I-X1-1) produced below in Production Example I-1 was used.

[Production Example I-1 (Production of I-PP-1)]

<Catalyst Synthesis Example 1>

(1) Synthesis of complexes

(1-a) Synthesis of rac-dichloro[1,1'-dimethylsilylene bis{2-(5-methyl-2-furyl)-4-(4-i-propylphenyl) indenyl} ]hafnium

In accordance with the method described in Synthesis Example 1 in JP-A No. 2012-149160, rac-dichloro[1,1'-dimethylsilylene bis{2-(5-methyl-2-furyl)-4-(4-i-propylphenyl)indenyl}]hafnium was synthesized.

(1-b) Synthesis of rac-dichloro[1,1'-dimethylsilylene bis{2-methyl-4-(4-chlorophenyl)-4-hydroazulenyl}]hafnium

In accordance with the method described in Example 7 in JP-A No. H11-240909, rac-dichloro[1,1'-dimethylsilylene bis{2-methyl-4-(4-chlorophenyl)-4-hydroazulenyl}]hafnium was synthesized.

(2) Preparation of catalyst

(2-a) Chemical treatment of ion-exchange layered silicate

First, 645.1 g of distilled water and 82.6 g of 98% sulfuric acid were fed into a 1 L three-necked flask, which was equipped with stirring blades and a reflux device, and the temperature of the mixture was increased to 95°C.
Next, 100 g of a commercially-available montmorillonite (BENCLAY KK manufactured by Mizusawa Industrial Chemicals, Ltd., Al: 9.78 mass %, Si: 31.79 mass %, Mg: 3.18 mass %, Al/Si (molar ratio): 0.320, average particle diameter: 14 $\mu$m) was added thereto, and the mixture was reacted at 95°C for 320 minutes. After the elapse of 320 minutes, 0.5 L of distilled water was added to stop the reaction. Then, the mixture was subjected to filtration, thereby obtaining 255 g of a solid in cake form.
It was found that 0.31 g of a chemically-treated montmorillonite (an intermediate) was contained per gram of the cake. The chemical composition of the chemically-treated montmorillonite (the intermediate) was as follows:

Al: 7.68 mass %
Si: 36.05 mass %
Mg: 2.13 mass %
Al/Si (molar ratio): 0.222.

The cake was mixed with 1545 g of distilled water and slurried. The temperature of the obtained slurry was increased to 40°C. To the slurry, 5.734 g of a lithium hydroxide-hydrate was added in solid form. Then, the slurry was reacted at 40°C for one hour. After the elapse of one hour, the reacted slurry was subjected to filtration and then washed three times with 1 L of distilled water, thereby obtaining a solid in cake form again.

The cake was recovered and dried, thereby obtaining 80 g of a chemically-treated montmorillonite. The chemical composition of the chemically-treated montmorillonite was as follows:

Al: 7.68 mass %
Si: 36.05 mass %
Mg: 2.13 mass %
Al/Si (molar ratio): 0.222
Li: 0.53 mass %.

(2-b) Preliminary polymerization

First, 150 kg of the chemically-treated montmorillonite obtained above was fed into a reactor with an inner volume of 1 m$^3$. The chemically-treated montmorillonite was mixed with 2832 L of hexane and slurried. Next, 74.4 kg (375 mol) of triisobutylaluminum was fed into the reactor for 85 minutes, and the slurry was stirred for 60 minutes. Then, the slurry was washed with hexane to 1/32, thereby adjusting the total volume of the slurry to 900 L.

The slurry solution containing the chemically-treated montmorillonite was kept at 50°C. To the slurry solution, 0.65 kg of triisobutylaluminum (4.257 kg of a hexane solution with a concentration of 15.3 mass %, 3.28 mol) was added.

After stirring the slurry solution for 5 minutes, 0.657 kg (0.81 mol) of rac-dichloro[1,1'-dimethylsilylene bis{2-methyl-4-(4-chlorophenyl)-4-hydroazulenyl}]hafnium and 96 L of toluene was added thereto. Then, the slurry solution was kept stirred for 60 minutes.

Then, 9.758 kg (26.61 mol) of tri-n-octylaluminum was added thereto, and the slurry solution was stirred for 6 minutes. Next, 240 L of toluene and 0.064 kg of triisobutylaluminum (9.88 kg of a toluene solution having a concentration of 0.648 mass %, 0.32 mol) were fed into another container equipped with a stirrer, and 1.768 kg (1.89 mol) of rac-dichloro[1,1'-dimethylsilylene bis{2-(5-methyl-2-furyl)-4-(4-i-propylphenyl)indenyl}]hafnium was added thereto, thereby preparing a solution. The solution was fed into the reactor; 100 L of toluene was added thereto; and then the slurry solution was stirred further for 20 minutes.

Next, 2387 L hexane was added thereto; the internal temperature of the reactor was controlled to 40°C, and preliminary polymerization was carried out, with feeding 328.1 kg of propylene for 240 minutes and keeping the internal temperature at 40°C. Then, the propylene feeding was stopped, and the residual polymerization reaction was carried out for 80 minutes, with keeping the internal temperature at 40°C.

After the residual polymerization reaction was completed, stirring was stopped to deposit and settle down the contents. A supernatant thus formed was removed so that the amount of the solution reached 1500 L. Next, 12.7 kg of triisobutylaluminum was added to the solution; 3974 L of hexane was added again; the solution was stirred; and then the stirring was stopped to deposit and settle down the contents. A supernatant thus formed was removed until the amount of the solution reached 1500 L.

Next, 8.9 kg of triisobutylaluminum (42.9 kg of a hexane solution with a concentration of 20.8 mass %) and 205 L of hexane were added thereto.

Then, the reaction solution was moved to a dryer and dried at 40°C for 9 hours.

Accordingly, 465 kg of a dried preliminary polymerization catalyst was obtained. The preliminary polymerization ratio of the catalyst (a value obtained by dividing a preliminary polymerized polymer amount by a solid catalyst amount) was 2.10. The preliminary polymerization catalyst was defined as a catalyst 1.

<Polymerization>

A 20 L autoclave was sufficiently dried by introducing nitrogen, while heating the autoclave. Then, the inside of the autoclave was purged with propylene and cooled to room temperature. Next, 18.7 mL of a solution (140 mg/mL) of triisobutylaluminum in heptane and 0.85 N (normal) L of H$_2$ were introduced; 5000 g of liquid propylene was introduced; and then the temperature of the autoclave was increased to 63°C. Then, 230 mg of the catalyst 1, which is a mass excluding the preliminary polymerized polymer, was fed under pressure to a polymerization tank by high-pressure argon to initiate polymerization, and the temperature was quickly increased to 70°C. The temperature was kept at 70°C, and after the elapse of one hour from the initiation of the polymerization, unreacted propylene was quickly purged to stop the polymerization. Accordingly, about 1730 g of a polymer powder (I-PP-1) was obtained.

The catalytic activity was 7520 g-PP/g-catalyst. The MFR was 8.5 g/10 min.

[Production Example I-2 (Production of I-PP-2)]

<Polymerization>

A 20 L autoclave was sufficiently dried by introducing nitrogen, while heating the autoclave. Then, the inside of the autoclave was purged with propylene and cooled to room temperature. Next, 18.7 mL of a solution (140 mg/mL) of triisobutylaluminum in heptane and 0.68 N (normal) L of $H_2$ were introduced; 5000 g of liquid propylene was introduced; and then the temperature of the autoclave was increased to 63°C. Then, 310 mg of the catalyst 1, which is a mass excluding the preliminary polymerized polymer, was fed under pressure to a polymerization tank by high-pressure argon to initiate polymerization, and the temperature was quickly increased to 70°C. The temperature was kept at 70°C, and after the elapse of one hour from the initiation of the polymerization, unreacted propylene was quickly purged to stop the polymerization. Accordingly, about 22170 g of a polymer powder (I-PP-2) was obtained.
The catalytic activity was 7000 g-PP/g-catalyst. The MFR was 3.1 g/10 min.

<Production of pellet>

[Production of (I-X1-1)]

With respect to 100 parts by mass of the polymer powder (I-PP-1), 0.125 parts by mass of tetrakis[methylene-3-(3',5'-di-t-butyl-4'-hydroxyphenyl)propionate]methane (product name: IRGANOX 1010, a phenol-based antioxidant manufactured by BASF Japan Ltd.) and 0.125 parts by mass of tris(2,4-di-t-butylphenyl)phosphite (product name: IRGAFOS 168, a phosphite-based antioxidant manufactured by BASF Japan Ltd.) were used. They were mixed for three minutes at room temperature, by use of a high-speed agitation mixer (product name: HENSCHEL MIXER). Then, the mixture was melt-kneaded by use of a twin screw extruder, thereby obtaining the pellet (I-X1-1) of the polypropylene resin (X1).
As the twin screw extruder, KZW-25 (product name, manufactured by Technovel Corporation) was used. The screw rotation frequency of the extruder was set to 400 RPM, and the kneading temperature under the hopper was set as follows in stages: 80°C, 160°C, 210°C and 230°C (this temperature was maintained to the outlet of the die).

[Production of (I-X1-2)]

A pellet (I-X1-2) was obtained by the same production method as the pellet (I-X1-1), except that the polymer powder (I-PP-2) was used.
The pellets (I-X1-1) and (I-X1-2) were evaluated for MFR, $^{13}$C-NMR, GPC, branching index g' and melt tension (MT). The evaluation results are shown in Table 1.

Table 1

|  | I-X1-1 | I-X1-2 |
|---|---|---|
| MFR (g/10 min) | 8.5 | 3.1 |
| Mw/M n | 3.8 | 4.9 |
| Mz/Mw | 3.4 | 3.6 |
| $W_{1M}$ (mass %) | 4.3 | 7.0 |
| MT230°C (g) | 6.0 | 12.9 |
| MT170°C (g) | 23.4 | 45.0 |
| log(MT170°C) | 1.4 | 1.7 |
| Right-side value of Formula 1 | 1.0 | 1.5 |
| g'($MZ_{abs}$) | 0.87 | 0.87 |
| mm (%) | 98.5 | 98.5 |

(2) Polypropylene resin (I-X2)

Any of the polymers (I-X2-1) to (I-X2-3) produced in the following Production Examples I-3 to I-5 was used.

[Production Example I-3 (Production of I-PP-3)]

Polymerization was carried out in the same manner as Production Example I-1, except that 1.28 N (normal) L of $H_2$ was introduced, and the mass of the catalyst 1 excluding the preliminary polymerized polymer was changed to 220 mg. Accordingly, about 2508 g of a polymer powder (I-PP-3) was obtained.

The catalytic activity was 11400 g-PP/g-catalyst. The MFR was 60 g/10 min.

[Production Example I-4 (Production of I-PP-4)]

In Production Example I-4, polymerization was carried out as follows, instead of the polymerization carried out in Production Example 1. First, the following materials were continuously fed into a stirring high-pressure reaction container (L/D 1.2) with an inner volume of 100 m³: liquefied propylene at a flow rate of $2 \times 10^4$ kg/hr, triisobutylaluminum at a flow rate of 80 kg/hr, $H_2$ at a flow rate of 0.13 kg/hr, and the preliminary polymerization catalyst 1 at a flow rate of 1.00 kg/hr (the mass excluding the preliminarily polymerized polymer). With keeping the temperature of the reaction container at $70 \pm 0.1°C$, continuous polymerization was carried out so that the concentration of the polymer slurry in the polymerization reactor was kept at 40 mass %. Accordingly, a polymer powder (I-PP-4) was obtained. The amount of the produced polymer powder (I-PP-4) was $8.0 \times 10^3$ kg/hr.

[Production Example I-5 (Production of I-PP-5)]

Polymerization was carried out in the same manner as Production Example I-3, except that 1.105 N (normal) L of $H_2$ was introduced, and the mass of the catalyst 1 excluding the preliminary polymerized polymer was changed to 190 mg. Accordingly, about 1997 g of a polymer powder (I-PP-5) was obtained.

The catalytic activity was 10510 g-PP/g-catalyst. The MFR was 32 g/10 min.

<Production of pellet>

[Production of (I-X2-1)]

With respect to 100 parts by mass of the polymer powder (I-PP-3), 0.125 parts by mass of tetrakis[methylene-3-(3',5'-di-t-butyl-4'-hydroxyphenyl)propionate]methane (product name: IRGANOX 1010, a phenol-based antioxidant manufactured by BASF Japan Ltd.) and 0.125 parts by mass of tris(2,4-di-t-butylphenyl)phosphite (product name: IRGAFOS 168, a phosphite-based antioxidant manufactured by BASF Japan Ltd.) were used. They were mixed for three minutes at room temperature, by use of a high-speed agitation mixer (product name: HENSCHEL MIXER). Then, the mixture was melt-kneaded by use of a twin screw extruder, thereby obtaining the pellet (I-X2-1) of the polypropylene resin (X2).

As the twin screw extruder, KZW-25 (product name, manufactured by Technovel Corporation) was used. The screw rotation frequency of the extruder was set to 400 RPM, and the kneading temperature under the hopper was set as follows in stages: 80°C, 160°C, 210°C and 230°C (this temperature was maintained to the outlet of the die).

[Production of (I-X2-2)]

A pellet (I-X2-2) was obtained by the same production method as the pellet (I-X2-1), except that the polymer powder (I-PP-4) was used.

[Production of (I-X2-3) ]

A pellet (I-X2-3) was obtained by the same production method as the pellet (I-X2-1), except that the polymer powder (I-PP-5) was used.

The pellets (I-X2-1) to (I-X2-3) were evaluated for MFR, ¹³C-NMR, GPC, branching index g' and melt tension (MT). The evaluation results are shown in Table 2.

Table 2

|  | I-X2-1 | I-X2-2 | I-X2-3 |
|---|---|---|---|
| MFR (g/10 min) | 60 | 16 | 32 |
| Mw/M n | 3.7 | 4.1 | 3.2 |

(continued)

|  | I-X2-1 | I-X2-2 | I-X2-3 |
|---|---|---|---|
| Mz/Mw | 3.4 | 4.3 | 3.6 |
| $W_{1M}$ (mass %) | 1.7 | 3.2 | 1.9 |
| MT230°C (g) | 0.5 | 2.3 | 0.8 |
| MT170°C (g) | 2.7 | 11.0 | 4.2 |
| log(MT170°C) | 0.4 | 1.0 | 0.6 |
| Right-side value of Formula 1 | 0.04 | 0.68 | 0.34 |
| g'($MZ_{abs}$) | 0.83 | 0.73 | 0.76 |
| mm (%) | 98.4 | 98.3 | 98.3 |

(3) Polypropylene-based resin (I-Y)

As the polypropylene-based resin (I-Y), any of the following polypropylenes (I-Y-1) to (I-Y-4) was used. The polypropylenes (I-Y-1) to (I-Y-4) were evaluated for MFR and melt tension (MT170°C). The evaluation results and catalysts used are shown in Table 3. In Table 3, the MT170°C values of the polypropylenes (I-Y-1) to (I-Y-4) are described as "Less than 0.1", since they were lower than the detection limit.

(I-Y-1) [Production Example I-3 (Production of I-Y-1)]

With respect to 100 parts by mass of WINTEC (registered trademark) WSX03 (product name, manufactured by Japan Polypropylene Corporation, a propylene-ethylene random copolymer polymerized by a metallocene catalyst, ethylene content: 3.2 mass %, MFR: 25 g/10 min, Tm: 125°C), 0.05 parts by mass of an organic peroxide (2,5-dimethyl-2,5-di(t-butylperoxy)hexane) was used. They were mixed with a HENSCHEL MIXER, and the mixture was melt-extruded by use of the twin screw extruder KZW-25 (product name, manufactured by Technovel Corporation, screw diameter 25 mm). The screw rotation frequency of the extruder was set to 300 rpm, and the kneading temperature under the hopper to C1/C2/C3-C7/head/die was set as follows in stages: 150°C/180°C/230°C/230°C/180°C. Accordingly, a pellet (Tm: 125°C, MFR: 45 g/10 min) was obtained.

(I-Y-2): NOVATEC (registered trademark) SA08 (product name, manufactured by Japan Polypropylene Corporation, a propylene homopolymer polymerized by a Ziegler-Natta catalyst, MFR: 80 g/10 min, Tm: 161°C)
(I-Y-3): WINTEC (registered trademark) WSX03 (product name, manufactured by Japan Polypropylene Corporation, a propylene homopolymer polymerized by a metallocene catalyst, MFR: 25 g/10 min, Tm: 125°C)
(I-Y-4): WINTEC (registered trademark) WFX4 (product name, manufactured by Japan Polypropylene Corporation, a propylene homopolymer polymerized by a metallocene catalyst, MFR: 7 g/10 min, Tm: 125°C)

Table 3

|  | I-Y-1 | I-Y-2 | I-Y-3 | I-Y-4 |
|---|---|---|---|---|
| MFR (g/10 min) | 45 | 80 | 25 | 7 |
| MT170°C (g) | Less than 0.1 | Less than 0.1 | Less than 0.1 | Less than 0.1 |
| log(MT170°C) | -1.0 > | -1.0 > | -1.0 > | -1.0 > |
| Right-side value of Formula 1 | 0.18 | -0.09 | 0.46 | 1.07 |
| Catalyst | Metallocene | Ziegler | Metallocene | Metallocene |

[Example I-1]

1. Mixing

First, 10 mass % of the (I-X1-1) as the polypropylene resin (X1), 40 mass % of the (I-X2-1) as the polypropylene resin (X2), and 50 mass % of the (I-Y-1) as the polypropylene-based resin (Y) were weighed out. They were fed into the HENSCHEL MIXER and mixed for 3 minutes.

2. Granulation

The mixture was melt-kneaded by use of the twin screw extruder KZW-25 (product name, manufactured by Technovel Corporation, screw diameter 25 mm) at a screw rotation frequency of 300 rpm and at the following kneading temperature under the hopper, which was set as follows in stages to C1/C2/C3-C7/head/die: 150°C/180°C/230°C/230°C/180°C. The melted resin was extruded from a strand die; the extruded resin (strand) was drawn while being solidified in a cooling water bath; and the strand was cut to a diameter of 3 mm and a length of 2 mm with a strand cutter, thereby obtaining a pellet of the polypropylene-based resin composition. The MFR of the obtained pellet was evaluated.

3. Production of film

The obtained pellet of the polypropylene-based resin composition was extruded from a T-die (width 560 mm) attached to an extruder (diameter 90 mm) at a resin temperature of 290°C, thereby obtaining a film. The extrusion lamination moldability of the polypropylene-based resin composition and the property of the film were evaluated.

[Example I-2]

A film was produced in the same manner as Example I-1, except that 10 mass % of the (I-X1-1) as the polypropylene resin (X1), 20 mass % of the (I-X2-1) as the polypropylene resin (X2), and 70 mass % of the (I-Y-1) as the polypropylene-based resin (Y) were used.

[Example I-3]

A film was produced in the same manner as Example I-1, except that 10 mass % of the (I-X1-1) as the polypropylene resin (X1), 80 mass % of the (I-X2-1) as the polypropylene resin (X2), and 10 mass % of the (I-Y-1) as the polypropylene-based resin (Y) were used.

[Example I-4]

A film was produced in the same manner as Example I-1, except that 10 mass % of the (I-X1-1) as the polypropylene resin (X1), 40 mass % of the (I-X2-1) as the polypropylene resin (X2), and 50 mass % of the (I-Y-3) as the polypropylene-based resin (Y) were used.

[Example I-5]

A film was produced in the same manner as Example I-1, except that 20 mass % of the (I-X1-1) as the polypropylene resin (X1), 30 mass % of the (I-X2-1) as the polypropylene resin (X2), and 50 mass % of the (I-Y-1) as the polypropylene-based resin (Y) were used.

[Example I-6]

A film was produced in the same manner as Example I-1, except that 5 mass % of the (I-X1-2) as the polypropylene resin (X1), 45 mass % of the (I-X2-1) as the polypropylene resin (X2), and 50 mass % of the (I-Y-1) as the polypropylene-based resin (Y) were used.

[Example I-7]

A film was produced in the same manner as Example I-1, except that 2.5 mass % of the (I-X1-2) as the polypropylene resin (X1), 27.5 mass % of the (I-X2-2) as the polypropylene resin (X2), and 70 mass % of the (I-Y-1) as the polypropylene-based resin (Y) were used.

[Example I-8]

A film was produced in the same manner as Example I-1, except that 5 mass % of the (I-X1-2) as the polypropylene resin (X1), 25 mass % of the (I-X2-3) as the polypropylene resin (X2), and 70 mass % of the (I-Y-1) as the polypropylene-based resin (Y) were used.

[Comparative Example I-1]

A film was produced in the same manner as Example I-1, except that 30 mass % of the (I-X1-1) as the polypropylene resin (X1) and 70 mass % of the (I-Y-2) as the polypropylene-based resin (Y) were used.

[Comparative Example I-2]

A film was produced in the same manner as Example I-1, except that 50 mass % of the (I-X2-1) as the polypropylene resin (X2) and 50 mass % of the (I-Y-4) as the polypropylene-based resin (Y) were used.
Table 4 shows the percentages of the resins used in Examples and Comparative Examples, the MFR and extrusion lamination moldability of the pellet of the polypropylene-based resin composition, and the film property.

Table 4

| | | | Example I-1 | Example I-2 | Example I-3 | Example I-4 | Example I-5 | Example I-6 | Example I-7 | Example I-8 | Comparative Example I-1 | Comparative Example I-2 |
|---|---|---|---|---|---|---|---|---|---|---|---|---|
| Component (X-1) | I-X1-1 | Mass % | 10 | 10 | 10 | 10 | 20 | | | | 30 | |
| | I-X1-2 | Mass % | | | | | | 5 | 2.5 | 5 | | |
| Component (X-2) | I-X2-1 | Mass % | 40 | 20 | 80 | 40 | 30 | 45 | | | | 50 |
| | I-X2-2 | Mass % | | | | | | | 27.5 | | | |
| | I-X2-3 | Mass % | | | | | | | | 25 | | |
| Component (Y) | I-Y-1 | Mass % | 50 | 70 | 10 | | 50 | 50 | 70 | 70 | | |
| | I-Y-2 | Mass % | | | | | | | | | 70 | |
| | I-Y-3 | Mass % | | | | 50 | | | | | | |
| | I-Y-4 | Mass % | | | | | | | | | | 50 |
| Pellet property | MFR | g/10 min | 43 | 36 | 47 | 39 | 33 | 37 | 32 | 34 | 41 | 20 |
| Extrusion lamination moldability | Ductility | m/min | 210 | 200 | 230 | 170 | 200 | 210 | 180 | 180 | 160 | 100 |
| | Neck-in | Mm | 98 | 115 | 74 | 98 | 82 | 98 | 96 | 108 | 140 | 96 |
| Film property | Transparency | % | 6.1 | 6.7 | 6.9 | 6.1 | 6.3 | 6.4 | 6.3 | 6.2 | 6.8 | 6.7 |

According to the extrusion lamination moldability evaluation, Examples I-1 to I-8 achieved good results in ductility, since the polypropylene resin (X1), polypropylene resin (X2) and polypropylene-based resin (Y) contained in the polypropylene-based resin composition satisfied all the properties specified in the present invention. Also, they achieved excellent results in neck-in and transparency.

Comparative Example I-1 did not contain the polypropylene resin (X2), and a polypropylene component having a branched structure with high flowability did not exist therein. Accordingly, even though it was mixed with the polypropylene resin (I-Y-2) with high flowability, the melt tension was insufficient and resulted in large neck-in. Comparative Example I-2 did not contain the polypropylene resin (X1), and the flowability of the polypropylene resin (I-Y-4) was low. Accordingly, it achieved a good result in neck-in; however, the ductility was remarkably low.

<II. Second embodiment>

II-1. Evaluation method

(1) Melt flow rate (MFR)

The melt flow rate was measured in accordance with ISO 1133:1997 Conditions M. The unit is g/10 min.

(2) Molecular weight distributions (Mw/Mn and Mz/Mn)

In accordance with the above-described method, the molecular weight distributions were obtained by GPC.

(3) Melt tension (MT)

In accordance with the above-described method, the melt tension was measured in the following condition, using CAPILOGRAPH 1B (manufactured by Toyo Seiki Seisaku-sho, Ltd.):

Capillary: Diameter 2.0 mm, Length 40 mm
Cylinder diameter: 9.55 mm
Cylinder extrusion speed: 20 mm/min
Drawing speed: 4.0 m/min
Temperatures: 170°C, 230°C.

when the MT of the sample is very high, the resin may break at a drawing speed of 4.0 m/min. In this case, the drawing speed is decreased, and the tension at the maximum speed at which the resin can be drawn, is defined as the MT. The unit is gram (g).

(4) Branching index (g' ($Mz_{abs}$))

In accordance with the above-described method, the branching index was measured by a GPC equipped with a refractive index detector (RI), a viscometer and a light scattering detector (MALLS) as detectors.

(5) Mm fraction

In accordance with the above-described method, the mm fraction was obtained. The unit was %.

(6) Ethylene content

The ethylene content is a value obtained by analyzing a $^{13}$C-NMR spectrum in accordance with the method described in paragraphs [0120] to [0125] in JP-A No. 2013-199642, using GSX-400 (manufactured by JEOL Ltd.) or an equivalent device (carbon nucleus resonance frequency 100 MHz or more). The unit is mass %.

(7) Melting point

Using a differential scanning calorimeter (DSC), the temperature of a sample was increased to 200°C; the sample temperature was kept for 5 minutes; the sample temperature was decreased to 40°C at a temperature decrease rate of 10°C/min; and the endothermic peak top temperature of the sample when measured again at a temperature increase rate of 10°C/min, was defined as the melting point. The unit is °C.

II-2. Extrusion lamination moldability

(1) Ductility

An extrusion lamination device was set as follows: the temperature of a resin extruded from a T-die that was attached to an extruder having a diameter of 90 mm, was 290°C. Using the extrusion lamination device, the polypropylene-based resin composition was extruded, with adjusting the extruded resin composition amount so that the thickness of a coating was 20 um in the following condition:

Air gap: 100 mm
Cooling roller surface temperature: 25°C
Die width: 560 mm
Die lip opening degree: 0.7 mm
Drawing processing rate: 80 m/min.

Extrusion lamination processing was carried out on a kraft paper (width 505 mm, basis weight 50 g/m$^2$), with increasing the drawing speed from 80 m/min. The maximum processing speed (unit: m/min) at which draw resonance did not occur, was defined as the ductility.
The polypropylene-based resin composition with a ductility of 150 m/min or more, was evaluated to have excellent extrusion lamination moldability.

(2) Neck-in

Using the above-described extrusion lamination device and at a processing speed of 80 m/min, a laminate in which the thickness of the extrusion lamination coating was 20 um, was produced on a kraft paper having a basis weight of 50 g/m$^2$. The difference (unit: mm) between the width of the die and the width of the resin composition layer included in the obtained laminate, was defined as the neck-in. As the neck-in decreases, the effective product width increases, and the extrusion lamination processability gets better.

II-3. Film property

(1) Production of film for property evaluation

Using the above-described extrusion lamination device and at a processing speed of 40 m/min, a laminate in which the thickness of the extrusion lamination coating was 40 um, was produced on a biaxially oriented PET film having a thickness of 12 um.
The biaxially oriented PET film was removed from the obtained laminate, thereby obtaining the film for property evaluation.

(2) Haze

The haze of the film for property evaluation obtained in the above (1) was measured in accordance with JIS K7105. As the haze value (unit: %) decreases, the transparency gets better.

II-4. Materials used

(1) Polypropylene resin (X)

A polymer (X-1), (X-2), (X-3), (X-4) or (X-5) was used, which are polymers produced below in Production Examples 1 to 5.

[Production Example II-1 (Production of II-PP-1)]

<Catalyst Synthesis Example 1>

(1) Synthesis of complexes

(1-a) Synthesis of rac-dichloro[1,1'-dimethylsilylene bis{2-(5-methyl-2-furyl)-4-(4-i-propylphenyl) indenyl} ]hafnium

In accordance with the method described in Synthesis Example 1 in JP-A No. 2012-149160, rac-dichloro[1,1'-dimethylsilylene bis{2-(5-methyl-2-furyl)-4-(4-i-propylphenyl)indenyl}]hafnium was synthesized.

(1-b) Synthesis of rac-dichloro[1,1'-dimethylsilylene bis{2-methyl-4-(4-chlorophenyl)-4-hydroazulenyl}]hafnium

In accordance with the method described in Example 7 in JP-A No. H11-240909, rac-dichloro[1,1'-dimethylsilylene bis{2-methyl-4-(4-chlorophenyl)-4-hydroazulenyl}]hafnium was synthesized.

(2) Preparation of catalyst

(2-a) Chemical treatment of ion-exchange layered silicate

First, 645.1 g of distilled water and 82.6 g of 98% sulfuric acid were fed into a 1 L three-necked flask, which was equipped with stirring blades and a reflux device, and the temperature of the mixture was increased to 95°C.
Next, 100 g of a commercially-available montmorillonite (BENCLAY KK manufactured by Mizusawa Industrial Chemicals, Ltd., Al: 9.78 mass %, Si: 31.79 mass %, Mg: 3.18 mass %, Al/Si (molar ratio): 0.320, average particle diameter: 14 μm) was added thereto, and the mixture was reacted at 95°C for 320 minutes. After the elapse of 320 minutes, 0.5 L of distilled water was added to stop the reaction. Then, the mixture was subjected to filtration, thereby obtaining 255 g of a solid in cake form.
It was found that 0.31 g of a chemically-treated montmorillonite (an intermediate) was contained per gram of the cake. The chemical composition of the chemically-treated montmorillonite (the intermediate) was as follows:

Al: 7.68 mass %
Si: 36.05 mass %
Mg: 2.13 mass %
Al/Si (molar ratio): 0.222.

The cake was mixed with 1545 g of distilled water and slurried. The temperature of the obtained slurry was increased to 40°C. To the slurry, 5.734 g of a lithium hydroxide-hydrate was added in solid form. Then, the slurry was reacted at 40°C for one hour. After the elapse of one hour, the reacted slurry was subjected to filtration and then washed three times with 1 L of distilled water, thereby obtaining a solid in cake form again.
The cake was recovered and dried, thereby obtaining 80 g of a chemically-treated montmorillonite. The chemical composition of the chemically-treated montmorillonite was as follows:

Al: 7.68 mass %
Si: 36.05 mass %
Mg: 2.13 mass %
Al/Si (molar ratio): 0.222
Li: 0.53 mass %.

(2-b) Preliminary polymerization

First, 150 kg of the chemically-treated montmorillonite obtained above was fed into a reactor with an inner volume of 1 m³. The chemically-treated montmorillonite was mixed with 2832 L of hexane and slurried. Next, 74.4 kg (375 mol) of triisobutylaluminum was fed into the reactor for 85 minutes, and the slurry was stirred for 60 minutes. Then, the slurry was washed with hexane to 1/32, thereby adjusting the total volume of the slurry to 900 L.
The slurry solution containing the chemically-treated montmorillonite was kept at 50°C. To the slurry solution, 0.65 kg of triisobutylaluminum (4.257 kg of a hexane solution with a concentration of 15.3 mass %, 3.28 mol) was added.
After stirring the slurry solution for 5 minutes, 0.657 kg (0.81 mol) of rac-dichloro[1,1'-dimethylsilylene bis{2-methyl-4-(4-chlorophenyl)-4-hydroazulenyl}]hafnium and 96 L of toluene was added thereto. Then, the slurry solution was kept stirred for 60 minutes.

Then, 9.758 kg (26.61 mol) of tri-n-octylaluminum was added thereto, and the slurry solution was stirred for 6 minutes. Next, 240 L of toluene and 0.064 kg of triisobutylaluminum (9.88 kg of a toluene solution having a concentration of 0.648 mass %, 0.32 mol) were fed into another container equipped with a stirrer, and 1.768 kg (1.89 mol) of rac-dichloro[1,1'-dimethylsilylene bis{2-(5-methyl-2-furyl)-4-(4-i-propylphenyl)indenyl}]hafnium was added thereto, thereby preparing a solution. The solution was fed into the reactor; 100 L of toluene was added thereto; and then the slurry solution was stirred further for 20 minutes.

Next, 2387 L hexane was added thereto; the internal temperature of the reactor was controlled to 40°C, and preliminary polymerization was carried out, with feeding 328.1 kg of propylene for 240 minutes and keeping the internal temperature at 40°C. Then, the propylene feeding was stopped, and the residual polymerization reaction was carried out for 80 minutes, with keeping the internal temperature at 40°C.

After the residual polymerization reaction was completed, stirring was stopped to deposit and settle down the contents. A supernatant thus formed was removed so that the amount of the solution reached 1500 L. Next, 12.7 kg of triisobutylaluminum was added to the solution; 3974 L of hexane was added again; the solution was stirred; and then the stirring was stopped to deposit and settle down the contents. A supernatant thus formed was removed until the amount of the solution reached 1500 L.

Next, 8.9 kg of triisobutylaluminum (42.9 kg of a hexane solution with a concentration of 20.8 mass %) and 205 L of hexane were added thereto.

Then, the reaction solution was moved to a dryer and dried at 40°C for 9 hours.

Accordingly, 465 kg of a dried preliminary polymerization catalyst was obtained. The preliminary polymerization ratio of the catalyst (a value obtained by dividing a preliminary polymerized polymer amount by a solid catalyst amount) was 2.10. The preliminary polymerization catalyst was defined as a catalyst 1.

<Polymerization>

A 20 L autoclave was sufficiently dried by introducing nitrogen, while heating the autoclave. Then, the inside of the autoclave was purged with propylene and cooled to room temperature. Next, 18.7 mL of a solution (140 mg/mL) of triisobutylaluminum in heptane and 1.02 N (normal) L of $H_2$ were introduced; 5000 g of liquid propylene was introduced; and then the temperature of the autoclave was increased to 63°C. Then, 300 mg of the catalyst 1, which is a mass excluding the preliminary polymerized polymer, was fed under pressure to a polymerization tank by high-pressure argon to initiate polymerization, and the temperature was quickly increased to 70°C. The temperature was kept at 70°C, and after the elapse of one hour from the initiation of the polymerization, unreacted propylene was quickly purged to stop the polymerization. Accordingly, about 2922 g of a polymer powder (II-PP-1) was obtained.

The catalytic activity was 9740 g-PP/g-catalyst. The MFR was 32 g/10 min.

[Production Example II-2 (Production of II-PP-2)]

Polymerization was carried out in the same manner as Production Example II-1, except that 1.105 N (normal) L of $H_2$ was introduced, and the mass of the catalyst 1 excluding the preliminary polymerized polymer was changed to 190 mg. Accordingly, about 1997 g of a polymer powder (II-PP-2) was obtained.

The catalytic activity was 10510 g-PP/g-catalyst. The MFR was 41 g/10 min.

[Production Example II-3 (Production of II-PP-3)]

Polymerization was carried out in the same manner as Production Example II-1, except that 0.85 N (normal) L of $H_2$ was introduced, and the mass of the catalyst 1 excluding the preliminary polymerized polymer was changed to 230 mg. Accordingly, about 1730 g of a polymer powder (II-PP-3) was obtained.

The catalytic activity was 7520 g-PP/g-catalyst. The MFR was 8.5 g/10 min.

[Production Example II-4 (Production of II-PP-4)]

Polymerization was carried out in the same manner as Production Example II-1, except that 0.51 N (normal) L of $H_2$ was introduced, and the mass of the catalyst 1 excluding the preliminary polymerized polymer was changed to 360 mg. Accordingly, about 2296 g of a polymer powder (II-PP-4) was obtained.

The catalytic activity was 6380 g-PP/g-catalyst. The MFR was 1.3 g/10 min.

[Production Example II-5 (Production of II-PP-5)]

In Production Example II-5, polymerization was carried out as follows, instead of the polymerization carried out in Production Example II-1. First, the following materials were continuously fed into a stirring high-pressure reaction container (L/D 1.2) with an inner volume of 100 m$^3$: liquefied propylene at a flow rate of $2 \times 10^4$ kg/hr, triisobutylaluminum at a flow rate of 80 kg/hr, H$_2$ at a flow rate of 0.13 kg/hr, and the catalyst 1 at a flow rate of 1.00 kg/hr (the mass excluding the preliminarily polymerized polymer). With keeping the temperature of the reaction container at $70 \pm 0.1°C$, continuous polymerization was carried out so that the concentration of the polymer slurry in the polymerization reactor was kept at 40 mass %. Accordingly, a polymer powder (II-PP-5) was obtained. The amount of the produced polymer powder (II-PP-5) was $8.0 \times 10^3$ kg/hr.

<Production of pellet>

[Production of (II-X-1), (II-X-2), (II-X-3) and (II-X-5)]

With respect to 100 parts by mass of the polymer powder (II-PP-1), 0.125 parts by mass of tetrakis[methylene-3-(3',5'-di-t-butyl-4'-hydroxyphenyl)propionate]methane (product name: IRGANOX 1010, a phenol-based antioxidant manufactured by BASF Japan Ltd.) and 0.125 parts by mass of tris(2,4-di-t-butylphenyl)phosphite (product name: IRGAFOS 168, a phosphite-based antioxidant manufactured by BASF Japan Ltd.) were used. They were mixed for three minutes at room temperature, by use of a high-speed agitation mixer (product name: HENSCHEL MIXER). Then, the mixture was melt-kneaded by use of a twin screw extruder, thereby obtaining the pellet (II-X-1) of the polypropylene resin (X). The pellets (II-X-2), (II-X-3) and (II-X-5) of the polypropylene resin (X) were obtained in the same manner as the pellet (II-X-1), using the polymer powders (II-PP-2), (II-PP-3) and (II-PP-5), respectively.

As the twin screw extruder, KZW-25 (product name, manufactured by Technovel Corporation) was used. The screw rotation frequency of the extruder was set to 400 RPM, and the kneading temperature under the hopper was set as follows in stages: 80°C, 160°C, 210°C and 230°C (this temperature was maintained to the outlet of the die).

[Production of (II-X-4)]

With respect to 100 parts by mass of the polypropylene-based resin (II-PP-4), 0.05 parts by mass of an organic peroxide (2,5-dimethyl-2,5-di(t-butylperoxy)hexane) was used. They were mixed with a HENSCHEL MIXER, and the mixture was melt-extruded by use of the twin screw extruder KZW-25 (product name, manufactured by Technovel Corporation, screw diameter 25 mm). The screw rotation frequency of the extruder was set to 300 rpm, and the kneading temperature under the hopper to C1/C2/C3-C7/head/die was set as follows in stages: 150°C/180°C/230°C/230°C/180°C. Accordingly, a pellet (MFR: 40 g/10 min) was obtained.

The pellets (II-X-1), (II-X-2), (II-X-3), (II-X-4) and (II-X-5) were evaluated for MFR, $^{13}$C-NMR, GPC, branching index g' and melt tension (MT). The evaluation results are shown in Table 5.

Table 5

|  | II-X-1 | II-X-2 | II-X-3 | II-X-4 | II-X-5 |
|---|---|---|---|---|---|
| MFR (g/10 min) | 32 | 41 | 8.5 | 40 | 16 |
| Mw/Mn | 4.0 | 3.7 | 3.8 | 2.4 | 4.1 |
| Mz/Mw | 3.7 | 3.7 | 3.4 | 1.9 | 4.3 |
| W$_{1M}$ (mass %) | 3.0 | 2.4 | 4.3 | 0.0 | 3.2 |
| MT230°C (g) | 1.1 | 0.8 | 6.0 | 0.1 | 2.3 |
| MT170°C (g) | 5.4 | 4.1 | 23.4 | 0.5 | 11.0 |
| log(MT170°C) | 0.7 | 0.6 | 1.4 | -0.3 | 1.0 |
| Right-side value of Formula 1 | 0.34 | 0.23 | 0.98 | 0.24 | 0.68 |
| g'(Mz$_{abs}$) | 0.83 | 0.83 | 0.87 | 0.88 | 0.73 |
| mm (%) | 98.4 | 98.4 | 98.5 | 98.0 | 98.3 |

(2) Polypropylene-based resin (Y)

As the polypropylene-based resin (Y), the polypropylene (II-Y-1), (II-Y-2) or (II-Y-3) was used. The polypropylenes (II-Y-1), (II-Y-2) and (II-Y-3) were evaluated for MFR and melt tension (MT170°C). The evaluation results and catalysts used are shown in Table 6. In Table 6, the MT170°C values of the polypropylenes (II-Y-2) and (II-Y-3) are described as "Less than 0.1", since they were lower than the detection limit.

(II-Y-1): WINTEC (registered trademark) WSX03 (product name, manufactured by Japan Polypropylene Corporation, a propylene-ethylene random copolymer polymerized by a metallocene catalyst, ethylene content: 3.2 mass %, MFR: 25 g/10 min, Tm: 125°C)

(II-Y-2) [Production Example 5 (Production of II-Y-2)]

With respect to 100 parts by mass of the polypropylene-based resin (II-Y-1), 0.05 parts by mass of an organic peroxide (2,5-dimethyl-2,5-di(t-butylperoxy)hexane) was used. They were mixed with a HENSCHEL MIXER, and the mixture was melt-extruded by use of the twin screw extruder KZW-25 (product name, manufactured by Technovel Corporation, screw diameter 25 mm). The screw rotation frequency of the extruder was set to 300 rpm, and the kneading temperature under the hopper to C1/C2/C3-C7/head/die was set as follows in stages: 150°C/180°C/230°C/230°C/180°C. Accordingly, a pellet (Tm: 125°C, MFR: 45 g/10 min) was obtained.

(II-Y-3): NOVATEC (registered trademark) SA08 (product name, manufactured by Japan Polypropylene Corporation, a propylene homopolymer polymerized by a Ziegler-Natta catalyst, MFR: 80 g/10 min, Tm: 161°C)

Table 6

|  | II-Y-1 | II-Y-2 | II-Y-3 |
|---|---|---|---|
| MFR (g/10 min) | 25 | 45 | 80 |
| MT170°C (g) | 0.1 | Less than 0.1 | Less than 0.1 |
| log(MT170°C) | -1.0 | Less than -0.1 | Less than -0.1 |
| Right-side value (g) of Formula A | 0.46 | 0.18 | -0.09 |
| Catalyst | Metallocene | Metallocene | Ziegler |

[Example II-1]

1. Mixing

First, 30 mass % of the (II-X-1) as the polypropylene resin (X) and 70 mass % of the (II-Y-2) as the polypropylene-based resin (Y) were weighed out. They were fed into the HENSCHEL MIXER and mixed for 3 minutes.

2. Granulation

The mixture was melt-kneaded by use of the twin screw extruder KZW-25 (product name, manufactured by Technovel Corporation, screw diameter 25 mm) at a screw rotation frequency of 300 rpm and at the following kneading temperature under the hopper, which was set as follows in stages to C1/C2/C3-C7/head/die: 150°C/180°C/230°C/230°C/180°C. The melted resin was extruded from a strand die; the extruded resin (strand) was drawn while being solidified in a cooling water bath; and the strand was cut to a diameter of 3 mm and a length of 2 mm with a strand cutter, thereby obtaining a pellet of the polypropylene-based resin composition. The MFR of the obtained pellet was evaluated.

3. Production of film

The obtained pellet of the polypropylene-based resin composition was extruded from a T-die (width 560 mm) attached to an extruder (diameter 90 mm) at a resin temperature of 290°C, thereby obtaining a film. The extrusion lamination moldability of the polypropylene-based resin composition and the property of the film were evaluated.

[Example II-2]

A film was produced in the same manner as Example II-1, except that 50 mass % of the (II-X-1) as the polypropylene resin (X) and 50 mass % of the (II-Y-2) as the polypropylene-based resin (Y) were used.

[Example II-3]

A film was produced in the same manner as Example II-1, except that 30 mass % of the (II-X-2) as the polypropylene resin (X) and 70 mass % of the (II-Y-2) as the polypropylene-based resin (Y) were used.

[Example II-4]

A film was produced in the same manner as Example II-1, except that 50 mass % of the (II-X-2) as the polypropylene resin (X) and 50 mass % of the (II-Y-2) as the polypropylene-based resin (Y) were used.

[Example II-5]

A film was produced in the same manner as Example II-1, except that 30 mass % of the (II-X-2) as the polypropylene resin (X) and 70 mass % of the (II-Y-1) as the polypropylene-based resin (Y) were dry-blended without granulation, and the blended pellets were fed into a molding machine. Also, a pellet was separately produced in accordance with "2. Granulation" of Example II-1. The MFR of the separately produced pellet was 29 g/10 min.

[Example II-6]

A film was produced in the same manner as Example II-1, except that 30 mass % of the (II-X-5) as the polypropylene resin (X) and 70 mass % of the (II-Y-2) as the polypropylene-based resin (Y) were used.

[Example II-7]

A film was produced in the same manner as Example II-1, except that 30 mass % of the (II-X-5) as the polypropylene resin (X) and 70 mass % of the (II-Y-1) as the polypropylene-based resin (Y) were dry-blended without granulation, and the blended pellets were fed into the molding machine. Also, a pellet was separately produced in accordance with "2. Granulation" of Example II-1. The MFR of the separately produced pellet was 22 g/10 min.

[Comparative Example II-1]

A film was produced in the same manner as Example II-1, except that 30 mass % of the (II-X-3) as the polypropylene resin (X) and 70 mass % of the (II-Y-3) as the polypropylene-based resin (Y) were used.

[Comparative Example II-2]

A film was produced in the same manner as Example II-1, except that 30 mass % of the (II-X-4) as the polypropylene resin (X) and 70 mass % of the (II-Y-1) as the polypropylene-based resin (Y) were used.

[Comparative Example II-3]

A film was produced in the same manner as Example II-1, except that 30 mass % of the (II-X-4) as the polypropylene resin (X) and 70 mass % of the (II-Y-2) as the polypropylene-based resin (Y) were used.

Table 7 shows the percentages of the resins used in Examples and Comparative Examples, the MFR and extrusion lamination moldability of the pellet of the polypropylene-based resin composition, and the film property.

Table 7

| | | | Example II-1 | Example II-2 | Example II-3 | Example II-4 | Example II-5 | Example II-6 | Example II-7 | Comparative Example II-1 | Comparative Example II-2 | Comparative Example II-3 |
|---|---|---|---|---|---|---|---|---|---|---|---|---|
| Component (X) | II-X-1 | Mass % | 30 | 50 | | | | | | | | |
| | II-X-2 | Mass % | | | 30 | 50 | 30 | | | | | |
| | II-X-3 | Mass % | | | | | | | | 30 | | |
| | II-X-4 | Mass % | | | | | | | | | 30 | 30 |
| | II-X-5 | Mass % | | | | | | 30 | 30 | | | |
| Component (Y) | II-Y-1 | Mass % | | | | | 70 | | 70 | | 70 | |
| | II-Y-2 | Mass % | 70 | 50 | 70 | 50 | | 70 | | | | 70 |
| | II-Y-3 | Mass % | | | | | | | | 70 | | |
| Pellet property | MFR | g/10 min | 41 | 38 | 44 | 43 | (29) | 32 | (22) | 41 | 29 | 40 |
| Extrusion lamination moldability | Ductility | m/min | 210 | 150 | 210 | 170 | 160 | 215 | 180 | 160 | 100 | 90 |
| | Neck-in | Mm | 118 | 81 | 131 | 98 | 108 | 107 | 75 | 140 | 90 | 145 |
| Film property | Transparency | % | 6.0 | 6.2 | 6.3 | 6.1 | 5.9 | 6.0 | 5.9 | 6.8 | 6.5 | 6.4 |

According to the extrusion lamination moldability evaluation, Examples II-1 to II-7 achieved good results in ductility, which are 150 m/min or more, since the polypropylene resin (X) and polypropylene-based resin (Y) contained in the polypropylene-based resin composition satisfied all the properties specified in the present invention. Also, Examples II-1 to II-7 achieved excellent results in neck-in and transparency.

In Comparative Example II-1, the polypropylene-based resin (II-X-3) and the polypropylene-based resin (II-Y-3) did not satisfy the MFR value, which is one of the properties specified in the present invention. Accordingly, the melt tension was insufficient and resulted in large neck-in. In Comparative Examples II-2 and II-3, the polypropylene resin (II-X-4) did not satisfy the Formula 1, which is one of the properties specified in the present invention. Accordingly, it did not have sufficient melt tension and resulted in low ductility.

**Claims**

1. A polypropylene-based resin composition comprising a polypropylene resin (X1) having the following properties (X1-1) to (X1-6) and a polypropylene resin (X2) having the following properties (X2-1) to (X2-6):

   (X1-1) an MFR (230°C, load 2.16 kgf) is more than 0.5 g/10 min and 80 g/10 min or less,
   (X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
   (X1-3) in an integral molecular weight distribution curve obtained by GPC, a percentage ($W_{1M}$) of a component having a molecular weight of 1,000,000 or more, is 0.5 mass % or more,
   (X1-4) a melt tension (MT170°C) (unit: g) measured at 170°C satisfies the following requirement (Formula 1):

$$\log(\mathrm{MT170^{\circ}C}) \geq -1.1 \times \log(\mathrm{MFR}) + 2.0 \qquad (\mathrm{Formula\ 1}),$$

   (X1-5) a branching index g' ($Mz_{abs}$) obtained by GPC is 0.70 or more and 0.95 or less,
   (X1-6) a triad fraction (mm) of propylene unit triad sequences obtained by $^{13}$C-NMR, is 95% or more,
   (X2-1) an MFR (230°C, load 2.16 kgf) is more than 0.5 g/10 min and 80 g/10 min or less,
   (X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
   (X2-3) in an integral molecular weight distribution curve obtained by GPC, a percentage ($W_{1M}$) of a component having a molecular weight of 1,000,000 or more, is 0.5 mass % or more,
   (X2-4) a melt tension (MT170°C) (unit: g) measured at 170°C satisfies the following requirement (Formula 1):

$$\log(\mathrm{MT170^{\circ}C}) \geq -1.1 \times \log(\mathrm{MFR}) + 2.0 \qquad (\mathrm{Formula\ 1}),$$

   (X2-5) a branching index g' ($Mz_{abs}$) obtained by GPC is 0.70 or more and 0.95 or less, and
   (X2-6) a triad fraction (mm) of propylene unit triad sequences obtained by $^{13}$C-NMR, is 95% or more,
   wherein the MFR of X1 < the MFR of X2, and the $W_{1M}$ of X1 $\geq$ the $W_{1M}$ of X2.

2. The polypropylene-based resin composition according to Claim 1, further comprising a polypropylene-based resin (Y) having the following properties (Y-1) and (Y-2):

   (Y-1) an MFR (230°C, load 2.16 kgf) is 10 g/10 min or more and 50 g/10 min or less, and
   (Y-2) a melt tension (MT170°C) (unit: g) measured at 170°C satisfies the following requirement (Formula A):

$$\log(\mathrm{MT170^{\circ}C}) < -1.1 \times \log(\mathrm{MFR}) + 2.0 \qquad (\mathrm{Formula\ A}).$$

3. The polypropylene-based resin composition according to Claim 2,
   wherein the polypropylene-based resin composition comprises 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

4. The polypropylene-based resin composition according to any one of Claims 1 to 3, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,
(X1-3) in the integral molecular weight distribution curve obtained by GPC, the percentage ($W_{1M}$) of the component having a molecular weight of 1,000,000 or more, is 2.5 mass % or more,
(X2-1) the MFR (230°C, load 2.16 kgf) is more than 30 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 2.5 mass %.

5. The polypropylene-based resin composition according to Claim 1 or 2, wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,
(X1-3) in the integral molecular weight distribution curve obtained by GPC, the percentage ($W_{1M}$) of the component having a molecular weight of 1,000,000 or more, is 3.5 mass % or more,
(X2-1) the MFR (230°C, load 2.16 kgf) is more than 10 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 3.5 mass %.

6. The polypropylene-based resin composition according to Claim 1, 2 or 5, wherein the polypropylene-based resin composition comprises 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

7. A method for producing a polypropylene-based resin composition, the method comprising:

a step of obtaining a polypropylene resin (X1) having the following properties (X1-1) to (X1-6),
a step of obtaining a polypropylene resin (X2) having the following properties (X2-1) to (X2-6), and
a step of mixing or melt-kneading the polypropylene resin (X1) and the polypropylene resin (X2):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(MT170°C) \geq -1.1 \times \log(MFR) + 2.0 \quad (\text{Formula 1}),$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,

(X2-4) a melt tension (MT170°C) (unit: g) measured at 170°C satisfies the following requirement (Formula 1):

$$\log(\mathrm{MT170°C}) \geq -1.1 \times \log(\mathrm{MFR}) + 2.0 \qquad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
wherein the MFR of X1 < the MFR of X2, and the $W_{1M}$ of X1 ≥ the $W_{1M}$ of X2.

8. The method for producing the polypropylene-based resin composition according to Claim 7, the method further comprising a step of obtaining a polypropylene-based resin (Y) having the following properties (Y-1) and (Y-2):

   (Y-1) an MFR (230°C, load 2.16 kgf) is 10 g/10 min or more and 50 g/10 min or less, and
   (Y-2) a melt tension (MT170°C) (unit: g) measured at 170°C satisfies the following requirement (Formula A):

$$\log(\mathrm{MT170°C}) < -1.1 \times \log(\mathrm{MFR}) + 2.0 \qquad \text{(Formula A)},$$

   wherein the mixing or melt-kneading step is a step of mixing or melt-kneading the polypropylene resin (X1), the polypropylene resin (X2) and the polypropylene-based resin (Y).

9. The method for producing the polypropylene-based resin composition according to Claim 8,
   wherein the mixing or melt-kneading step is a step of mixing or melt-kneading 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

10. The method for producing the polypropylene-based resin composition according to any one of Claims 7 to 9,
    wherein the polypropylene resin (X1) has the following properties (X1-1) and (X1-3), and the polypropylene resin (X2) has the following properties (X2-1) and (X2-3):

    (X1-1) the MFR (230°C, load 2.16 kgf) is more than 0.5 g/10 min and 30 g/10 min or less,
    (X1-3) in the integral molecular weight distribution curve obtained by GPC, the percentage ($W_{1M}$) of the component having a molecular weight of 1,000,000 or more, is 2.5 mass % or more,
    (X2-1) the MFR (230°C, load 2.16 kgf) is more than 30 g/10 min and 80 g/10 min or less, and
    (X2-3) in the integral molecular weight distribution curve obtained by GPC, the percentage ($W_{1M}$) of the component having a molecular weight of 1,000,000 or more, is 0.5 mass % or more and less than 2.5 mass %.

11. The method for producing the polypropylene-based resin composition according to Claim 7 or 8,
    wherein the polypropylene resin (X1) has the following properties (X1-1) and (X1-3), and the polypropylene resin (X2) has the following properties (X2-1) and (X2-3):

    (X1-1) the MFR (230°C, load 2.16 kgf) is more than 0.5 g/10 min and 10 g/10 min or less,
    (X1-3) in the integral molecular weight distribution curve obtained by GPC, the percentage ($W_{1M}$) of the component having a molecular weight of 1,000,000 or more, is 3.5 mass % or more,
    (X2-1) the MFR (230°C, load 2.16 kgf) is more than 10 g/10 min and 80 g/10 min or less, and
    (X2-3) in the integral molecular weight distribution curve obtained by GPC, the percentage ($W_{1M}$) of the component having a molecular weight of 1,000,000 or more, is 0.5 mass % or more and less than 3.5 mass %.

12. The method for producing the polypropylene-based resin composition according to Claim 7, 8 or 11,
    wherein the mixing or melt-kneading step is a step of mixing or melt-kneading 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

13. A laminate comprising a substrate layer and a polypropylene-based resin composition layer,
    wherein the polypropylene-based resin composition layer comprises a polypropylene resin (X1) having the following properties (X1-1) to (X1-6) and a polypropylene resin (X2) having the following properties (X2-1) to (X2-6):

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,
(X2-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
wherein the MFR of X1 < the MFR of X2, and the $W_{1M}$ of X1 $\geq$ the $W_{1M}$ of X2.

14. The laminate according to Claim 13,
wherein the polypropylene-based resin composition layer further comprises a polypropylene-based resin (Y) having the following properties (Y-1) and (Y-2):

(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(MT170°C) < -1.1 \times \log(MFR) + 2.0 \qquad (Formula\ A).$$

15. The laminate according to Claim 14,
wherein the polypropylene-based resin composition layer comprises 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

16. The laminate according to any one of Claims 13 to 15,
wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 30 g/10 min or less,
(X1-3) in the integral molecular weight distribution curve obtained by GPC, the percentage ($W_{1M}$) of the component having a molecular weight of 1,000,000 or more, is 2.5 mass % or more,
(X2-1) the MFR (230°C, load 2.16 kgf) is more than 30 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 2.5 mass %.

17. The laminate according to Claim 13 or 14,

wherein the polypropylene resin (X1) has the following properties (X1-1) and (X1-3), and the polypropylene resin (X2) has the following properties (X2-1) and (X2-3):

(X1-1) the MFR (230°C, load 2.16 kgf) is more than 0.5 g/10 min and 10 g/10 min or less,
(X1-3) in the integral molecular weight distribution curve obtained by GPC, the percentage ($W_{1M}$) of the component having a molecular weight of 1,000,000 or more, is 3.5 mass % or more,
(X2-1) the MFR (230°C, load 2.16 kgf) is more than 10 g/10 min and 80 g/10 min or less, and
(X2-3) in the integral molecular weight distribution curve obtained by GPC, the percentage ($W_{1M}$) of the component having a molecular weight of 1,000,000 or more, is 0.5 mass % or more and less than 3.5 mass %.

18. The laminate according to Claim 13, 14 or 17,
wherein the polypropylene-based resin composition layer comprises 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

19. A method for producing a laminate comprising a substrate layer and a polypropylene-based resin composition layer, the method comprising a step of forming the polypropylene-based resin composition layer by extrusion lamination of a mixture or melt-kneaded product of a polypropylene resin (X1) having the following properties (X1-1) to (X1-6) and a polypropylene resin (X2) having the following properties (X2-1) to (X2-6) on at least one surface of the substrate layer:

(X1-1) an MFR (230°C, load 2.16 kgf) is more than 0.5 g/10 min and 80 g/10 min or less,
(X1-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X1-3) in an integral molecular weight distribution curve obtained by GPC, a percentage ($W_{1M}$) of a component having a molecular weight of 1,000,000 or more, is 0.5 mass % or more,
(X1-4) a melt tension (MT170°C) (unit: g) measured at 170°C satisfies the following requirement (Formula 1):

$$\log(\text{MT170°C}) \geq -1.1 \times \log(\text{MFR}) + 2.0 \qquad \text{(Formula 1)},$$

(X1-5) a branching index g' ($Mz_{abs}$) obtained by GPC is 0.70 or more and 0.95 or less,
(X1-6) a triad fraction (mm) of propylene unit triad sequences obtained by $^{13}$C-NMR, is 95% or more,
(X2-1) an MFR (230°C, load 2.16 kgf) is more than 0.5 g/10 min and 80 g/10 min or less,
(X2-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
(X2-3) in an integral molecular weight distribution curve obtained by GPC, a percentage ($W_{1M}$) of a component having a molecular weight of 1,000,000 or more, is 0.5 mass % or more,
(X2-4) a melt tension (MT170°C) (unit: g) measured at 170°C satisfies the following requirement (Formula 1):

$$\log(\text{MT170°C}) \geq -1.1 \times \log(\text{MFR}) + 2.0 \qquad \text{(Formula 1)},$$

(X2-5) a branching index g' ($Mz_{abs}$) obtained by GPC is 0.70 or more and 0.95 or less, and
(X2-6) a triad fraction (mm) of propylene unit triad sequences obtained by $^{13}$C-NMR, is 95% or more,
wherein the MFR of X1 < the MFR of X2, and the $W_{1M}$ of X1 $\geq$ the $W_{1M}$ of X2.

20. The method for producing the laminate according to Claim 19,
wherein the step of forming the polypropylene-based resin composition layer is a step of forming the polypropylene-based resin composition layer by extrusion lamination of a mixture or melt-kneaded product of the polypropylene resin (X1), the polypropylene resin (X2) and a polypropylene-based resin (Y) having the following properties (Y-1) and (Y-2) on at least one surface of the substrate layer:

(Y-1) an MFR (230°C, load 2.16 kgf) is 10 g/10 min or more and 50 g/10 min or less, and
(Y-2) a melt tension (MT170°C) (unit: g) measured at 170°C satisfies the following requirement (Formula A):

$$\log(MT170°C) < -1.1 \times \log(MFR) + 2.0 \qquad (Formula\ A).$$

21. The method for producing the laminate according to Claim 20,
    wherein the step of forming the polypropylene-based resin composition layer is a step of forming the polypropylene-based resin composition layer by extrusion lamination of the mixture or melt-kneaded product of 5 mass % to 30 mass % of the polypropylene resin (X1), 5 mass % to 50 mass % of the polypropylene resin (X2) and 20 mass % to 80 mass % of the polypropylene-based resin (Y), and wherein a total amount of the polypropylene resin (X1), the polypropylene resin (X2) and the polypropylene-based resin (Y) is 100 mass %.

22. The method for producing the laminate according to any one of Claims 19 to 21,
    wherein the polypropylene resin (X1) has the following properties (X1-1) and (X1-3), and the polypropylene resin (X2) has the following properties (X2-1) and (X2-3):

    (X1-1) the MFR (230°C, load 2.16 kgf) is more than 0.5 g/10 min and 30 g/10 min or less,
    (X1-3) in the integral molecular weight distribution curve obtained by GPC, the percentage ($W_{1M}$) of the component having a molecular weight of 1,000,000 or more, is 2.5 mass % or more,
    (X2-1) the MFR (230°C, load 2.16 kgf) is more than 30 g/10 min and 80 g/10 min or less, and
    (X2-3) in the integral molecular weight distribution curve obtained by GPC, the percentage ($W_{1M}$) of the component having a molecular weight of 1,000,000 or more, is 0.5 mass % or more and less than 2.5 mass %.

23. The method for producing the laminate according to Claim 19 or 20,
    wherein the polypropylene resin (X1) has the following properties (X1-1) and (X1-3), and the polypropylene resin (X2) has the following properties (X2-1) and (X2-3):

    (X1-1) the MFR (230°C, load 2.16 kgf) is more than 0.5 g/10 min and 10 g/10 min or less,
    (X1-3) in the integral molecular weight distribution curve obtained by GPC, the percentage ($W_{1M}$) of the component having a molecular weight of 1,000,000 or more, is 3.5 mass % or more,
    (X2-1) the MFR (230°C, load 2.16 kgf) is more than 10 g/10 min and 80 g/10 min or less, and
    (X2-3) in the integral molecular weight distribution curve obtained by GPC, the percentage ($W_{1M}$) of the component having a molecular weight of 1,000,000 or more, is 0.5 mass % or more and less than 3.5 mass %.

24. The method for producing the laminate according to Claim 19, 20 or 23,
    wherein the step of forming the polypropylene-based resin composition layer is a step of forming the polypropylene-based resin composition layer by extrusion lamination of the mixture or melt-kneaded product of 2 mass % to 30 mass % of the polypropylene resin (X1), 5 mass % to 98 mass % of the polypropylene resin (X2) and 0 mass % to 80 mass % of the polypropylene-based resin (Y), and wherein a total amount of the polypropylene resin (X1), the polypropylene resin (X2) and the polypropylene-based resin (Y) is 100 mass %.

25. A polypropylene-based resin composition comprising 20 mass % to 80 mass % of a polypropylene resin (X) having the following properties (X-1) to (X-6) and 20 mass % to 80 mass % of a polypropylene-based resin (Y) having the following properties (Y-1) and (Y-2), wherein a total amount of the polypropylene resin (X) and the polypropylene-based resin (Y) is 100 mass %:

    (X-1) an MFR (230°C, load 2.16 kgf) is more than 10 g/10 min and 70 g/10 min or less,
    (X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,
    (X-3) in an integral molecular weight distribution curve obtained by GPC, a percentage ($W_{1M}$) of a component having a molecular weight of 1,000,000 or more, is 0.5 mass % or more and 4.0 mass % or less,
    (X-4) a melt tension (MT170°C) (unit: g) measured at 170°C satisfies the following requirement (Formula 1):

$$\log(MT170°C) \geq -1.1 \times \log(MFR) + 2.0 \qquad (Formula\ 1),$$

(X-5) a branching index g' ($Mz_{abs}$) obtained by GPC is 0.70 or more and 0.95 or less,

(X-6) a triad fraction (mm) of propylene unit triad sequences obtained by $^{13}$C-NMR, is 95% or more,

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(\text{MT170°C}) < -1.1 \times \log(\text{MFR}) + 2.0 \quad (\text{Formula A}).$$

26. A method for producing a polypropylene-based resin composition, the method comprising:

a step of obtaining a polypropylene resin (X) having the following properties (X-1) to (X-6),

a step of obtaining a polypropylene-based resin (Y) having the following properties (Y-1) and (Y-2), and

a step of mixing or melt-kneading 20 mass % to 80 mass % of the polypropylene resin (X) and 20 mass % to 80 mass % of the polypropylene-based resin (Y), wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,

(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X-3) in an integral molecular weight distribution curve obtained by GPC, a percentage ($W_{1M}$) of a component having a molecular weight of 1,000,000 or more, is 0.5 mass % or more and 4.0 mass % or less,

(X-4) a melt tension (MT170°C) (unit: g) measured at 170°C satisfies the following requirement (Formula 1):

$$\log(\text{MT170°C}) \geq -1.1 \times \log(\text{MFR}) + 2.0 \quad (\text{Formula 1}),$$

(X-5) a branching index g' ($Mz_{abs}$) obtained by GPC is 0.70 or more and 0.95 or less,

(X-6) a triad fraction (mm) of propylene unit triad sequences obtained by $^{13}$C-NMR, is 95% or more,

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(\text{MT170°C}) < -1.1 \times \log(\text{MFR}) + 2.0 \quad (\text{Formula A}).$$

27. A laminate comprising a substrate layer and a polypropylene-based resin composition layer, wherein the polypropylene-based resin composition layer comprises 20 mass % to 80 mass % of a polypropylene resin (X) having the following properties (X-1) to (X-6) and 20 mass % to 80 mass % of a polypropylene-based resin (Y) having the following properties (Y-1) and (Y-2), and wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,

(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X-3) in an integral molecular weight distribution curve obtained by GPC, a percentage ($W_{1M}$) of a component having a molecular weight of 1,000,000 or more, is 0.5 mass % or more and 4.0 mass % or less,

(X-4) a melt tension (MT170°C) (unit: g) measured at 170°C satisfies the following requirement (Formula 1):

$$\log(\text{MT170°C}) \geq -1.1 \times \log(\text{MFR}) + 2.0 \quad (\text{Formula 1}),$$

(X-5) a branching index g' ($Mz_{abs}$) obtained by GPC is 0.70 or more and 0.95 or less,

(X-6) a triad fraction (mm) of propylene unit triad sequences obtained by $^{13}$C-NMR, is 95% or more,

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(MT170°C) < -1.1 \times \log(MFR) + 2.0 \quad (\text{Formula A}).$$

**28.** A method for producing a laminate comprising a substrate layer and a polypropylene-based resin composition layer, the method comprising a step of forming the polypropylene-based resin composition layer by extrusion lamination of a mixture or melt-kneaded product of 20 mass % to 80 mass % of a polypropylene resin (X) having the following properties (X-1) to (X-6) and 20 mass % to 80 mass % of a polypropylene-based resin (Y) having the following properties (Y-1) and (Y-2) on at least one surface of the substrate layer, wherein a total amount of the polypropylene resin (X) and the polypropylene-based resin (Y) is 100 mass %:

(X-1) an MFR (230°C, load 2.16 kgf) is more than 10 g/10 min and 70 g/10 min or less,

(X-2) a ratio (Mw/Mn) between a weight average molecular weight (Mw) and a number average molecular weight (Mn), both of which are obtained by GPC, is 2.0 or more and 5.0 or less, and a ratio (Mz/Mw) between a Z average molecular weight (Mz) and a weight average molecular weight (Mw), both of which are obtained by GPC, is 2.0 or more and 5.0 or less,

(X-3) in an integral molecular weight distribution curve obtained by GPC, a percentage ($W_{1M}$) of a component having a molecular weight of 1,000,000 or more, is 0.5 mass % or more and 4.0 mass % or less,

(X-4) a melt tension (MT170°C) (unit: g) measured at 170°C satisfies the following requirement (Formula 1):

$$\log(MT170°C) \geq -1.1 \times \log(MFR) + 2.0 \quad (\text{Formula 1}),$$

(X-5) a branching index g' ($Mz_{abs}$) obtained by GPC is 0.70 or more and 0.95 or less,

(X-6) a triad fraction (mm) of propylene unit triad sequences obtained by $^{13}$C-NMR, is 95% or more,

(Y-1) an MFR (230°C, load 2.16 kgf) is 10 g/10 min or more and 50 g/10 min or less, and

(Y-2) a melt tension (MT170°C) (unit: g) measured at 170°C satisfies the following requirement (Formula A):

$$\log(MT170°C) < -1.1 \times \log(MFR) + 2.0 \quad (\text{Formula A}).$$

<table>
<tr><td colspan="2" align="center"><b>INTERNATIONAL SEARCH REPORT</b></td><td>International application No.<br>PCT/JP2021/020521</td></tr>
</table>

| A. CLASSIFICATION OF SUBJECT MATTER |
| --- |
| B32B 27/32(2006.01)i; C08F 10/06(2006.01)i; C08L 23/10(2006.01)i<br>FI: C08L23/10; C08F10/06; B32B27/32 Z |
| According to International Patent Classification (IPC) or to both national classification and IPC |

| B. FIELDS SEARCHED |
| --- |
| Minimum documentation searched (classification system followed by classification symbols)<br>C08K3/00-13/08; C08L1/00-101/14; C08F6/00-246/00; B32B1/00-43/00 |

| Documentation searched other than minimum documentation to the extent that such documents are included in the fields searched |
| --- |
| Published examined utility model applications of Japan          1922-1996<br>Published unexamined utility model applications of Japan        1971-2021<br>Registered utility model specifications of Japan                1996-2021<br>Published registered utility model applications of Japan         1994-2021 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2014-055252 A (JAPAN POLYPROPYLENE CORPORATION) 27 March 2014 (2014-03-27) claims 1-7, paragraph [0010], examples | 1-28 |
| A | JP 2016-199651 A (JAPAN POLYPROPYLENE CORPORATION) 01 December 2016 (2016-12-01) claims 1-4, paragraph [0007], examples | 1-28 |
| A | JP 2015-193827 A (JAPAN POLYPROPYLENE CORPORATION) 05 November 2015 (2015-11-05) claims 1-5, paragraph [0009], examples | 1-28 |
| A | JP 2014-181317 A (PRIME POLYMER CO., LTD.) 29 September 2014 (2014-09-29) claims 1-4, examples | 1-28 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>27 July 2021 (27.07.2021) | Date of mailing of the international search report<br>03 August 2021 (03.08.2021) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT | International application no. |
| Information on patent family members | PCT/JP2021/020521 |

| Patent Documents referred in the Report | Publication Date | Patent Family | Publication Date |
|---|---|---|---|
| JP 2014-055252 A | 27 Mar. 2014 | (Family: none) | |
| JP 2016-199651 A | 01 Dec. 2016 | (Family: none) | |
| JP 2015-193827 A | 05 Nov. 2015 | (Family: none) | |
| JP 2014-181317 A | 29 Sep. 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8259752 A
- JP 2006056914 A
- JP H580492 B
- JP 2003528948 W
- WO 2009069595 A
- JP 2001323119 A
- JP S62121704 A
- JP H61577666 A
- JP 2009057542 A
- JP 2009275207 A
- JP 2014055252 A
- JP S6035007 A
- JP S61130314 A
- JP S63295607 A
- JP H1275609 A
- JP H241303 A
- JP H2131488 A
- JP H276887 A
- JP H3163088 A
- JP H4300887 A
- JP H4211694 A
- JP H543616 A
- JP H5209013 A
- JP H6239914 A
- JP H7504934 W
- JP H885708 A
- JP PCTINTERNATIONALAPPLICATIONNO B
- JP H7504934 B
- JP 2013199642 A
- JP 2012149160 A
- JP H11240909 A

**Non-patent literature cited in the description**

- Developments in Polymer Characterization-4. Applied Science Publishers, 1983
- *Polymer,* 2004, vol. 45, 6495-6505
- *Macromolecules,* 2000, vol. 33, 2424-2436
- *Macromolecules,* 2000, vol. 33, 6945-6952
- Polymer Journal. Asakura Shoten Publishing Co., Ltd, 1984, vol. 16, 717
- *Macromolecules,* 1975, vol. 8, 687
- *Polymer,* 1989, vol. 30, 1350
- **TETSUO YASUDA ; MITSURU SAKUMA.** Polypropylene Handbook. Kogyo Chosakai Publishing Co., Ltd, 1998